(19) Europäisches Patentamt
European Patent Office
Office européen des brevets

(11) EP 4 679 742 A1

(12) **EUROPEAN PATENT APPLICATION**
published in accordance with Art. 153(4) EPC

(43) Date of publication:
**14.01.2026 Bulletin 2026/03**

(21) Application number: **23927335.2**

(22) Date of filing: **10.03.2023**

(51) International Patent Classification (IPC):
***H04J 99/00*** *(2009.01)*

(52) Cooperative Patent Classification (CPC):
**H04J 99/00**

(86) International application number:
**PCT/JP2023/009460**

(87) International publication number:
**WO 2024/189711 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
- **SHIBAIKE, Naoya**
  **Tokyo 100-6150 (JP)**
- **NAGATA, Satoshi**
  **Tokyo 100-6150 (JP)**
- **LIU, Wenjia**
  **Beijing, 100190 (CN)**
- **LIU, Juan**
  **Beijing, 100190 (CN)**
- **HOU, Xiaolin**
  **Beijing, 100190 (CN)**
- **CHEN, Lan**
  **Beijing, 100190 (CN)**
- **WANG, Peisen**
  **Beijing, 100081 (CN)**

(74) Representative: **Hoffmann Eitle**
**Patent- und Rechtsanwälte PartmbB**
**Arabellastraße 30**
**81925 München (DE)**

(54) **TRANSMITTER AND TRANSMISSION METHOD**

(57) A transmitter includes a control unit configured to allocate zero power resources in a first signal in a time-frequency domain; and a transmission unit configured to non-orthogonally multiplex the first signal and a second signal and transmit the multiplexed signal, wherein the transmission unit is configured to transmit, in the resources in which the zero power resources are allocated, all of at least one repeated transmission among a plurality of repeated transmissions included in the second signal.

FIG.38

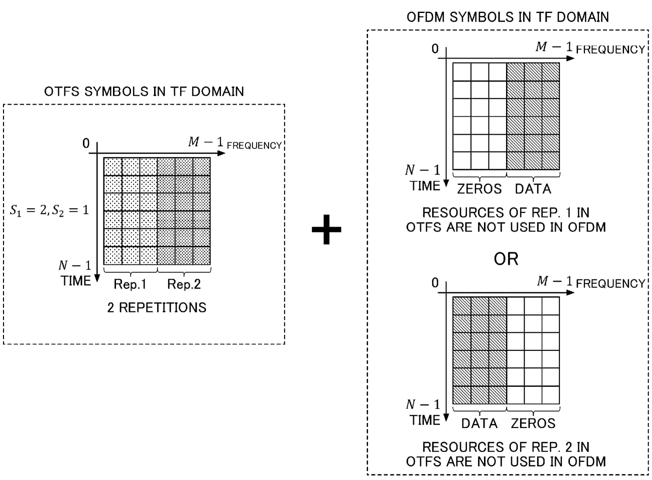


EP 4 679 742 A1

## Description

### FIELD OF INVENTION

The present invention relates to a transmitter and a transmission method in a wireless communication system.

### BACKGROUND ART

In NR (New Radio), which is the successor system to LTE (Long Term Evolution) and also referred to as "5G," technologies are being studied to satisfy requirements such as large system capacity, high data transmission speed, low latency, simultaneous connection of numerous terminals, low cost, and power saving (see, for example, Non-Patent Literature 1).

Currently, NTN (Non-Terrestrial Network) is also under consideration. NTN refers to a network that uses non-terrestrial platforms such as satellites to provide services to areas that cannot be sufficiently covered by terrestrial 5G networks mainly due to cost issues (see, for example, Non-Patent Literature 2 and Non-Patent Literature 3).

In NTN, a high doppler shift occurs, for example, due to the highspeed movement of satellites. Therefore, waveforms that are highly resistant to Doppler shift, such as waveforms using OTFS (Orthogonal Time Frequency Space) modulation, are being studied (see, for example, Non-Patent Literature 4).

### CITATION LIST

#### Non-Patent Literature

Non-Patent Literature 1: 3GPP TS 38.300 V17.3.0 (2022-12)
Non-Patent Literature 2: 3GPP TR 38.821 V16.0.0 (2019-12)
Non-Patent Literature 3: Konishi et al., "A Study on Downlink Frequency Sharing in HAPS Mobile Communication Systems," The Institute of Electronics, Information and Communication Engineers (IEICE) General Conference, B-17-1, 2020.
Non-Patent Literature 4: R.Hadani et al., "Orthogonal Time Frequency Space Modulation," 2017 IEEE Wireless Communications and Networking Conference (WCNC), San Francisco, CA, USA, 2017
Non-Patent Literature 5: Hadani R, Monk A. OTFS: A new generation of modulation addressing the challenges of 5G [J], 2018
Non-Patent Literature 6: V. Khammammetti and S. K. Mohammed, "Spectral Efficiency of OTFS Based Orthogonal Multiple Access With Rectangular Pulses," in IEEE Transactions on Vehicular Technology, 2022
Non-Patent Literature 7: A. Chatterjee, V. Rangamgari, S. Tiwari and S. S. Das, "Nonorthogonal Multiple Access With Orthogonal Time-Frequency Space Signal Transmission," in IEEE Systems Journal, vol. 15, no. 1, pp. 383-394, March 2021
Non-Patent Literature 8: Y. Ge, Q. Deng, P. C. Ching and Z. Ding, "OTFS Signaling for Uplink NOMA of Heterogeneous Mobility Users," in IEEE Transactions on Communications, vol. 69, no. 5, pp. 3147-3161, May 2021
Non-Patent Literature 9: Chaouech H, Bouallegue R. Channel estimation and multiuser detection in asynchronous satellite communications[J], 2010
Non-Patent Literature 10: Y. Wu and Z. Zhang, "Co-existence Analysis of OTFS and OFDM Waveforms for Multi-mobility Scenarios," 2022 IEEE 95th Vehicular Technology Conference: (VTC2022-Spring), 2022, pp. 1-5
Non-Patent Literature 11: 3GPP TS 38.214 V17.4.0(2022-12)

### SUMMARY OF INVENTION

### TECHNICAL PROBLEM

When transmitting signals using waveforms that have low compatibility different from conventional waveforms, it is necessary to multiplex these signals with signals using conventional waveforms. However, depending on the communication environment, it has been difficult to efficiently multiplex such signals.

The present invention has been made in view of the above circumstances, and an object of the present invention is to multiplex signals using different waveforms in a wireless communication system.

## SOLUTION TO PROBLEM

According to a disclosed technology, a transmitter is provided. The transmitter includes:

a control unit configured to allocate zero power resources in a first signal in a time-frequency domain; and
a transmission unit configured to non-orthogonally multiplex the first signal and a second signal and transmit the multiplexed signal,
wherein the transmission unit is configured to transmit, in the resources in which the zero power resources are allocated, all of at least one repeated transmission among a plurality of repeated transmissions included in the second signal.

## ADVANTAGEOUS EFFECTS OF INVENTION

According to the disclosed technology, it becomes possible to multiplex signals using different waveforms in a wireless communication system.

## BRIEF DESCRIPTION OF DRAWINGS

[FIG. 1] FIG. 1 is a drawing illustrating a configuration example of a wireless communication system;
[FIG. 2] FIG. 2 is a drawing illustrating an example of an NTN environment;
[FIG. 3] FIG. 3 is a drawing illustrating an example of power shaping according to an embodiment of the present invention;
[FIG. 4] FIG. 4 is a drawing illustrating an example (1) of multiplexing according to an embodiment of the present invention;
[FIG. 5] FIG. 5 is a drawing illustrating an example (2) of multiplexing according to an embodiment of the present invention;
[FIG. 6] FIG. 6 is a drawing illustrating an example of a transmitter according to an embodiment of the present invention;
[FIG. 7] FIG. 7 is a drawing illustrating an example (1) of power shaping in a DD domain according to an embodiment of the present invention;
[FIG. 8] FIG. 8 is a drawing illustrating an example (2) of power shaping in a DD domain according to an embodiment of the present invention;
[FIG. 9] FIG. 9 is a drawing illustrating an example (3) of power shaping in a DD domain according to an embodiment of the present invention;
[FIG. 10] FIG. 10 is a drawing illustrating an example (4) of power shaping in the DD domain according to an embodiment of the present invention;
[FIG. 11] FIG. 11 is a drawing illustrating an example (5) of power shaping in the DD domain according to an embodiment of the present invention;
[FIG. 12] FIG. 12 is a drawing illustrating an example (6) of power shaping in the DD domain according to an embodiment of the present invention;
[FIG. 13] FIG. 13 is a drawing illustrating an example (7) of power shaping in the DD domain according to an embodiment of the present invention;
[FIG. 14] FIG. 14 is a drawing illustrating a gain (1) of a method according to an embodiment of the present invention;
[FIG. 15] FIG. 15 is a drawing illustrating a gain (2) of a method according to an embodiment of the present invention;
[FIG. 16] FIG. 16 is a drawing illustrating a gain (3) of a method according to an embodiment of the present invention;
[FIG. 17] FIG. 17 is a drawing illustrating a target of a method according to an embodiment of the present invention;
[FIG. 18] FIG. 18 is a drawing illustrating an example of a method according to an embodiment of the present inventio;
[FIG. 19] FIG. 19 is a drawing illustrating an example of DFT according to an embodiment of the present invention;
[FIG. 20] FIG. 20 is a drawing illustrating an example (1) of a transmission scheme according to an embodiment of the present invention;
[FIG. 21] FIG. 21 is a drawing illustrating an example (2) of a transmission scheme according to an embodiment of the present invention;
[FIG. 22] FIG. 22 is a drawing illustrating gain (1) of a transmission scheme according to an embodiment of the present invention;
[FIG. 23] FIG. 23 is a drawing illustrating gain (2) of a transmission scheme according to an embodiment of the present invention;

[FIG. 24] FIG. 24 is a drawing illustrating a gain (3) of a transmission scheme according to an embodiment of the present invention;

[FIG. 25] FIG. 25 is a drawing illustrating a gain (4) of a transmission scheme according to an embodiment of the present invention;

[FIG. 26] FIG. 26 is a drawing illustrating a transmission scheme (1) to which an OTFS is applied according to an embodiment of the present invention;

[FIG. 27] FIG. 27 is a drawing illustrating a transmission scheme (2) to which an OTFS is applied according to an embodiment of the present invention;

[FIG. 28] FIG. 28 is a drawing illustrating a transmission scheme (3) to which an OTFS is applied according to an embodiment of the present invention;

[FIG. 29] FIG. 29 is a drawing illustrating a transmission scheme (4) to which an OTFS is applied according to an embodiment of the present invention;

[FIG. 30] FIG. 30 is a drawing illustrating an example (1) of sparse mapping in a DD domain according to an embodiment of the present invention;

[FIG. 31] FIG. 31 is a drawing illustrating an example (2) of sparse mapping in a DD domain according to an embodiment of the present invention;

[FIG. 32] FIG. 32 is a drawing illustrating an example (3) of sparse mapping in a DD domain according to an embodiment of the present invention;

[FIG. 33] FIG. 33 is a drawing illustrating an example (4) of sparse mapping in a DD domain according to an embodiment of the present invention;

[FIG. 34] FIG. 34 is a drawing illustrating an example (1) of repetition in a TF domain according to an embodiment of the present invention;

[FIG. 35] FIG. 35 is a drawing illustrating an example (2) of repetition in a TF domain according to an embodiment of the present invention;

[FIG. 36] FIG. 36 is a drawing illustrating an example (1) of power shaping in a DD domain according to an embodiment of the present invention;

[FIG. 37] FIG. 37 is a drawing illustrating an example (2) of power shaping in the DD domain according to an embodiment of the present invention;

[FIG. 38] FIG. 38 is a drawing illustrating an example (1) of multiplexing in a TF domain according to an embodiment of the present invention;

[FIG. 39] FIG. 39 is a drawing illustrating an example (2) of multiplexing in a TF domain according to an embodiment of the present invention;

[FIG. 40] FIG. 40 is a drawing illustrating an example (3) of multiplexing in a TF domain according to an embodiment of the present invention;

[FIG. 41] FIG. 41 is a drawing illustrating an example (4) of multiplexing in a TF domain according to an embodiment of the present invention;

[FIG. 42] FIG. 42 is a drawing illustrating an example of indication of zero power resources according to an embodiment of the present invention;

[FIG. 43] FIG. 43 is a drawing illustrating a transmission scheme (1) to which OFDM is applied according to an embodiment of the present invention;

[FIG. 44] FIG. 44 is a drawing illustrating a transmission scheme (2) to which OFDM is applied according to an embodiment of the present invention;

[FIG. 45] FIG. 45 is a drawing illustrating a transmission scheme (3) to which OFDM is applied according to an embodiment of the present invention;

[FIG. 46] FIG. 46 is a drawing illustrating a transmission scheme (4) to which OFDM is applied according to an embodiment of the present invention;

[FIG. 47] FIG. 47 is a drawing illustrating a transmission scheme (5) to which OFDM is applied according to an embodiment of the present invention;

[FIG. 48] FIG. 48 is a drawing illustrating a transmission scheme (6) to which OFDM is applied according to an embodiment of the present invention;

[FIG. 49] FIG. 49 is a drawing illustrating a transmission scheme (7) to which OFDM is applied according to an embodiment of the present invention;

[FIG. 50] FIG. 50 is a drawing illustrating a configuration example (1) of a transmitter according to an embodiment of the present invention;

[FIG. 51] FIG. 51 is a drawing illustrating a configuration example (2) of a transmitter according to an embodiment of the present invention;

[FIG. 52] FIG. 52 is a drawing illustrating a configuration example (3) of a transmitter according to an embodiment of the present invention;

[FIG. 53] FIG. 53 is a drawing illustrating an example (1) of multiple access according to an embodiment of the present invention;

[FIG. 54] FIG. 54 is a drawing illustrating an example (2) of multiple access according to an embodiment of the present invention;

[FIG. 55] FIG. 55 is a drawing illustrating an example (3) of multiple access according to an embodiment of the present invention;

[FIG. 56] FIG. 56 is a drawing illustrating an example (4) of multiple access according to an embodiment of the present invention;

[FIG. 57] FIG. 57 is a drawing to show an example of a functional structure of a base station 10 according to an embodiment of the present invention;

[FIG. 58] FIG. 58 is a drawing illustrating an example of a functional configuration of a terminal 20 according to an embodiment of the present invention;

[FIG. 59] FIG. 59 is a drawing illustrating an example of a hardware configuration of a base station 10 or a terminal 20 according to an embodiment of the present invention; and

[FIG. 60] FIG. 60 is a drawing illustrating a configuration example of a vehicle 2001 in an embodiment of the present invention.

DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

FIG. 1 is a drawing illustrating a configuration example of a wireless communication system according to an embodiment of the present invention. As illustrated in FIG. 1, a wireless communication system according to an embodiment of the present invention includes a base station 10 and a terminal 20. In FIG. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As illustrated in FIG. 1, the base station 10 transmits a control signal or data in DL (Downlink) to the terminal 20 and receives a control signal or data in UL (Uplink) from the terminal 20. The base station 10 and the terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As illustrated in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 can perform carrier aggregation in which a plurality of cells (a plurality of component carriers (CCs)) are bundled to communicate with the base station 10. In the carrier aggregation, one PCell (Primary cell) and one or more SCells (Secondary cells) are used. Also, a PUCCH-SCell with PUCCH may be used.

FIG. 2 is a drawing illustrating an example of an NTN environment. The NTN (Non-Terrestrial Network) uses equipment such as a satellite existing on the non-terrestrial domains to provide a service to an area that cannot be covered by a terrestrial 5G network mainly in terms of cost. Also, the NTN allows for more reliable service to be provided. For example, it is assumed that the present invention is applied to IoT (Internet of Things), ships, buses, trains, and critical communication. In addition, the NTN has scalability by efficient multicast or broadcast.

As an example of NTN, as illustrated in FIG. 2, a satellite or a High Altitude Platform Station (HAPS) can retransmit a signal transmitted from a terrestrial base station to provide a large coverage area to a large number of devices located in an area where no terrestrial base station is allocated, such as a forest, a farm, a fishery, a remote island, etc.

In addition, in order to achieve wide coverage, high mobility, and high connectivity for the Internet of Things (IoT) in the next generation NTN, flexible multiplexing of a plurality of waveforms should be supported to cover different specifications related to, for example, a peak to average power ratio (PAPR), mobility, and connectivity.

Therefore, by multiplexing and shaping a discrete Fourier transform spread orthogonal time frequency space modulation (DFT-s-OTFS) based waveform, wide coverage, high mobility, and high connectivity may be achieved in the next generation NTN. Note that the embodiments of the present invention are not limited to application to NTN, and may be applied to, for example, a terrestrial network (TN). As an embodiment of the present invention, the following 1) and/or 2) may be performed.

1) In order to increase a power difference and improve a successive interference canceller (SIC) gain, power shaping may be performed in a delay-doppler domain for non-orthogonal multiple access (NOMA) using DFT-s-OTFS, thereby improving performance of PAPR, mobility, and connectivity. Hereinafter, the delay-doppler domain is also referred to as a DD domain.

FIG. 3 is a drawing illustrating an example of power shaping according to an embodiment of the present invention. As illustrated in FIG. 3, power shaping may be performed on a NOMA signal using DFT-s-OTFS in the DD domain to increase a power difference.

2) In order to achieve repetition in the time-frequency domain, a sparse mapping method in the DD domain may be performed for the DFT-s-OTFS. Hereinafter, the time-frequency domain is also referred to as a TF domain. Interference to DFT-s-OFDM (Discrete Fourier Transform spread Orthogonal Frequency Division Multiplexing) is mitigated by the repetition, which results in better robustness in synchronization. Accordingly, compatibility with DFT-s-OFDM in an IoT system of NTN having different UE capabilities may be improved. This provides a hybrid system of OTFS and OFDM that performs a plurality of repeated transmissions to overlap and multiplex the transmissions.

FIG. 4 is a drawing illustrating an example (1) of multiplexing according to an embodiment of the present invention. As illustrated in FIG. 4, DFT-s-OTFS and DFT-s-OFDM require a guard interval when frequency multiplexing is performed.

FIG. 5 is a drawing illustrating an example (2) of multiplexing according to an embodiment of the present invention. In the example of FIG. 5, the DFT-s-OTFS is repeatedly transmitted twice, and the second repeated transmission and the DFT-s-OFDM overlap in the TF domain. As illustrated in FIG. 5, the hybrid system of OTFS and OFDM, which applies the method of 2) above, performs a plurality of repeated transmissions so as to overlap and multiplex the transmissions, has the performance of 1) to 3) illustrated below.

1) No guard interval is required. This provides high spectrum efficiency (SE).
2) Full time/frequency resources are allocated to the OTFS. This provides high diversity.
3) Partial overlapping is performed in the TF domain. This facilitates interference cancellation on the receiving side.

As a result of evaluating the performance by simulation, the power domain NOMA that achieves a block error rate (BLER) of 0.01 requires a 31 dB signal to noise ratio (SNR), and the above method requires a 23 dB SNR, demonstrating an 8 dB SNR gain. In addition, the method of frequency-multiplexing OTFS and OFDM with guard intervals to achieve BLER of 0.01 requires a SNR 14 dB, and the above method requires 11.5 dB, and thus the 2.5 dB SNR gain has been confirmed.

As described above, in the next-generation NTN, it is assumed that a large number of devices having different capabilities exist in a certain coverage. Therefore, 1) to 3) illustrated below may be required.

1) High mobility. There is a need to address the high Doppler shift due to NTN and high mobility of the UE. If the doppler shift remains, it affects the performance of OFDM. Therefore, one should consider using waveforms that are robust to Doppler, such as the OTFS family of waveforms.
2) Wide coverage. A long propagation distance causes a high path loss. A low PAPR is needed to improve performance. For example, DFT-s-OFDM and DFT-s-OTFS may achieve a relatively low PAPR.
3) High connectivity. The wide coverage of the NTN induces high connectivity. Considering the delay and signaling overhead, accurate time-frequency synchronization is difficult, which need non-orthogonal transmission (NOMA).

In order to achieve the above 1) to 3), the multiplexing schemes of waveforms with different features (low PAPR, high doppler, high connectivity) should be considered.

For example, there are techniques 1) and 2) illustrated below.

1) All users in the system use OTFS and apply power domain NOMA. Here, in the power domain NOMA, the power difference between users in NTN is assumed to be small, and thus may result in poor performance for NOMA. Also, OTFS has poor compatibility with OFDM-family waveforms in NR
2) Partial users in the system use OFDM for compatibility, and partial users use OTFS. The OFDM signal and the OTFS signal are frequency-multiplexed or time-multiplexed. Here, a guard interval is required for frequency multiplexing, which reduces the SE. Also, if strictly accurate time synchronization cannot be achieved, interference will occur.

As described above, it is necessary to determine how to design NOMA schemes for a large quantity of users using DFT-s-OTFS in an NTN system for high connectivity. In addition, it is necessary to determine how users with different UE capabilities in the NTN system can make DFT-s-OFDM and DFT-s-OTFS coexist with low interference.

Therefore, the DFT-s-OTFS-based waveform may be multiplexed and shaped to satisfy the requirements of wide coverage, high mobility, and high connectivity in the next generation NTN. Proposal 1 and Proposal 2 illustrated below may be executed.

Proposal 1) A NOMA scheme based on power shaping in a delay-doppler domain of DFT-s-OTFS may be applied. Performing power shaping in the DD domain of DFT-s-OTFS for multiple users to increase the power difference at the receiver side for a better SIC performance.

For example, cell-specific power shaping may be performed. With the statistical distribution of channels in the DD domain of users in one cell, multiple power shaping can be designed to distinguish multiple users at the receiver side.

For example, UE-specific power shaping may be performed. With the channels in the DD domain of each user, power shaping can be designed to distinguish multiple users at the receiver side.

Proposal 2) Non-orthogonal multiplexing of DFT-s-OTFS may be performed using sparse mapping in the DD domain. Sparse mapping in the DD domain and DFT-s-OFDM. Repetitions in the TF domain may be achieved by sparse mapping in the DD domain and an inverse symplectic finite Fourier transform (ISFFT) size for DFT-s-OTFS. Repetitions can ensure at least one non-interfered repetition for any non-synchronized or synchronized TF resources with DFT-s-OFDM.

In addition, the CP may be added for each symbol in the DFT-s-OTFS. This improves compatibility with DFT-s-OFDM. Furthermore, partial zero power resources may be designed for DFT-s-OFDM. This enables better interference cancellation at the receiving side.

As described above, in the evaluation results by the simulation, according to Proposal 1), the 8 dB SNR gain was confirmed in the DFT-s-OTFS, the power shaping, and the NOMA with respect to the DFT-s-OTFS and the power domain NOMA. According to Proposal 2), the 2.5 dB SNR gain was confirmed for frequency multiplexing by partial overlapping of DFT-s-OTFS and DFT-s-OFDM subjected to sparse mapping.

According to Proposal 1) and Proposal 2), the impact on the specification may be assumed to be new transmitter design, new signaling, new UE capabilities.

Here, it is assumed that, by the year 2030, as many as one billion IoT devices will be allocated per square kilometer. Such a massive number of connections is expected to exceed the access capabilities of the TN (terrestrial network). Therefore, by utilizing the wide-area coverage of the NTN (non-terrestrial network), it is possible to complement the TN for IoT services.

For the performance of IoT in NTN, if the speed is v, the speed of light is c, and the carrier frequency is $f_c$, then the

doppler shift $\Delta f = (v/c)f_c$, so if $vf_c$ increases, the doppler shift $\Delta f$ increases, so high mobility causes a high Doppler shift. Table 1 illustrates an example of Doppler shift in NTN.

[Table 1]

| SCENARIO | SPEED, v | CARRIER FREQUENCY, $f_c$ | DOPPLER SHIFT, $\Delta f$ |
|---|---|---|---|
| MEO, 10,000 km | 4.9 kmps | 2 GHz | 15 KHz |
| LEO, 600 km | 7.6 kmps | 2 GHz | 48 KHz |

As illustrated in Table 1, in a MEO (Middle Earth Orbit) 10000 km, the speed is 4.9 km per second, and in a carrier-frequency 2 GHz, the doppler shift is 15 kHz. In addition, in the case of LEO (Low Earth Orbit), the speed is 7.6 km per second, and in the case of 2 GHz, the doppler shift is 48 kHz.

The high Doppler shift causes severe inter-carrier interference on the OFDM family waveform in the TF domain. For example, the performance of DFT-s-OFDM is degraded. Therefore, it is assumed that orthogonal multiple access (OMA) is not optimal when high connectivity is realized in a wide coverage.

In the NR-NTN technology, the satellite ephemeris is indicated from the network to the UE. In NR-NTN, a UE having a global navigation satellite system (GNSS) capability is assumed, and a UE position is known. Based on the satellite ephemeris and the UE position, the propagation delay and Doppler shift are estimated and accurate time-frequency synchronization is achieved.

In NTN-IoT scenarios assuming a large number of devices, OMA based on accurate time-frequency synchronization is challenging due to limited resources. Also, accurate synchronization for IoT devices without GNSS capability is difficult.

So, new waveforms with high robustness to Doppler shift and asynchrony should be considered in NTN. The new waveform may be, for example, a waveform to which OTFS is applied. Also, to meet high connectivity requirements, NOMA should be considered. Also, in order to serve IoT devices with different capabilities, e.g. with or without GNSS capability, a multiplexing method of flexible waveforms with different performance (PAPR, mobility, connectivity) should be supported. For example, multiplexing of OFDM and OTFS may be supported.

Hereinafter, an outline of the OTFS waveform will be described (see Non-Patent Literature 5). The OTFS exhibits high robustness against doppler shifts. Transmission and signal processing are performed in the delay-Doppler (DD) domain. A signal in the DD domain is transformed into the time-frequency (TF) domain by an ISFFT (Inverse Symplectic Finite Fourier Transform), which is equivalent to two-dimensional spreading in the time and frequency domains. High diversity is achieved. The performance gain of OTFS over OFDM increases under doppler spread and doppler shift conditions in multipath channels. For example, under ideal channel estimation at a BLER of 0.1, OTFS provides an SNR gain of approximately 3.2 to 4.5 dB over OFDM. Under practical channel estimation with a large Doppler shift and a BLER of 0.1, OTFS provides an SNR gain of approximately 2.8 dB over OFDM.

On the other hand, OTFS is less compatible with OFDM. In addition, a method of multiplexing the OTFS and the OFDM is required.

Hereinafter, a multiple access method for multi-user OTFS will be described.

A plurality of users using OTFS may be multiplexed by OMA (see Non-Patent Literature 6). Orthogonal resource allocation in the TF domain is achieved by interleaving and reduced ISFFT in the DD domain.

However, a real pulse, such as a rectangular pulse, causes multi-user interference in the manner of interleaved resource allocation. Also, dynamic or semi-dynamic control of configured grants and/or grant-based transmissions requires large delays in NTN, and the validity period of such configurations may expire due to the high mobility of satellites. Configured grants and/or grant-based transmissions require orthogonality between users, but are not suitable in IoT services where there is a large number of devices.

Also, a plurality of users using OTFS may be multiplexed by NOMA (see Non-Patent Literature 7 and 8). Multiplexing may be performed by overlapping in the DD domain for a plurality of users. Interference between specific users may be avoided by performing specific resource mapping in the delay domain for the specific users. However, since the power difference is used to distinguish multiple users, it is not suitable for NTN with SNR gap less than 3 dB (see Non-Patent Literature 9). For example, although it is mainly assumed that the power difference is 20 dB in Non-Patent Literature 7 and the power difference is at least 5 dB in Non-Patent Literature 8, there is a possibility that the performance is degraded when the power difference between users is smaller.

As described above, OMA is not suitable for NTN-IoT. Given the delay due to the long propagation distance in NTN, the large signaling overhead due to the presence of a large number of devices, OMA is difficult in NTN-IoT and not possible in the DD domain of OTFS. Therefore, NOMA is required.

In a method of directly combining OTFS and power domain NOMA without considering a small SNR gap in NTN and performance of OTFS, it is difficult to use a power difference between users, and it is assumed that the same transmission power is used in all symbols in the DD domain.

Therefore, there is a need to design a multiple access method and waveform for NTN-IoT in an environment that satisfies high connectivity and low PAPR and has a characteristic of a small SNR gap between users.

FIG. 6 is a drawing illustrating an example of a transmitter according to an embodiment of the present invention. For multiple users using DFT-s-OTFS or OTFS, it needs to be considered to improve connectivity in NTN. Therefore, in order to increase the power difference between users at the receiving side, power shaping in the DD domain may be performed.

As illustrated in FIG. 6, performing power shaping in the DD domain increases the power difference between multiple users in the DD domain to improve performance. As illustrated in FIG. 6, the transmitter of the DFT-s-OTFS may perform processing in the order of DFT, resource mapping, power shaping, ISFFT, inverse fast Fourier transform (IFFT), and CP insertion. Note that the DFT may be optional, and the power shaping may be optional.

For example, after power shaping, two levels of power may be generated, as illustrated in FIG. 6. The same or different power shaping may be performed for multiple users in the DD domain.

Based on the channel conditions in the DD domain, it is assumed that the channel power of each path does not change much in the DD domain. Therefore, it is difficult to cancel interference for OTFS-NOMA. Thus, power shaping in the DD domain increases the power difference. Between users with similar SNRs or channel conditions, an effective channel in the DD domain at the receive end is a larger power difference, thereby facilitating interference cancellation.

FIG. 7 is a drawing illustrating an example (1) of power shaping in a DD domain according to an embodiment of the present invention. As illustrated in FIG. 7, the same power A is configured in the DD domain.

FIG. 8 is a drawing illustrating an example (2) of power shaping in the DD domain according to an embodiment of the present invention. As illustrated in FIG. 8, a power difference occurs based on the channel state, such as in UE1 in the channel of $h_1$ and in UE2 in the channel of $h_2$.

FIG. 9 is a drawing illustrating an example (3) of power shaping in the DD domain according to an embodiment of the present invention. The signal received in the DD domain illustrated in FIG. 9 is used for the power domain NOMA. The received power in UE1 is $h_1A$, and the received power in UE2 is $h_2A$. The difference in received power is due to channel conditions.

FIG. 10 is a drawing illustrating an example (4) of power shaping in the DD domain according to an embodiment of the present invention. The power illustrated in FIG. 10 illustrates an example of power shaping performed at the transmitting side based on statistical or instantaneous information about the delay spread and/or doppler shift.

FIG. 11 is a drawing illustrating an example (5) of power shaping in the DD domain according to an embodiment of the present invention. FIG. 11 illustrates a situation in which there is a large power difference across all resources in the DD domain. As illustrated in FIG. 11, there is a sufficient time difference between $\tau_1$, at which power shaping for UE1 is initiated, and $\tau_2$, at which power shaping for UE2 is initiated. During this time period, there exists a significant difference between the received power $h_1A$ of UE1 and the received power $h_2A$ of UE2.

FIG. 12 is a drawing illustrating an example (6) of power shaping in the DD domain according to an embodiment of the present invention. FIG. 12 illustrates a situation in which a large power difference occurs in partial resources within the DD domain. As illustrated in FIG. 12, there is a time difference between $\tau_1$, at which power shaping for UE1 is initiated, and $\tau_2$, at which power shaping for UE2 is initiated. During this time period, there exists a certain duration in which the difference between the received power $h_1A$ of UE1 and the received power $h_2A$ of UE2 is large.

FIG. 13 is a drawing illustrating an example (7) of power shaping in the DD domain according to an embodiment of the present invention. FIG. 13 illustrates a worst-case scenario in which all resources in the DD domain have the same power level. As illustrated in FIG. 13, $\tau_1$, at which power shaping for UE1 is initiated, and $\tau_2$, at which power shaping for UE2 is initiated, occur almost simultaneously. Accordingly, there is no period in which a significant difference exists between the received power $h_1A$ of UE1 and the received power $h_2A$ of UE2.

The proposed NOMA with power shaping can cause a large power difference in all DD-domain resources as illustrated in FIG. 11 if the channel information on delay and Doppler is known, and thus can obtain performance gains.

FIG. 14 is a drawing illustrating a gain (1) of a method according to an embodiment of the present invention. FIG. 15 is a drawing illustrating a gain (2) of a method according to an embodiment of the present invention. FIG. 16 is a drawing illustrating a gain (3) of a method according to an embodiment of the present invention. Table 2 illustrates the parameters of the simulation results illustrated in FIGS. 14, 15 and 16.

[Table 2]

| PARAMETER | VALUE OR ASSUMPTION |
|---|---|
| NUMBER OF SUBCARRIERS, M | 128 |
| NUMBER OF OFDM SYMBOLS, N | 32 |
| NUMBER OF UEs | 2 |

(continued)

| PARAMETER | VALUE OR ASSUMPTION |
|---|---|
| NUMBER OF MODULATED SYMBOLS | MN |
| MODULATION | QPSK/BPSK |
| CHANNEL CODING SCHEME | TURBO |
| CHANNEL MODEL | AWGN WITH 1 dB SNR GAIN BETWEEN 2 UEs |
| DOPPLER SHIFT | UNIFORM RANDOM VARIABLE OVER [0, 128] SUBCARRIERS |
| DETECTION ALGORITHM | MMSE-SIC |
| SHAPING SIZE | [32, 32] |
| SHAPING POWER GAIN | 3.5 dB, 6 dB |

As illustrated in Table 2, the parameters of the simulation results are as follows: the number of subcarriers M is 128; the number of symbols N is 32; the number of UEs is 2; the number of modulated symbols is MN; the modulation scheme is QPSK (Quadrature Phase Shift Keying) or BPSK (Binary Phase Shift Keying); the channel coding scheme is Turbo coding; the channel model is AWGN (Additive White Gaussian Noise) with a 1 dB gain between the two UEs; the doppler shift is a uniform random variable over [0, 128] subcarriers; the detection algorithm is MMSE-SIC (Minimum Mean Squared Error-Successive Interference Canceller); the shaping size is [32, 32]; and the shaping power gain is 3.5 dB or 6 dB.

FIG. 14 illustrates the SNR versus BER characteristics in the case where the baseline employs DFT-spread OTFS and BPSK with power-domain NOMA, and in the case where the proposed NOMA method applies power shaping of 5 dB with DFT-spread OTFS and BPSK. As illustrated in FIG. 14, a gain exceeding 1 dB can be obtained at a Bit Error Rate (BER) of $10^{-2}$.

FIG. 15 illustrates the SNR versus BER performance in the case where the baseline employs power-domain NOMA using DFT-spread DFT-s-OTFS and QPSK, and in the case where the proposed NOMA scheme with power shaping of 4.5 dB, 5 dB, and 5.5 dB is applied to DFT-spread DFT-s-OTFS and QPSK. As illustrated in FIG. 15, a gain exceeding 3 dB is obtained at a BER of $10^{-2}$.

FIG. 16 illustrates the SNR versus BLER performance in the case where the baseline employs power-domain NOMA using DFT-spread DFT-s-OTFS and QPSK, and in the case where the proposed NOMA scheme with power shaping of 4.5 dB, 5 dB, and 5.5 dB is applied to DFT-spread DFT-s-OTFS and QPSK. As illustrated in FIG. 16, the SNR versus BLER performance of the proposed NOMA scheme is superior to that of the baseline.

Hereinafter, a method of multiplexing OFDM and OTFS will be described. In order to improve compatibility with NR waveforms and to support systems assuming different UE capabilities, there is a need for a co-exist method of OFDM and OTFS.

In a case where OFDM and OTSF are time-division-multiplexed, resource allocation is performed in which the OFDM users and the OTFS users are orthogonal in the time domain. The OTFS signal with repetition in the DD domain partially occupies resources in the time domain. The OFDM signal is transmitted on the remaining time domain resources that are not occupied. Strict time synchronization is required to avoid interference between OFDM UEs and OTFS UEs. In the method of time-division multiplexing, inaccurate synchronization causes MUI (Multi user interference).

In a case where OFDM and OTSF are frequency-division-multiplexed, resource allocation is performed in which OFDM users and OTFS users are orthogonal in the frequency domain. A guard interval is required to avoid interference. Due to the guard interval, the SE, i.e., the resource utilization efficiency, is reduced.

In a high mobility environment (see Non-Patent Literature 10), OTFS has a higher diversity gain and a lower error rate than OFDM. When the case of time-division multiplexing OFDM and OTSF is compared with the case of frequency-division multiplexing OFDM and OTSF, the error ratio is lower in the case of time-division multiplexing with a higher diversity gain in the frequency domain.

As described above, when OTFS is multiplexed with OFDM, flexibility is low and interference may occur.

When OFDM and OTSF are frequency-division-multiplexed, guard intervals are required between the frequency resources of OFDM and the frequency resources of OTFS in order to avoid inter-carrier interference. In the case of time-division multiplexing OFDM and OTSF, accurate time synchronization is required between OFDM users and OTSF users, which is not suitable in environments where there are a large number of IoT devices.

When the DFT-s-OTFS and the OTFS are used to multiplex with the existing 5G signal, flexibility and compatibility need to be ensured. In addition, it is necessary to facilitate interference cancellation between different waveforms on the receiving side.

Therefore, a method of making the OTFS and the OFDM waveform non-orthogonal is proposed. The DFT-s-OTFS or OTFS and the DFT-s-OFDM or CP-OFDM can coexist in one system with high compatibility. The DFT-s-OTFS or the OTFS user and the DFT-s-OFDM or the CP-OFDM user may be allocated on a same time-frequency resource, to ensure robustness in an asynchronous environment of the NTN.

For DFT-s-OTFS or OTFS, sparse resource mapping in the DD domain may be performed to perform repetition in the TF domain. For DFT-s-OFDM or CP-OFDM, the resources are partially overlapped with one or more repetitions in DFT-s-OTFS or OTFS, and the rest is configured to zero, so that interference is avoided and interference cancellation at the receiving side is facilitated.

FIG. 17 is a drawing illustrating targets of a method according to an embodiment of the present invention. As illustrated in FIG. 17, in order to support high mobility of NTN satellites or UEs, different GNSS capabilities for each UE, and access to a large number of devices in 6G NTN, it is necessary to design a waveform and a multiple access method while maintaining backward compatibility. The following targets may be achieved:

Target 1: Improve detection performance of signals of a plurality of users assuming frequency offset in a high mobility environment
Target 2: Facilitate interference cancellation between different waveforms at the receiving side
Target 3: Flexible and fully compatible with 5G signal

As illustrated in FIG. 17, the resource mapping for OTFS is directed to targets 1 and 2. Repetition in the time-frequency domain is achieved by sparse resource mapping in the delay-doppler domain for DFT-s-OTFS.

The overlapping of OTFS and OFDM is directed to targets 1 and 2. In order to achieve approximately non-interfering transmission, overlapping of DFT-s-OFDM and DFT-s-OTFS repetitions is performed.

The zero power resources for OFDM are directed to the target 2. Partial overlapping of DFT-s-OFDM and DFT-s-OTFS and pseudo-orthogonal transmission between DFT-s-OFDM and DFT-s-OTFS are performed to improve the SIC performance on the receiving side.

The CP for OTFS is directed to the target 3. In order to be compatible with DFT-s-OFDM, the symbol unit CP insertion for DFT-s-OTFS is performed.

FIG. 18 is a drawing illustrating an example of a method according to an embodiment of the present invention. Sparse resource mapping for DFT-s-OTFS is performed in the DD domain, and the DFT-s-OTFS is converted into the TF domain by ISFFT to implement repetition of $S_1$. Further, the partial zero power resources for DFT-s-OFDM are located in the TF domain and overlapped with the DFT-s-OTFS signals D1, D2 and D3 in the TF domain, so that partial overlapping for DFT-s-OFDM and DFT-s-OTFS is realized. In the example of FIG. 18, the DFT-s-OTFS signal is repetition of $S_1$, $S_1$ is allocated in the zero power resources for DFT-s-OFDM, and the MUI is reduced in the resource.

FIG. 19 is a drawing illustrating an example of DFT according to an embodiment of the present invention. The conversion between sparse mapping and repeated mapping is performed by the properties of DFT spreading. The DFT spreading is realized by the processing according to Formula 1.

[Formula 1]

$$X(k) = DFT[x(n)] = \sum_{n=1}^{N-1} x(n)e^{-j\frac{2\pi}{N}kn}$$

$$= \sum_{n=0,A,2A,\ldots} x(n)e^{-j\frac{2\pi}{N}kn} + \sum_{n=1,A+1,2A+1,\ldots} x(n)e^{-j\frac{2\pi}{N}kn} + \sum_{n=2,A+2,2A+2,\ldots} x(n)e^{-j\frac{2\pi}{N}kn} + \cdots$$

$$= \sum_{r=0}^{\frac{N}{A}-1} \underbrace{x(Ar)}_{\text{NON-ZERO VALUES}} e^{-j\frac{2\pi}{N}k\cdot Ar} + \sum_{r=0}^{\frac{N}{A}-1} \underbrace{x(Ar+1)}_{\text{ZEROS}} e^{-j\frac{2\pi}{N}k\cdot(Ar+1)} + \cdots, \qquad k = 0,\ldots,N-1$$

The repeated mapping after DFT spreading is illustrated in Formula 2.

[Formula 2]

$$X(k) = \sum_{r=0}^{\frac{N}{A}-1} x(Ar)e^{-j\frac{2\pi}{N}k\cdot Ar}, \text{ i.e., } X\left(k' + \frac{N}{A}\right) = X(k'),\ k' = 0, \ldots, \frac{N}{A} - 1$$

REPETITIONS

In the example of FIG. 19, a 6-point DFT is performed on the sparse mapping in the y-axis, and two repetitions are generated.

FIG. 20 is a drawing illustrating an example (1) of a transmission scheme according to an embodiment of the present invention. FIG. 20 is an example illustrating signal generation on the DFT-s-OTFS side. A 3-point DFT is performed on the incoming data. Next, sparse resource mapping is performed. Next, a 6-point ISFFT is performed on the DD domain. Next, a 6-point IFFT is performed in the frequency domain. Then, CP insertion is performed and output to the channel. A signal on the DFT-s-OFDM side described in FIG. 21 is also added to the channel.

FIG. 21 is a drawing illustrating an example (2) of a transmission scheme according to an embodiment of the present invention. Zero insertion is performed on the input partial data. Next, a 3-point DFT is performed and mapped to the frequency domain. This causes repetition in the TF domain. That is, the spreading mapping and the repetition mapping are also performed on the DFT-s-OFDM side. Then, at least one data of the repetition is removed to be zero. Next, a 6-point IFFT is performed in the frequency domain. Then, CP insertion is performed and output to the channel. The signal on the DFT-s-OTFS side described in FIG. 20 is also added to the channel.

FIG. 22 is a drawing illustrating gain (1) of the transmission scheme according to an embodiment of the present invention. FIG. 23 is a drawing illustrating gain (2) of the transmission scheme according to an embodiment of the present invention. FIG. 24 is a drawing illustrating gain (3) of the transmission scheme according to an embodiment of the present invention. FIG. 25 is a drawing illustrating gain (4) of the transmission scheme according to an embodiment of the present invention. Table 3 illustrates parameters of simulation results illustrated in FIGS. 22, 23, 24, and 25.

[Table 3]

| PARAMETER | VALUE OR ASSUMPTION |
|---|---|
| NUMBER OF SUBCARRIERS, M | 128 |
| NUMBER OF OFDM SYMBOLS, N | 64 |
| NUMBER OF UEs | 2 |
| NUMBER OF MODULATED SYMBOLS | 1/2 MN (FOR BOTH DFT-s-OFDM and DFT-s-OTFS) |
| MODULATION | QPSK/BPSK |
| CHANNEL CODING SCHEME | NONE |
| GUARD INTERVAL | 0/1/2 SUBCARRIERS |
| CHANNEL MODEL | RAYLEIGH FADING |
| DOPPLER SHIFT | (0, 1, 12, 24, 63)/64 SUBCARRIER SPACING |
| DETECTION ALGORITHM | MMSE-SIC |

As illustrated in Table 3, the number of subcarriers M is 128, the number of OFDM symbols N is 64, and the number of UEs is 2. The number of modulated symbols for both DFT-s-OFDM and DFT-s-OTFS is (1/2) MN. The modulation scheme is QPSK or BPSK. No channel coding scheme is applied. The guard interval is 0, 1, or 2 subcarriers. The channel model is Rayleigh fading. The doppler shift is the subcarrier spacing of {0, 1/64, 12/64, 24/64, 63/64}. The detection algorithm is MMSE-SIC (Minimum Mean Squared Error-Successive Interference Canceller).

The baselines in FIGS. 22 and 23 are DFT-s-OFDM and DFT-s-OTFS in which guard intervals are inserted and frequency multiplexing is performed, and BPSK is applied. As illustrated in FIGS. 22 and 23, as the doppler shift increases, the BER performance of DFT-s-OTFS and DFT-s-OFDM decreases. For small doppler shifts, e.g. 1/64 SCS, the difference between the proposed scheme and the baseline is small. On the other hand, for a high doppler shift, e.g., 63/64 SCS, the proposed scheme yields an SNR gain of about 2.5 dB over the baseline.

The baseline in FIG. 24 is DFT-s-OFDM, and QPSK is applied. As illustrated in FIG. 24, when the doppler shift is not compensated, the proposed scheme provides an SNR gain from 1 dB to 2 dB at BER = $10^{-2}$ for a larger doppler shift than the baseline, for example. When compensating for Doppler shift, the proposed scheme yields an SNR gain from 4 dB to 5 dB over baseline, e.g., at BER = $10^{-2}$.

The baseline in FIG. 25 is DFT-s-OTFS, and BPSK is applied. As illustrated in FIG. 25, the proposed scheme obtains an SNR gain of 1 dB to 5 dB at BER = $10^{-2}$, for example, compared to the baseline.

Here, the transmission-side apparatus may perform operation 1) to operation 4) described below.

Operation 1) Configuration of DFT-s-OTFS or OTFS
Operation 1-1) Configuration of DFT-s-OTFS or OTFS Transmitter
Operation 1-2) Sparse Resource Mapping in DD Region and Related Signaling
Operation 1-3) Shaping in DD Region and Related Signaling
Operation 1-4) DFT-s-OTFS to which Sparse Resource Mapping is Applied or Transport Block Size of OTFS
Operation 2) Configuration of DFT-s-OFDM or CP-OFDM Multiplexed with DFT-s-OTFS or OTFS Signal by Operation 1
Operation 2-1) Definition of Zero Power Resource in DFT-s-OFDM or CP-OFDM and Related Signaling
Operation 2-2) DFT-s-OFDM Transmitter Configuration
Operation 2-3) CP-OFDM Transmitter Configuration
Operation 2-4) Transport Block Size of DFT-s-OFDM or CP-OFDM Applying Zero Power Resource
Operation 3) Unified Transmitter Configuration for OTFS and OFDM
Operation 3-1) Transmitter Block Diagram
Operation 3-2) Waveform Setting Method
Operation 4) UE Capability

Hereinafter, the operation 1) DFT-s-OTFS or the configuration of OTFS will be described. The block diagram of the DFT-s-OTFS or OTFS transmitter may be designed to improve robustness against interference.

Operation 1-1) Configuration of DFT-s-OTFS or OTFS Transmitter

The sparse resource mapping and shaping in the DD domain may be optionally added between the DFT precoding and the ISFFT for DFT-s-OTFS, or may be optionally added before the ISFFT for OTFS. Sparse resource mapping and shaping may be applied separately or jointly.

With this configuration, interference cancellation on the receiving side is facilitated, and performance is improved. Note that the default setting may be no sparse resource mapping and no shaping in the DD domain.

FIG. 26 is a drawing illustrating a transmission scheme (1) to which an OTFS is applied according to an embodiment of the present invention. M is the size of the delay domain and the size of the frequency domain. N is the size of the doppler domain and the size of the time domain. $M_{FFT}$ is the size of the IFFT and is greater than or equal to M. $S_1$ is the sparsity of the delay domain, and $S_1$ - 1 zeros are placed between two adjacent symbols in the delay domain. $S_2$ is the sparsity of the doppler domain, where $S_2$ - 1 zeros are placed between two adjacent symbols in the doppler domain.

In Formula 3, m represents a modulation symbol.

[Formula 3]

$$\boldsymbol{m} \in \mathbb{C}^{1\times\frac{MN}{S_1S_2}}$$

$m_1$ and $m_2$ illustrated in Formula 4 and $d_1$ and $d_2$ illustrated in Formula 5 are symbols of the DD domain.

[Formula 4]

$$\boldsymbol{m}_1, \boldsymbol{m}_2 \in \mathbb{C}^{\frac{N}{S_2}\times\frac{M}{S_1}}$$

[Formula 5]

$$\boldsymbol{d_1}, \boldsymbol{d_2} \in \mathbb{C}^{N \times M}$$

$x_1$ and $x_2$ illustrated in Formula 6 are symbols in the TF domain.

[Formula 6]

$$\boldsymbol{x_1}, \boldsymbol{x_2}, \in \mathbb{C}^{N \times M}$$

The $X_3$ illustrated in Formula 7 is a signal after IFFT.

[Formula 7]

$$\boldsymbol{x_3} \in \mathbb{C}^{N \times M}$$

The $s_1$ illustrated in Formula 8 is a symbol in the time domain.

[Formula 8]

$$\boldsymbol{s_1} \in \mathbb{C}^{1 \times NM}$$

The s illustrated in Formula 9 is a symbol to which the CP length $L_{CP}$ is added.

[Formula 9]

$$\boldsymbol{s} \in \mathbb{C}^{1 \times (NM + L_{CP})}$$

The $P_{DD}$ illustrated in Formula 10 is a shaping matrix of the DD domain.

[Formula 10]

$$\boldsymbol{P_{DD}} \in \mathbb{C}^{N \times M}$$

As illustrated in FIG. 26, a modulated symbol m is input to an S/P (serial-parallel conversion), and a $m_1$ is output to a module in a subsequent stage. Next, a DFT is performed on the columns of size $N/S_2$, and $m_2$ is output to a subsequent module. Next, sparse resource mapping in the DD domain is performed, and the $d_1$ is output to a subsequent module. Then, shaping in the DD domain is performed by the $P_{DD}$, and the $d_2$ is output to a subsequent module. Next, an ISFFT of size $N \times M$ is performed and the $x_1$ is output to the following module. Then, physical resource mapping is performed in the TF domain, and the $x_2$ is output to a subsequent module. Then, an IFFT is performed on the rows of size $M_{FFT}$ and the $x_3$ is output to the following module. Next, P/S (parallel-serial conversion) is executed, and the $s_1$ is output to a module in a subsequent stage. Next, CP insertion is performed and s is output.

FIG. 27 is a drawing illustrating a transmission scheme (2) to which the OTFS is applied according to an embodiment of the present invention. FIG. 27 illustrates the S/P and DFT modules. As illustrated in FIG. 27, $(MN)/(S_1S_2)$ modulated symbols m are input to the S/P. Next, a DFT of size $N/S_2$ is performed on the columns, and symbols with $N/S_2$ rows and $M/S_1$ columns are output.

FIG. 28 is a drawing illustrating a transmission scheme (3) to which the OTFS according to an embodiment of the present invention is applied. FIG. 28 illustrates an ISFFT module that transforms the symbol $d_2$ in the DD domain and outputs the symbol $X_1$ in the TF domain. As illustrated in FIG. 28, $d_2(k, 1)$ is input, and $x_1(m, n)$ is output by ISFFT.

Operation 1-2) Sparse Resource Mapping in DD Region and Related Signaling

For OTFS and DFT-s-OTFS, the sparse resource mapping in the DD domain may be defined by the sparsity $S_1$ in the delay domain and the sparsity $S_2$ in the doppler domain. The parameters defining the sparse resource mapping may be explicitly indicated or may be implicitly indicated. Note that the sparse resource mapping may be replaceable with the sparse mapping.

Operation 1-2-1) The sparse resource mapping for OTFS and DFT-s-OTFS may be defined by the sparsity $S_1$ and $S_2$, and optionally the starting indices $A_1$ and $A_2$.

FIG. 29 is a drawing illustrating a transmission scheme (4) to which the OTFS is applied according to an embodiment of the present invention. FIG. 29 illustrates sparse resource mapping with parameters $S_1$, $S_2$, $A_1$, and $A_2$.

For example, if $S_1$ is greater than 1, $S_1$ - 1 zeros are inserted between adjacent symbols in the row or delay domain. If $S_1$ is 1, no zeros may be inserted and no sparse resource mapping is applied to the row or delay domain.

For example, if $S_2$ is greater than 1, $S_2$ - 1 zeros are inserted between adjacent symbols in the sequence or doppler domain. If $S_2$ is 1, no zeros may be inserted and no sparse resource mapping is applied to the column or doppler domain.

A plurality of sparse resource mappings may be obtained for given $S_1$ and $S_2$ based on whether or not a zero is inserted at the start position. The start index may be defined by $A_1$ and $A_2$ in the row or delay domain and the column or doppler domain, respectively.

The $m_2$ symbols indicated by Formula 4 may be sparsely mapped onto a resource block of size M×N, and the $d_1$ symbols represented by Formula 5 may be generated based on Formula 11.

[Formula 11]

$$d_1(k,l)=\begin{cases} m_2\left(\frac{k-A_2}{S_2},\frac{l-A_1}{S_1}\right), & k\in A_2+\left\{0,1,\dots,\frac{N}{S_2}\right\}S_2,\ l\in A_1+\left\{0,1,\dots,\frac{M}{S_1}\right\}S_1 \\ 0, & otherwise \end{cases},$$

Different parameters $S_1$, $S_2$, $A_1$, $A_2$ may correspond to different mapping schemes.

Operation 1-2-2) Parameters related to sparse resource mapping in the DFT-s-OTFS and the OTFS-directed DD domain may be explicitly or implicitly indicated or defined by higher layer or physical layer signaling. For example, the UE may be indicated by broadcast parameters such as RRC signaling, MAC-CE, DCI, UCI, UE group common signaling, SIB, or MIB.

Option 1) The starting indices $A_1$ and $A_2$ of the symbols in the rows and columns (or delay domain and doppler domain) may be non-negative integers. The sparse resource mapping pattern may be implicitly indicated by the starting index.

For example, if $A_1 = 0$ or $A_2 = 0$, no zero is inserted at the start position. If $A_1$ > or $A_2 > 0$, a zero is inserted at the start position. For example, non-zeros may be located from $A_1 + 1$, $A_2 + 1$.

Option 1 allows the start index of both the delay and doppler domains to be specified flexibly.

Option 2) The starting indices $A_1$ and $A_2$ of the symbols in the rows and columns (or delay domain and Doppler domain) are limited to 0, or $S_1$ - 1 and $S_2$ - 1. The sparse resource mapping pattern is explicitly defined.

Option 2-1) The DD area is configured separately. If zero is inserted at the start position of the rows or columns, that is, $A_1 = S_1 - 1$ or $A_2 = S_2 - 1$, the sparse resource mapping pattern in the rows/columns or delay/doppler domain is defined as 1. On the other hand, if $A_1 = 0$ or $A_2 = 0$, the sparse resource mapping pattern is defined to be 0.

Option 2-2) The DD area is combined and set. If no zero is inserted at the start positions of the rows and columns, that is, $A_1 = 0$ and $A_2 = 0$, the sparse resource mapping pattern is defined as "0". If zero is inserted at the start position of the rows or the delay domain and no zero is inserted at the start position of the columns or the doppler domain, that is, $A_1 = S_1 - 1$ or $A_2 = 0$, the sparse resource mapping pattern is defined as "1". If zero is inserted at the start position of the columns or the doppler domains, and no zero is inserted at the start position of the rows or the delay domains, that is, $A_1 = 0$ or $A_2 = S_2 - 1$, the sparse resource mapping pattern is defined as "2". If zeros are inserted at the start positions of the rows and columns, that is, $A_1 = S_1 - 1$ or $A_2 = S_2 - 1$, the sparse resource mapping pattern is defined as "3".

It should be noted that when $S_1 = 1$ or $S_2 = 1$, sparse resource mapping may not be performed in rows/columns or delay/doppler domain, and signaling overheads can be reduced.

Option 2 may achieve a simple and small signaling overhead for the signaling for configuring the sparse resource mapping.

An example of operation 1-2-2 will be described below.

FIG. 30 is a drawing illustrating an example (1) of sparse mapping in the DD domain according to an embodiment of the present invention. FIG. 30 (A) corresponds to Option 1, and the values of $A_1$ and $A_2$ are any values. FIG. 30 (B) corresponds to Option 1, where $S_1$ = 1 and the values of $A_1$ and $A_2$ are any values. FIG. 30 (C) corresponds to Option 1, where $S_2$ = 1 and the values of $A_1$ and $A_2$ are any values.

FIG. 31 is a drawing illustrating an example (2) of sparse mapping in the DD domain according to an embodiment of the present invention. FIG. 31 (A) illustrates sparse resource mapping in a case where $A_1$ = 0 and $A_2$ = 0, corresponding to Option 1. FIG. 31 (B) illustrates sparse resource mapping in a case where $A_1$ = $S_1$ - 1 and $A_2$ = 0 corresponding to Option 1. FIG. 31 (C) illustrates sparse resource mapping in a case where $A_1$ = 0 and $A_2$ = $S_2$ - 1, corresponding to Option 1. FIG. 31 (D) illustrates sparse resource mapping in a case where $A_1$ = $S_1$ - 1 and $A_2$ = $S_2$ - 1, corresponding to Option 1.

FIG. 32 is a drawing illustrating an example (3) of sparse mapping in the DD domain according to an embodiment of the present invention. FIG. 32 (A) illustrates sparse resource mapping in the case of [0,0] of the option 2-1 or "0" of the option 2-2. Note that [a, b] is assumed to correspond to a in the row or delay domain and b in the column or doppler domain. FIG. 32 (B) illustrates sparse resource mapping in the case of [1, 0] of the option 2-1 or "1" of the option 2-2. FIG. 32 (C) illustrates sparse resource mapping in the case of [0, 1] of option 2-1 or "2" of option 2-2. FIG. 32 (D) illustrates sparse resource mapping in the case of [1, 1] of the option 2-1 or "3" of the option 2-2.

FIG. 33 is a drawing illustrating an example (4) of sparse mapping in the DD domain according to an embodiment of the present invention. (A) and (B) of FIG. 33 illustrate sparse resource mapping defined by 0 or 1 in both option 2-1 and option 2-2 when $S_1$ = 1. 0 may correspond to (A) and 1 may correspond to (B). (C) and (D) of FIG. 33 are sparse resource mapping defined by 0 or 1 in both the option 2-1 and the option 2-2 when $S_2$ = 1. 0 may correspond to (C) and 1 may correspond to (D).

After the above sparse resource mapping in the DD domain, the signal converted to the TF domain by performing the ISFFT is described below. The mapping of the lean resources in the delay domain is repeated in the frequency domain, and the sparsity $S_1$ is the number of repetitions in the frequency domain. The mapping of the sparse resources in the doppler domain is repeated in the time domain, and the sparsity $S_2$ is the number of repetitions in the time domain. That is, the number of repetitions of the TF domain is $S_1S_2$.

FIG. 34 is a drawing illustrating an example (1) of repetition in a TF domain according to an embodiment of the present invention. FIG. 34 (A) illustrates an example of $S_1$ = 1 and $S_2$ = 2. The number of repetitions is 2 in the time domain. FIG. 34 (B) illustrates an example of $S_1$ = 2 and $S_2$ = 1. The number of repetitions is 2 in the frequency domain. FIG. 34 (C) illustrates an example of $S_1$ = 1 and $S_2$ = 3. The number of repetitions is 3 in the time domain. FIG. 34 (D) illustrates an example of $S_1$ = 3 and $S_2$ = 1. The number of repetitions is 3 in the frequency domain. In the figure, "Rep." means repetition or Repetition.

FIG. 35 is a drawing illustrating an example (2) of repetition in a TF domain according to an embodiment of the present invention. FIG. 35 (A) illustrates an example of $S_1$ = 2 and $S_2$ = 2. The number of repetitions is 2 in the time domain and the frequency domain, and the total number of repetitions is 4. FIG. 35 (B) illustrates an example of $S_1$ = 2 and $S_2$ = 3. The number of repetitions is 3 in the time domain, the number of repetitions is 2 in the frequency domain, and the total number of repetitions is 6. FIG. 35 (C) illustrates an example of $S_1$ = 3 and $S_2$ = 3. The number of repetitions is 3 in the time domain and the frequency domain, and the total number of repetitions is 9. FIG. 35 (D) illustrates an example of $S_1$ = 3 and $S_2$ = 2. The number of repetitions is 2 in the time domain, the number of repetitions is 3 in the frequency domain, and the total number of repetitions is 6.

Operation 1-3) Shaping in DD Region and Related Signaling

In the DD domain for OTFS and DFT-s-OTFS, a shaping function may be defined. The parameters related to shaping may be explicitly or implicitly indicated.

Operation 1-3-1) The shaping function may be defined as a matrix $P_{DD}$ having the same dimension as the resources of the DD domain. By the two-dimensional matrix $P_{DD}$, the complex symbol $d_1$ indicated by Formula 12 in the DD domain may be shaped into the $d_2$ indicated by Formula 13.

[Formula 12]

$$\boldsymbol{d_1}(k,l), k = 0, \dots, N-1; l = 0, \dots, M-1$$

[Formula 13]

$$\boldsymbol{d_2}(k,l) = \boldsymbol{P_{DD}}(k,l) \cdot \boldsymbol{x}(k,l), \text{ or } \boldsymbol{d_2} = \boldsymbol{P_{DD}} \otimes \boldsymbol{x}$$

WHERE ⊗ REPRESENTS HADAMARD PRODUCT

Option 1) FIG. 36 is a drawing illustrating an example (1) of power shaping in the DD domain according to an embodiment of the present invention. As illustrated in FIG. 36, the two-dimensional shaping matrix $P_{DD}$ represented by Formula 10 in the DD domain may have any format in which the average power per resource element is 1 as represented by Formula 14, for example. This allows for flexibility and better performance.

[Formula 14]

$$\mathbb{E}\{|\boldsymbol{P_{DD}}(k,l)|^2\} = \mathbf{1}$$

Option 2) FIG. 37 is a drawing illustrating an example (2) of power shaping in the DD domain according to an embodiment of the present invention. As illustrated in FIG. 37, the two-dimensional shaping matrix $P_{DD}$ illustrated in Formula 15 in the DD domain may be given by Formula 16 according to the shaping depth $\gamma$ and the shaping range R. The shaping range R is a set of indices (k, 1) that need to be shaped. $P_{norm}$ is a normalization coefficient, and is normalized so that the average power per resource element in the DD domain is 1. $P_{norm}$ is related to the parameters [$\gamma$, R]. This can be expected to provide simple and low signaling overhead in UL transmission.

[Formula 15]

$$\boldsymbol{P_{DD}}[\gamma, \boldsymbol{R}] \in \mathbb{C}^{N \times M}$$

[Formula 16]

$$\boldsymbol{P_{DD}}[\gamma, \boldsymbol{R}](k,l) = P_{\text{norm}} \cdot \begin{cases} \gamma, & \forall (k,l) \in \text{Shaping region } \boldsymbol{R} \\ 1, & \text{otherwise} \end{cases},$$

Operation 1-3-2) Parameters related to the shaping function in the DFT-s-OTFS and the DD domain for OTFS may be explicitly or implicitly indicated or defined by higher layer or physical layer signaling. For example, the UE may be indicated by broadcast parameters such as RRC signaling, MAC-CE, DCI, UCI, UE group common signaling, SIB, or MIB. As in operation 1-3-1 described above, the shaping function may be explicitly defined by a matrix or may be implicitly defined by parameters. The matrix or the parameters may be defined explicitly or implicitly.

Option 1) The parameters may be implicitly defined. The matrix or the parameters related to the shaping function may be predefined by a set and a indicated index. For example, the matrix or parameters of the shaping function used in one transmission may be indicated by n-bit signaling from a predefined set {$P_{DD,0}$, $P_{DD,1}$, ...., $P_{DD,L-1}$} or {[$\gamma_0$, $R_0$], [$\gamma_1$, $R_1$], ...., [$\gamma_{L-1}$, $R_{L-1}$]} (where $L = 2^n$). This allows a small signaling overhead to be expected.

Option 2) The parameters may be explicitly defined. The matrix or parameters related to the shaping function may be defined by values. For example, the value of the shaping matrix $P_{DD}$ may be quantized and indicated. A quantization step may be further defined. For example, the value of the shaping depth $\gamma$ may be quantized and indicated. A quantization step may be further defined. The shaping range R may be defined in both the delay domain and the doppler domain by one or more start and length indicator values (SLIVs). This enables flexible setting.

Note that the shaping function may be cell-specific, group-specific, or UE-specific. Note that the shaping function may be selected on the base station side and indicated to the UE for grant-based transmission. For example, the UE may select from a predefined set for transmission not based on a grant.

Note that the same or different MCS may be applied to data that is to be high power or low power by power shaping in the DD domain. For example, a high MCS may be applied to a resource of a DD domain of high power.

Operation 1-4) DFT-s-OTFS to which Sparse Resource Mapping is Applied or Transport Block Size of OTFS The transport block size of the DFT-s-OTFS or the OTFS to which the sparse resource mapping is applied may be calculated based on the MCS of the resources allocated in the TF domain and the sparsity of the DD domain.

Option 1) The number of resource elements of the PDSCH or the PUSCH may be calculated by Formula 17 (see Non-Patent Literature 11). $S_1$ and $S_2$ are the sparsity in the DD domain. Note that only the payload is repeated in the TF domain.

[Formula 17]

$$N'_{RE} = \frac{1}{S_1 S_2} \cdot \left(N_{sc}^{RB} \cdot N_{symb}^{sh} - N_{DMRS}^{PRB} - N_{oh}^{PRB}\right)$$

Option 2) The number of resource elements of the PDSCH or the PUSCH may be calculated by Formula 18 (see Non-Patent Literature 11). The payload, DMRS and overhead are repeated in the TF domain.

[Formula 18]

$$N'_{RE} = \frac{1}{S_1 S_2} \cdot N_{sc}^{RB} \cdot N_{symb}^{sh} - N_{DMRS}^{PRB} - N_{oh}^{PRB}$$

Option 3) Unquantized intermediate variable $N_{info}$ for PDSCH/PUSCH may be calculated by Formula 19 (see Non-Patent Literature 11).

[Formula 19]

$$N_{info} = N_{RE} \cdot R \cdot Q_m \cdot v \cdot \frac{1}{S_1 S_2}$$

Hereinafter, Operation 2) Configuration of DFT-s-OFDM or CP-OFDM Multiplexed with DFT-s-OTFS or OTFS Signal by Operation 1 will be described. For systems using both DFT-s-OTFS or OTFS and DFT-s-OFDM or CP-OFDM, a combined design may be considered. The resource mapping of DFT-s-OFDM and CP-OFDM may be associated with sparse resource mapping pattern in DFT-s-OTFS or OTFS.

In a system using both DFT-s-OTFS or OTFS and DFT-s-OFDM or CP-OFDM, partial resources may be left unused by DFT-s-OFDM or CP-OFDM and instead allocated as zero power resources, in order to facilitate interference cancellation at the receiver. The zero power resources in the TF domain for DFT-s-OFDM or CP-OFDM may be the same as at least one of the repetitions of DFT-s-OTFS or OTFS in the TF domain as defined in operation 1-2.

FIG. 38 is a drawing illustrating an example (1) of multiplexing in a TF domain according to an embodiment of the present invention. As illustrated in FIG. 38, the OTFS symbol in the TF domain in the case of $S_1 = 2$ and $S_2 = 1$ is allocated in the frequency domain with two repetitions. For this allocation, as illustrated in FIG. 38, for the OFDM symbol in the TF domain, the resources corresponding to the repetition 1 of the OTFS may not be used for OFDM, and the resources corresponding to the repetition 2 of the OTFS may not be used for OFDM. Resources not used for OFDM may be zero power resources.

FIG. 39 is a drawing illustrating an example (2) of multiplexing in the TF field according to an embodiment of the present invention. As illustrated in FIG. 39, the OTFS symbol in the TF domain in the case of $S_1 = 2$ and $S_2 = 3$ is allocated by repetition three times in the time domain and two times in the frequency domain, and the total number of repetitions is six. For this allocation, as illustrated in FIG. 39, for the OFDM symbol in the TF domain, the resources corresponding to the repetition 1 of the OTFS may not be used for OFDM, and the resources corresponding to the repetition 4 of the OTFS may not be used for OFDM. Resources not used for OFDM may be zero power resources.

FIG. 40 is a drawing illustrating an example (3) of multiplexing in the TF domain according to an embodiment of the present invention. As illustrated in FIG. 40 (A), the OTFS symbol in the TF domain in the case of $S_1 = 1$ and $S_2 = 2$ is allocated in the time domain with two repetitions. In contrast to this allocation, as illustrated in FIG. 40 (B), for the OFDM symbol in the TF domain, the resources corresponding to the repetition 1 of the OTFS may not be used for OFDM. Resources not used for OFDM may be zero power resources.

As illustrated in FIG. 40 (C), the OTFS symbol in the TF domain in the case of $S_1 = 2$ and $S_2 = 1$ is allocated in the frequency domain with two repetitions. In contrast to this allocation, as illustrated in FIG. 40 (D), the resources corresponding to repetition 1 of the OTFS may not be used for OFDM in the OFDM symbols in the TF domain. Resources not used for OFDM may be zero power resources.

FIG. 41 is a drawing illustrating an example (4) of multiplexing in the TF domain according to an embodiment of the present invention. As illustrated in FIG. 41 (A), the OTFS symbol in the TF domain in the case of $S_1 = 2$ and $S_2 = 2$ is allocated by repetition twice in the time domain and twice in the frequency domain, and the total number of repetitions is four. In contrast to this allocation, as illustrated in FIG. 41 (B), the resources corresponding to repetition 1 of the OTFS may not be used for OFDM in the OFDM symbol in the TF domain. Resources not used for OFDM may be zero power resources.

As illustrated in FIG. 41 (C), the OTFS symbol in the TF domain in the case of $S_1 = 2$ and $S_2 = 3$ is allocated by repetition of three times in the time domain and two times in the frequency domain, and the total number of repetitions is six. In contrast to this allocation, as illustrated in FIG. 41 (D), for the OFDM symbol in the TF domain, the resources corresponding to the repetition 1 of the OTFS may not be used for OFDM. Resources not used for OFDM may be zero power resources.

Operation 2-1) Definition of Zero Power Resource in DFT-s-OFDM or CP-OFDM and Related Signaling

The zero power resources in the DFT-s-OFDM or the CP-OFDM may be explicitly or implicitly indicated or defined by higher layer or physical layer signaling. For example, the UE may be indicated by broadcast parameters such as RRC signaling, MAC-CE, DCI, UCI, UE group common signaling, SIB, or MIB.

Option 1) Implicit indication: The zero power resources in DFT-s-OFDM or CP-OFDM may be indicated implicitly by one or more indices of repetitions in DFT-s-OTFS/OTFS.

FIG. 42 is a drawing illustrating an example of indication of zero power resources according to an embodiment of the present invention. For example, the index of repetition may increase in the order of first frequency domain, second time domain, as in the OTFS symbol in the TF domain in FIG. 42. For example, in a case that the index {1,4} is indicated, resources corresponding to repetition 1 and repetition 4 may be calculated from the values of $S_1$ and $S_2$ in DFT-s-OTFS or OTFS, and resources corresponding to repetition 1 and repetition 4 may be reserved as zero power in DFT-s-OFDM or CP-OFDM. Note that FIG. 42 illustrates an example in which repetition 4 is allocated as a zero-power resource. This enables simple signaling with a small signaling overhead.

Option 2) Explicit indication: The zero power resources in DFT-s-OFDM or CP-OFDM may be indicated explicitly.

For example, the time-frequency resources that are the zero power resources may be indicated by the index of the PRB and the index of the OFDM symbol, or may be indicated by the SLIV of the PRB and the SLIV of the OFDM symbol. FIG. 42 is an example in which the partial resource of repetition 2 and the partial resource of repetition 4 are explicitly indicated as zero power resources. This allows for flexibility and better performance. In addition, in DFT-s-OFDM or CP-OFDM, a channel having a poor characteristic may be selected as a zero power resource.

Operation 2-2) DFT-s-OFDM Transmitter Configuration

FIG. 43 is a drawing illustrating a transmission scheme (1) to which OFDM is applied according to an embodiment of the present invention. To achieve the zero power resources described in operation 2-1, the block diagram of the transmitter illustrated in FIG. 43 may be used for DFT-s-OFDM.

As illustrated in FIG. 43, when a modulated symbol m is input, zero insertion is performed, and a $m_1$ is output to a module in a subsequent stage. Next, S/P is executed, and the $m_2$ is output to the module of the subsequent stage. Next, a DFT of $M_{DFT}$ size is performed and d is output to the subsequent module. Then, the $x_1$ is output to a subsequent module. Next, physical resource mapping in the TF domain is performed, and the $x_2$ is output to a module in a subsequent stage. An IFFT of size $M_{FFT}$ is then performed and the $x_3$ is output to the following module. Next, the P/S is executed, and the $s_1$ is output. Then, CP insertion is performed and s is output.

Operation 2-2-1) The transmitter may be configured to implement zero power resources.

Option 1) Zero insertion may be performed before S/P and DFT precoding. Data removal may be performed after DFT precoding. Thus, one DFT size per transmission may be assumed.

As illustrated in FIG. 43, for zero insertion, the position and number of zeros inserted in the modulated symbol are related to the $S_1$ and $S_2$ of the DFT-s-OTFS or OTFS and may be given by Formula 20.

[Formula 20]

$$\boldsymbol{m}_1(l) = \begin{cases} \boldsymbol{m}(l), & l = 0, \ldots, n_0 M_{\mathrm{DFT}} - 1, \text{and } l = n_0 M_{\mathrm{DFT}} + \{0, S_1, 2S_1, \ldots, M\} \\ \boldsymbol{m}\left(l - \frac{M_{\mathrm{DFT}} N}{S_1 S_2}\right), & l = \frac{M_{DFT} N}{S_1 S_2} + n_0 M_{DFT} + 1, \ldots, \frac{S_1 S_2 - S_1 - 1}{S_1 S_2} M_{DFT} N \\ 0, & otherwise \end{cases}$$

The $n_0$ is a parameter related to a location of a zero power resource. As illustrated in FIG. 43, zeros may be inserted in data positions of the group $n_0$.

For data excision, the data in the zero power resources may be set to zero. That is, data excision may be given by Formula 21.

[Formula 21]

$$\boldsymbol{x_1}[\boldsymbol{n}, \boldsymbol{m}] = \begin{cases} 0, \; n = n_0, \ldots, n_0 + \frac{N}{S_2} - 1; m = \frac{M(S_1 - 1)}{S_1}, \ldots, M_{\mathrm{DFT}} - 1 \\ \boldsymbol{d}[n, m], \quad otherwise \end{cases}.$$

Option 2) FIG. 44 is a drawing illustrating a transmission scheme (2) to which OFDM is applied according to an embodiment of the present invention. The DFT size may be changed based on the index of the OFDM symbol. That is, as illustrated in FIG. 44, a plurality of DFT sizes may be applied to one transmission. The DFT size may be determined as $(1\text{-}1/S_1)M_{DFT}$ based on the $S_2$, $S_1$ and zero power resources. With multiple DFT sizes and zero power resources, the modulated symbols may be divided into multiple groups, each group being processed with one DFT size. The plurality of groups of data after the DFT may be separated as illustrated in Formula 22.

[Formula 22]

$$\boldsymbol{m}_1[n, m] = \begin{cases} \boldsymbol{m}(nM_{\mathrm{DFT}} + m), \; n = 0, \ldots, n_0 - 1; m = 0, \ldots, M_{\mathrm{DFT}} - 1 \\ \boldsymbol{m}\left(nM_{\mathrm{DFT}} + m + \frac{(S_1 - 1)NM_{\mathrm{DFT}}}{S_1 S_2}\right), n = n_0, .., \left(\frac{S_2 - 1}{S_2}\right) N; m = 0, \ldots, M_{\mathrm{DFT}} - 1 \end{cases}$$

$$\boldsymbol{m}_2[n, m] = \boldsymbol{m}\left(n\left(\frac{S_1 - 1}{S_1}\right) M_{\mathrm{DFT}} + m + n_0 M_{\mathrm{DFT}}\right)$$

The $m_1$ and $m_2$ generated in Formula 22 may then be mapped to resources as illustrated in Formula 23. This mapping may be referred to as virtual resource mapping.

[Formula 23]

$$\boldsymbol{x}_1[n, m] = \begin{cases} \boldsymbol{m}_1[n, m], & n = 0, \ldots, n_0 - 1; m = 0, \ldots, M_{\mathrm{DFT}} - 1 \\ \boldsymbol{m}_2[n - n_0, m], & n = n_0, \ldots, \frac{N}{S_2} + n_0 - 1, ; m = 0, \ldots, \frac{(S_1 - 1)M_{\mathrm{DFT}}}{S_1} - 1 \\ \boldsymbol{m}_1[n - \frac{N}{S_2}, m], & n = \frac{N}{S_2} + n_0, .., \left(\frac{S_2 - 1}{S_2}\right) N; m = 0, \ldots, M_{\mathrm{DFT}} - 1 \\ 0, & otherwise \end{cases}$$

This makes it possible to realize zero power resources without adding a module.

Option 3) FIG. 45 is a drawing illustrating a transmission scheme (3) to which OFDM is applied according to an embodiment of the present invention. The smallest DFT size in Option 2 may be selected as illustrated in FIG. 45. The symbols are DFT precoded at the subband level instead of the bandwidth level. The DFT size is determined by the $S_1$ of the DFT-s-OTFS or OTFS, which is $M_{DFT}/S_1$. The symbol after the DFT is mapped to the resource as illustrated in Formula 24.

[Formula 24]

$$x_2[n,m] = \begin{cases} x_1\left[nS_1 + \left\lfloor \frac{m}{M_{\mathrm{DFT}}/S_1} \right\rfloor, m \bmod \frac{M_{\mathrm{DFT}}}{S_1}\right], & n = 0,\ldots,n_0-1; m = 0,\ldots,M_{\mathrm{DFT}}-1; \\ x_1\left[nS_1 + \left\lfloor \frac{m}{M_{\mathrm{DFT}}/S_1} \right\rfloor, m \bmod \frac{M_{\mathrm{DFT}}}{S_1}\right], & n = n_0,\ldots,n_0+\frac{N}{S_2}-1; m = 0,\ldots,\frac{S_1-1}{S_1}M_{\mathrm{DFT}}-1; \\ 0, & n = n_0,\ldots,n_0+\frac{N}{S_2}-1; m = \frac{S_1-1}{S_1}M_{\mathrm{DFT}},\ldots,M_{\mathrm{DFT}}-1; \\ x_1\left[nS_1 + \left\lfloor \frac{m}{M_{\mathrm{DFT}}/S_1} \right\rfloor - \frac{N}{S_2}, m \bmod \frac{M_{\mathrm{DFT}}}{S_1}\right], & n = n_0+\frac{N}{S_2},\ldots,N-1; m = 0,\ldots,M_{\mathrm{DFT}}-1; \end{cases}$$

This makes it possible to realize zero power resources without adding a module.

Operation 2-2-2) A shaping function may be added before the DFT module in DFT-s-OFDM. The region of symbols before the DFT in DFT-s-OFDM is approximated to the delay domain. This is because, after the DFT, the symbols are processed in the frequency domain. The shaping function in the DD domain defined in operation 1-3 for DFT-s-OTFS or OTFS is simplified as the shaping function in the delay domain for DFT-s-OFDM.

The shaping function may be defined as a matrix $P_{DD}$ with dimensions same with the DFT size. Using the two-dimensional shaping matrix $P_{DD}$, complex symbols $m_1(k, l)$ and/or $m_2(k, l)$ in the delay domain before DFT precoding may be shaped into $P_{DD}(k, l) \cdot x(k, l)$ or a Hadamard product between $P_{DD}$ and x.

Option 1 and option 2 of operation 1-3-1 are applicable to operation 2-2-2.

The parameters related to the shaping function in the delay domain for DFT-s-OFDM may be explicitly or implicitly indicated or defined by higher layer or physical layer signaling. For example, the UE may be indicated by broadcast parameters such as RRC signaling, MAC-CE, DCI, UCI, UE group common signaling, SIB, or MIB.

Option 1 and option 2 of operation 1-3-2 are applicable to operation 2-2-2.

FIG. 46 is a drawing illustrating a transmission scheme (4) to which OFDM is applied according to an embodiment of the present invention. FIG. 46 illustrates an example of applying operation 2-2-2 to option 1 of operation 2-2-1. As illustrated in FIG. 46, shaping in the delay domain may be performed before DFT of the $M_{DFT}$ size.

FIG. 47 is a drawing illustrating a transmission scheme (5) to which OFDM is applied according to an embodiment of the present invention. FIG. 47 is an example of applying operation 2-2-2 to option 2 of operation 2-2-1. As illustrated in FIG. 47, shaping in the delay domain may be performed before DFT of the $M_{DFT}$ size and before DFT of the $(1-1/S_1)M_{DFT}$ size.

FIG. 48 is a drawing illustrating a transmission scheme (6) to which OFDM is applied according to an embodiment of the present invention. FIG. 48 illustrates an example of applying the operation 2-2-2 to the option 3 of the operation 2-2-1. As illustrated in FIG. 48, shaping in the delay domain may be performed before DFT with $M_{DFT}/S_1$ size.

Operation 2-3) CP-OFDM Transmitter Configuration

FIG. 49 is a drawing illustrating a transmission scheme (7) to which OFDM is applied according to an embodiment of the present invention. In order to achieve zero power resources in operation 2-1, physical resource mapping in CP-OFDM may be associated with all resources and zero power resources, as illustrated in FIG. 49. For example, as illustrated in FIG. 49, the zero power resources may be allocated by physical resource mapping.

Here, in NR, two resource mapping formats are supported for CP-OFDM. In the format of contiguous resource allocation, symbols are mapped to resources along subcarriers in the frequency domain, and then mapped to resources along OFDM symbols in the time domain.

Option 1) Existing resource mapping in NR may be reused for zero power resources to avoid resources for reference signals and other overhead.

Option 2) S/P and physical resource mapping may be changed. S/P may be performed by Formula 25.

[Formula 25]

$$x_1[n,m] = \boldsymbol{m}\left(m + \frac{M_{\mathrm{DFT}}}{S_1} n\right)$$

The physical resource mapping may be performed according to Formula 26.

[Formula 26]

$$x_2[n,m] = \begin{cases} x_1\left[nS_1 + \left\lfloor \frac{m}{M_{\mathrm{DFT}}/S_1} \right\rfloor, m \bmod \frac{M_{\mathrm{DFT}}}{S_1}\right], & n = 0,\dots,n_0 - 1; m = 0,\dots,M_{\mathrm{DFT}} - 1; \\ x_1\left[nS_1 + \left\lfloor \frac{m}{M_{\mathrm{DFT}}/S_1} \right\rfloor, m \bmod \frac{M_{\mathrm{DFT}}}{S_1}\right], & n = n_0,\dots,n_0 + \frac{N}{S_2} - 1; m = 0,\dots,\frac{S_1 - 1}{S_1} M_{\mathrm{DFT}} - 1; \\ 0, & n = n_0,\dots,n_0 + \frac{N}{S_2} - 1; m = \frac{S_1 - 1}{S_1} M_{\mathrm{DFT}},\dots,M_{\mathrm{DFT}} - 1; \\ x_1\left[nS_1 + \left\lfloor \frac{m}{M_{\mathrm{DFT}}/S_1} \right\rfloor - \frac{N}{S_2}, m \bmod \frac{M_{\mathrm{DFT}}}{S_1}\right], & n = n_0 + \frac{N}{S_2},\dots,N - 1; m = 0,\dots,M_{\mathrm{DFT}} - 1; \end{cases}$$

Operation 2-4) Transport Block Size of DFT-s-OFDM or CP-OFDM Applying Zero Power Resource

The transport block size of DFT-s-OFDM or CP-OFDM to which sparse resource mapping is applied may be calculated based on the MCS of the resources allocated in the TF domain and the zero power resource.

Option 1) The number of resource elements of the PDSCH or the PUSCH may be calculated by Formula 27 (see Non-Patent Literature 11). $N_{zero\text{-}power}^{RE}$ is the number of resource elements that are zero power resources. For example, $N_{zero\text{-}power}^{RE}$ may be calculated by Formula 28.

[Formula 27]

$$N'_{RE} = N_{sc}^{RB} \cdot N_{symb}^{sh} - N_{DMRS}^{PRB} - N_{oh}^{PRB} - N_{zero-power}^{RE}$$

[Formula 28]

$$N_{zero-power}^{RE} = \left(N_{sc}^{RB} \cdot N_{symb}^{sh} - N_{DMRS}^{PRB} - N_{oh}^{PRB}\right) \cdot \frac{1}{S_1 S_2}$$

Option 2) The definition of $N_{oh}^{PRB}$ may be updated considering zero power resources. (See Non-Patent Literature 11).

Option 3) Unquantized intermediate variable $N_{info}$ for PDSCH/PUSCH may be calculated by Formula 29 (see Non-Patent Literature 11).

[Formula 29]

$$N_{info} = N_{RE} \cdot R \cdot Q_m \cdot v \cdot (1 - \rho)$$

The unified transmitter configuration of operation 3) OTFS and OFDM is described below. A general transmitter for a system using DFT-s-OTFS or OTFS and DFT-s-OFDM or CP-OFDM may be configured as described below. The waveform configuration may be explicitly or implicitly indicated or defined by higher layer or physical layer signaling. For example, the UE may be indicated by broadcast parameters such as RRC signaling, MAC-CE, DCI, UCI, UE group common signaling, SIB, or MIB.

Operation 3-1) Transmitter Block Diagram

FIG. 50 is a drawing illustrating a configuration example (1) of a transmitter according to an embodiment of the present invention. The hybrid OTFS and OFDM system may perform pre-processing, then transform precoding, then virtual resource mapping, then DD domain shaping, then ISFFT, then data excision, then physical resource mapping, then IFFT, then CP insertion, as illustrated in FIG. 50.

Note that FIG. 50 may include processing related to the waveforms of CP-OFDM and DFT-s-OFDM of NR as in option 1 illustrated below. Note that transform precoding may be optionally set for DFT-s-OFDM or DFT-s-OTFS. Note that DD domain shaping may be optionally set for DFT-s-OTFS or OTFS. Note that the ISFFT may be optionally installed for the DFT-s-OTFS or the OTFS. It should be noted that the pre-processing and data excision may be optionally set in the DFT-s-OFDM.

FIG. 51 is a drawing illustrating a configuration example (2) of a transmitter according to an embodiment of the present invention. FIG. 51 illustrates an example of an OFDM family transmitter.

Option 1) A transmitter of NR DFT-s-OFDM or CP-OFDM. As illustrated in FIG. 51 (A), transform precoding is performed, then physical resource mapping is performed, then IFFT is performed, and then CP insertion is performed. Transform precoding may be optional in DFT-s-OFDM.

Option 2) A transmitter of DFT-s-OFDM. As illustrated in FIG. 51 (B), zero insertion and/or shaping is performed, then transform precoding is performed, then data excision is performed, then physical resource mapping is performed, then IFFT is performed, and then CP insertion is performed.

Option 3) A transmitter of CP-OFDM. As illustrated in FIG. 51 (C), virtual resource mapping is performed, then physical resource mapping is performed, then IFFT is performed, and then CP insertion is performed.

FIG. 52 is a drawing illustrating a configuration example (3) of a transmitter according to an embodiment of the present invention. FIG. 52 illustrates an example of an OTFS family transmitter.

Option 4) A transmitter of DFT-s-OTFS or OTFS. As illustrated in FIG. 52 (A), transform precoding is performed, then ISFFT is performed, then physical resource mapping is performed, then IFFT is performed, and then CP insertion is performed. Transform precoding may be optional in DFT-s-OTFS.

Option 5) A transmitter of DFT-s-OTFS or OTFS. As illustrated in FIG. 52 (B), transform precoding is performed, then virtual resource mapping is performed, then DD domain shaping is performed, then ISFFT is performed, then physical resource mapping is performed, then IFFT is performed, and then CP insertion is performed. Transform precoding may be optional in DFT-s-OTFS. The virtual resource mapping and the DD domain shaping may be performed separately or in combination.

Note that, as in operation 2-2 described above, a pre-processing module (e.g., DFT) before transform precoding may be included in zero insertion and/or delay domain shaping for DFT-s-OFDM.

Operation 3-2) Waveform Setting Method

The waveform in each operation described above may be explicitly or implicitly indicated or defined by higher layer or physical layer signaling. For example, the UE may be indicated by broadcast parameters such as RRC signaling, MAC-CE, DCI, UCI, UE group common signaling, SIB, or MIB.

Option 1) Waveforms may be selected and signaled from Option 1-Option 5 illustrated in operation 3-1.

Option 2) Waveforms may be defined and signaled by selecting modules to add to the default modules. A module used for the NR CP-OFDM may be a default module.

Operation 4) UE Capability

A UE capability indicating whether or not the proposed DFT-s-OTFS or OTFS, DFT-s-OFDM or CP-OFDM is supported may be defined.

Operation 4-1) A UE capability indicating whether or not to support transmission of the DFT-s-OTFS or the OTFS may be defined. Furthermore, a UE capability may be defined that explicitly or implicitly indicates whether or not the sparse resource mapping in the DD domain is supported.

Operation 4-2) A UE capability indicating whether to support the transmission of the proposed DFT-s-OFDM or CP-OFDM may be defined. Furthermore, a UE capability may be defined that explicitly or implicitly indicates whether or not the resource allocation of the OFDM-based waveform for coexistence with the OTFS-based waveform transmitted by another UE is supported.

Operation 4-3) The UE capabilities of operation 4-1 and operation 4-2 may be reported to the base station through UE capability signaling. For example, the UE capability may be indicated by RRC signaling, MAC-CE, or UCI.

FIG. 53 is a drawing illustrating an example (1) of multiple access according to an embodiment of the present invention. As illustrated in FIG. 53, the waveform of the NR DFT-s-OFDM in UE1 and the waveform of the NR DFT-s-OFDM in UE2 may be multiplexed and transmitted by the OMA.

FIG. 54 is a drawing illustrating an example (2) of multiple access according to an embodiment of the present invention. As illustrated in FIG. 54, as a hybrid scheme of the OTFS and the OFDM, the waveform of the DFT-s-OTFS without shaping in UE1 and the waveform of the new DFT-s-OFDM proposed in UE2 may be multiplexed and transmitted by the NOMA.

FIG. 55 is a drawing illustrating an example (3) of multiple access according to an embodiment of the present invention. As illustrated in FIG. 55, as the cell/UE-specific shaping scheme for OTFS, the waveform of DFT-s-OTFS shaping 1 in UE1 and the waveform of DFT-s-OTFS shaping 1 or 2 in UE2 may be multiplexed and transmitted by NOMA.

FIG. 56 is a drawing illustrating an example (4) of multiple access according to an embodiment of the present invention. As illustrated in FIG. 56, as a hybrid of OTFS and OFDM and a cell-specific shaping scheme for OTFS, a waveform of DFT-s-OTFS shaping 1 in UE1, a waveform of DFT-s-OTFS shaping 1 or 2 in UE2, and a waveform of new DFT-s-OFDM proposed in UE3 may be multiplexed and transmitted by NOMA.

According to the above-described embodiment, the terminal 20 is capable of multiplexing DFT-s-OTFS or OTFS with DFT-s-OFDM or CP-OFDM while reducing interference, thereby enabling efficient communication.

That is, in a wireless communication system, it becomes possible to multiplex signals using different waveforms.

(Apparatus Configuration)

Next, functional configuration examples of the base station 10 and the terminal 20 that execute the processes and operations described above will be described. The base station 10 and the terminal 20 include functions for implementing the above-described embodiments. However, each of the base station 10 and the terminal 20 may include only some of the functions in the embodiment.

<Base Station 10>

FIG. 57 is a drawing illustrating an example of a functional configuration of the base station 10 according to an embodiment of the present invention. As illustrated in FIG. 57, the base station 10 includes a transmission unit 110, a reception unit 120, a configuration unit 130, and a control unit 140. The functional configuration illustrated in FIG. 57 is merely an example. Any division of functions and any names of the functional units may be used, provided that the operation according to the embodiment of the present invention can be executed.

The transmission unit 110 includes a function of generating a signal to be transmitted to the terminal 20 side and wirelessly transmitting the signal. The transmission unit 110 transmits the inter-network-node message to another network node. The reception unit 120 includes a function of receiving various signals transmitted from the terminal 20 and acquiring, for example, information of a higher layer from the received signal. The transmission unit 110 has a function of transmitting the NR-PSS, the NR-SSS, the NR-PBCH, the DL/UL control signal, and the like to the terminal 20. The reception unit 120 receives an inter-network-node message from another network node.

The configuration unit 130 stores configuration information set in advance and various types of configuration information to be transmitted to the terminal 20. The content of the configuration information is, for example, information related to a channel bandwidth, a waveform, and/or a subcarrier spacing.

The control unit 140 performs control to implement the functions described in the embodiments. Furthermore, as described in the embodiments, the control unit 140 performs control related to the channel bandwidth, the waveform, and/or the subcarrier spacing. The functional unit related to signal transmission in the control unit 140 may be included in the transmission unit 110, and the functional unit related to signal reception in the control unit 140 may be included in the reception unit 120.

<Terminal 20>

FIG. 58 is a drawing illustrating an example of a functional configuration of the terminal 20 according to an embodiment of the present invention. As illustrated in FIG. 58, the terminal 20 includes a transmission unit 210, a reception unit 220, a configuration unit 230, and a control unit 240. The functional configuration illustrated in FIG. 58 is merely an example. Any division of functions and any names of the functional units may be used, provided that the operation according to the embodiment of the present invention can be executed.

The transmission unit 210 generates a transmission signal from transmission data and wirelessly transmits the transmission signal. The reception unit 220 wirelessly receives various signals and acquires a signal of a higher layer from the received signal of the physical layer. The reception unit 220 has a function of receiving the NR-PSS, the NR-SSS, the NR-PBCH, the DL/UL/SL control signal, and the like transmitted from the base station 10. For example, the transmission unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminals 20 as the D2D communication, and the reception unit 220 receives the PSCCH, the PSSCH, the PSDCH, the PSBCH, or the like from the other terminals 20.

The configuration unit 230 stores various types of configuration information received from the base station 10 by the reception unit 220. The configuration unit 230 also stores configuration information that is configured in advance. The content of the configuration information is, for example, information related to a channel bandwidth, a waveform, and/or a subcarrier spacing.

The control unit 240 performs control to implement the functions described in the embodiments. Furthermore, as described in the embodiments, the control unit 240 performs control related to the channel bandwidth, the waveform, and/or the subcarrier spacing. The functional unit related to signal transmission in the control unit 240 may be included in the transmission unit 210, and the functional unit related to signal reception in the control unit 240 may be included in the reception unit 220.

(Hardware structure)

The block diagrams that have been used to describe the above embodiments (FIG. 57 and FIG. 58) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

For example, the base station 10, the terminal 20, etc., according to an embodiment of the present disclosure may function as a computer for processing the radio communication method of the present disclosure. FIG. 59 is a diagram to show an example of a hardware structure of the base station 10 and the terminal 20 according to one embodiment. Physically, the above-described base station 10 and the terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses illustrated in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in FIG. 57 may be implemented by control programs that are stored in the memory 1002 and that operate on the processor 1001. In addition, for example, the control unit 240 of the terminal 20 illustrated in FIG. 58 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

FIG. 13 illustrates an example of a configuration of a vehicle 2001. As illustrated in FIG. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver’s operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, etc., mounted in the vehicle 2001.

(Summary of Embodiment)

As described above, according to the embodiments of the present invention, a transmitter is provided. The transmitter includes:

a control unit configured to allocate zero power resources in a first signal in a time-frequency domain; and
a transmission unit configured to non-orthogonally multiplex the first signal and a second signal and transmit the multiplexed signal,
wherein the transmission unit is configured to transmit, in the resources in which the zero power resources are allocated, all of at least one repeated transmission among a plurality of repeated transmissions included in the second signal.

With the above configuration, the transmitter can multiplex DFT-s-OTFS or OTFS with DFT-s-OFDM or CP-OFDM while reducing interference, thereby enabling efficient communication. That is, in a wireless communication system, signals using different waveforms can be multiplexed.

The first signal may be a signal to which discrete fourier transform spread orthogonal frequency division multiplexing (DFT-s-OFDM) is applied, and the second signal may be a signal to which discrete fourier transform spread orthogonal time frequency space modulation (DFT-s-OTFS) or OTFS is applied. With this configuration, the transmitter can multiplex DFT-s-OTFS or OTFS with DFT-s-OFDM or CP-OFDM while reducing interference, thereby enabling efficient communication.

The control unit may allocate the zero power resources in the first signal by zero insertion before discrete fourier transform (DFT) processing and data excision after the DFT processing. With this configuration, the transmitter can multiplex DFT-s-OTFS or OTFS with DFT-s-OFDM or CP-OFDM while reducing interference, thereby enabling efficient communication.

The control unit may allocate the zero power resources in the first signal by virtual resource mapping. With this configuration, the transmitter can multiplex DFT-s-OTFS or OTFS with DFT-s-OFDM or CP-OFDM while reducing interference, thereby enabling efficient communication.

The control unit may perform a plurality of discrete fourier transform (DFT) processes of different sizes on the first signal. With this configuration, the transmitter can multiplex DFT-s-OTFS or OTFS with DFT-s-OFDM or CP-OFDM while reducing interference, thereby enabling efficient communication.

According to an embodiment of the present invention, a transmission method executed by a transmitter is provided. The transmission method includes:

a step of allocating zero power resources in a first signal in a time-frequency domain;
a step of non-orthogonally multiplexing the first signal and a second signal and transmitting the multiplexed signal; and
a step of transmitting, in the resources in which the zero power resources are allocated, all of at least one repeated transmission among a plurality of repeated transmissions included in the second signal.

With the above configuration, the transmitter can multiplex DFT-s-OTFS or OTFS and DFT-s-OFDM or CP-OFDM while reducing interference, thereby enabling efficient communication. That is, in a wireless communication system, it becomes possible to multiplex signals using different waveforms.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system(6G), xth generation mobile communication system (xG)(xG (x is, for example, an integer or a decimal)), FRA(Future Radio Access), NR(new Radio), New radio access(NX), Future generation radio access (FX), FRA (Future Radio Access), NR (new Radio), New radio access(NX), Future generation radio access(FX), W-CDMA (registered trademark), GSM (registered trademark), $CDMA_2000$, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system extended, modified, created or defined based thereon. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a UE, one or more BWPs may be configured in one carrier.

At least one of the configured BWPs may be activated, and the UE may assume that the UE will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Power transmission apparatus
40 Core network
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Rotational speed sensor
2023 Air pressure sensor
2024 Vehicle speed sensor
2025 Acceleration sensor
2026 Brake pedal sensor

2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A transmitter comprising:

   a control unit configured to allocate zero power resources in a first signal in a time-frequency domain; and
   a transmission unit configured to non-orthogonally multiplex the first signal and a second signal and transmit the multiplexed signal,
   wherein the transmission unit is configured to transmit, in the resources in which the zero power resources are allocated, all of at least one repeated transmission among a plurality of repeated transmissions included in the second signal.

2. The transmitter according to claim 1, wherein the first signal is a signal to which discrete fourier transform spread orthogonal frequency division multiplexing (DFT-s-OFDM) is applied, and the second signal is a signal to which discrete fourier transform spread orthogonal time frequency space modulation (DFT-s-OTFS) or OTFS is applied.

3. The transmitter according to claim 1, wherein the control unit allocates the zero power resources in the first signal by zero insertion before discrete fourier transform (DFT) processing and data excision after the DFT processing.

4. The transmitter according to claim 1, wherein the control unit allocates the zero power resources in the first signal by virtual resource mapping.

5. The transmitter according to claim 1, wherein the control unit performs a plurality of discrete fourier transform (DFT) processes of different sizes on the first signal.

6. A transmission method executed by a transmitter, comprising:

   a step of allocating zero power resources in a first signal in a time-frequency domain;
   a step of non-orthogonally multiplexing the first signal and a second signal and transmitting the multiplexed signal; and
   a step of transmitting, in the resources in which the zero power resources are allocated, all of at least one repeated transmission among a plurality of repeated transmissions included in the second signal.

FIG.1

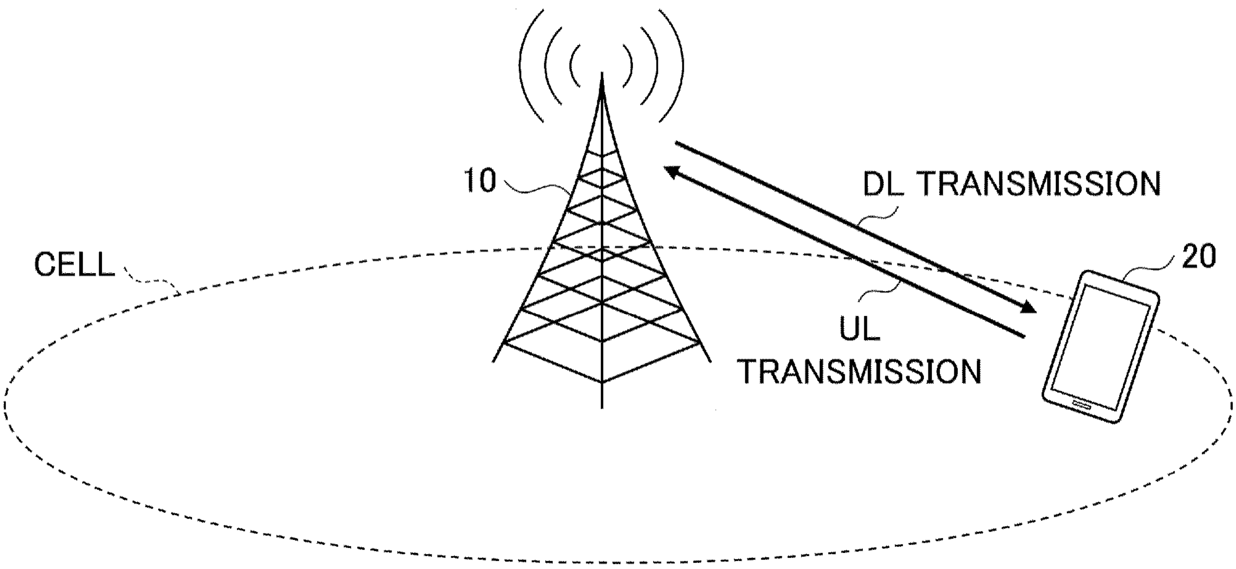

FIG.2

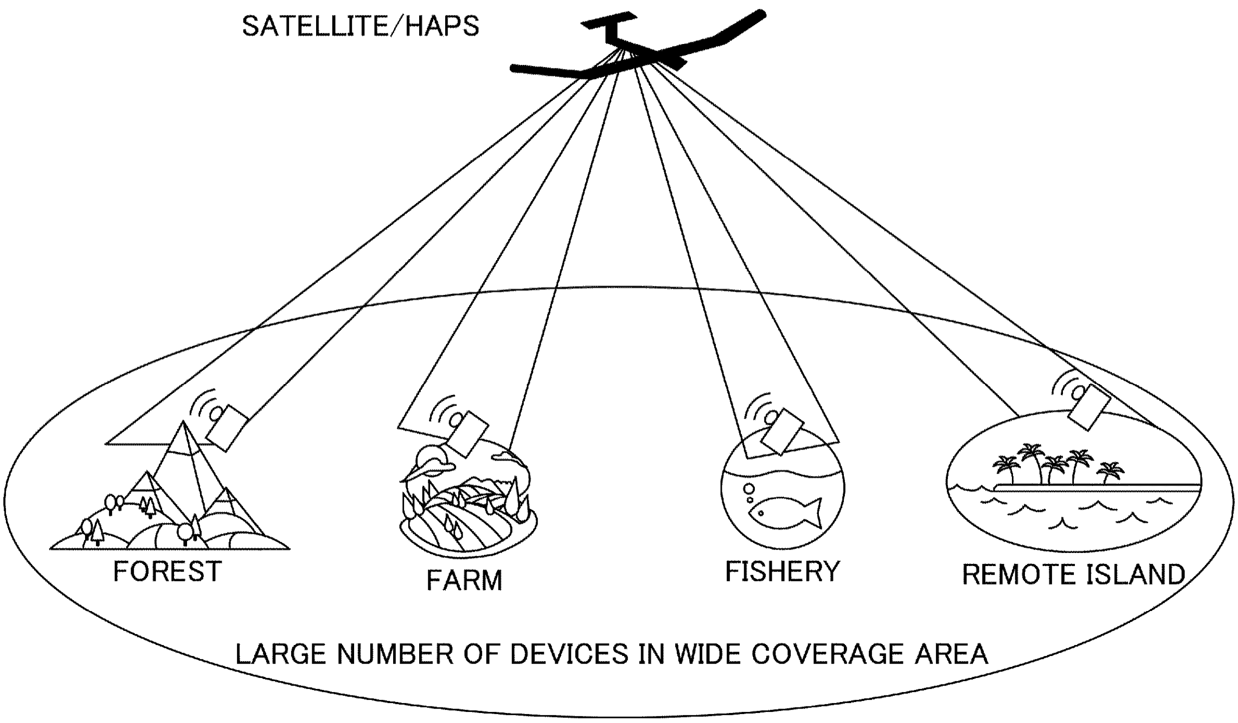
SATELLITE/HAPS
FOREST
FARM
FISHERY
REMOTE ISLAND
LARGE NUMBER OF DEVICES IN WIDE COVERAGE AREA

FIG.3

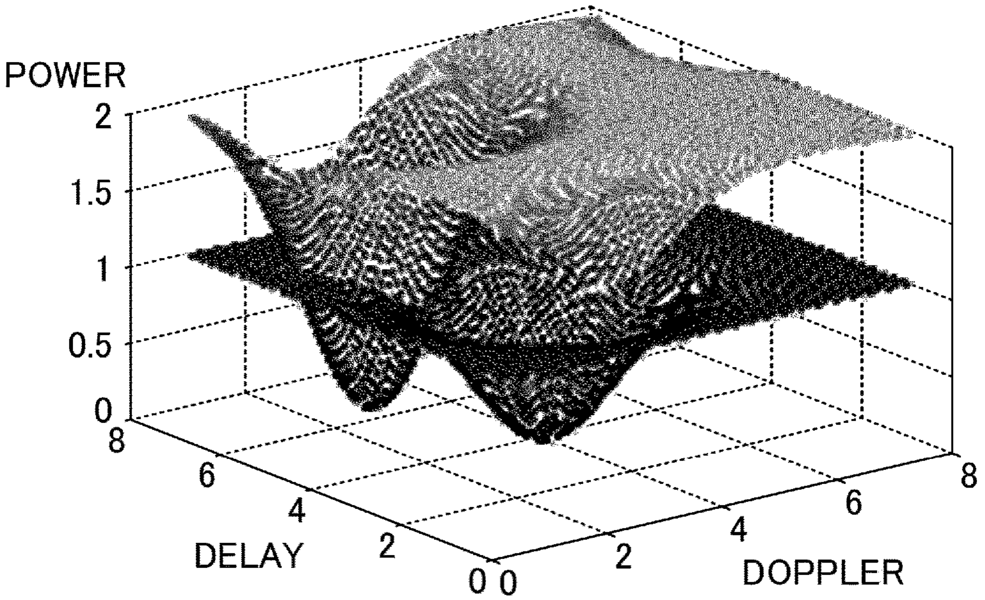
POWER
2
1.5
1
0.5
0
8
6
4
DELAY
2
0 0
2
4
6
8
DOPPLER

FIG.4

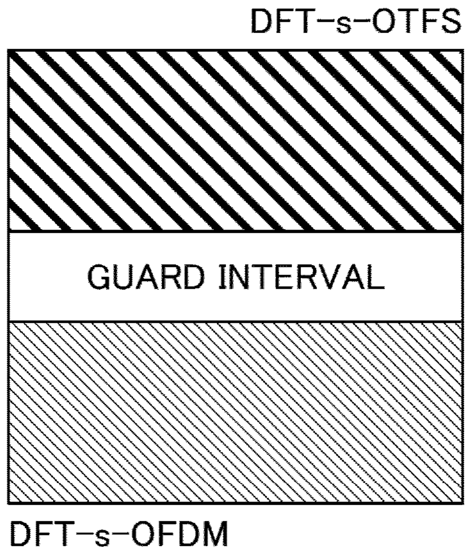
DFT-s-OTFS
GUARD INTERVAL
DFT-s-OFDM

FIG.5

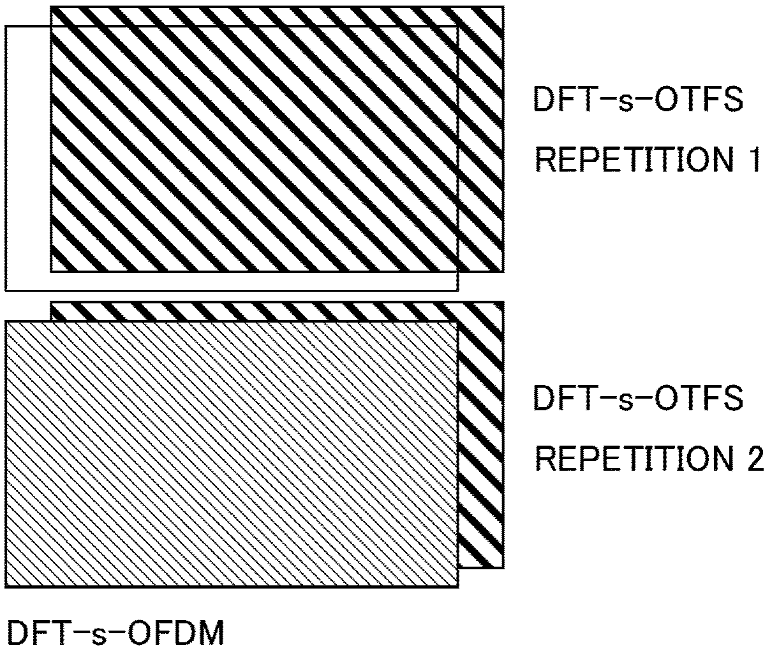

FIG.6

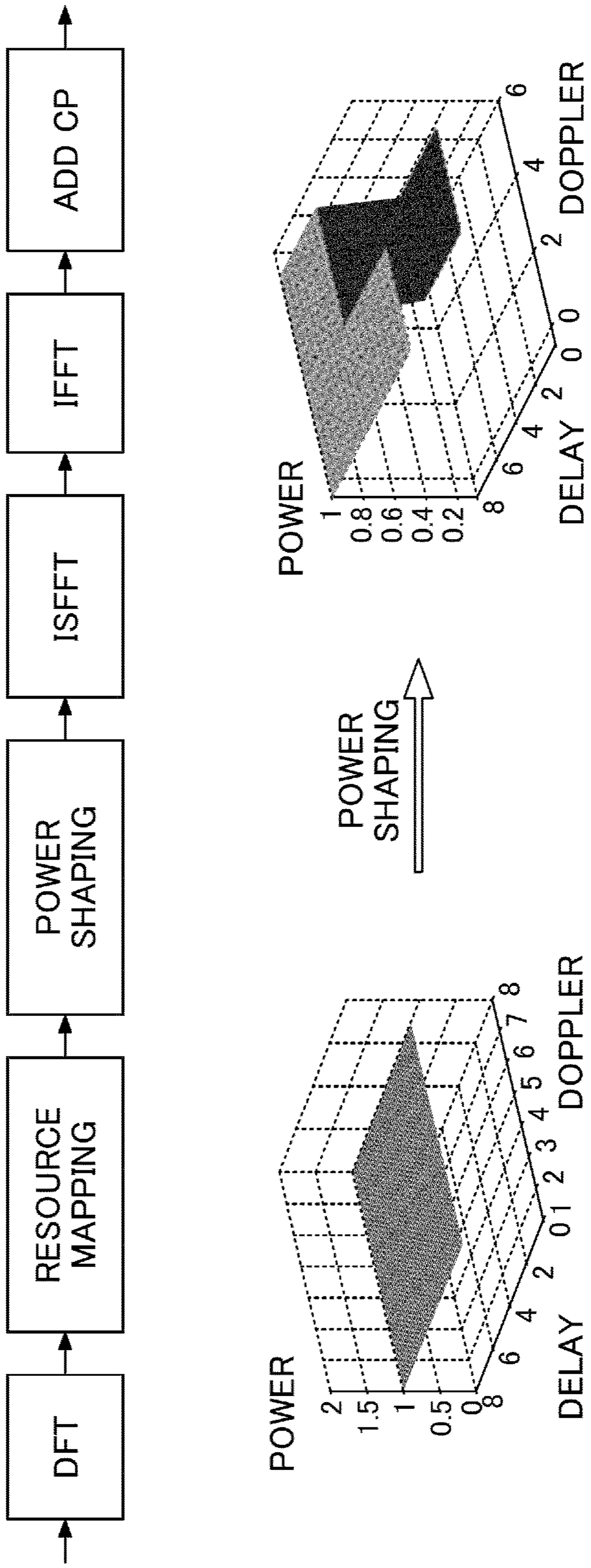
DFT
RESOURCE MAPPING
POWER SHAPING
ISFFT
IFFT
ADD CP
POWER
2
1.5
1
0.5
0
DELAY
8
6
4
2
0
1
2
3
4
5
6
7
8
DOPPLER
POWER SHAPING
POWER
1
0.8
0.6
0.4
0.2
DELAY
8
6
4
2
0
0
2
4
6
DOPPLER

FIG.7

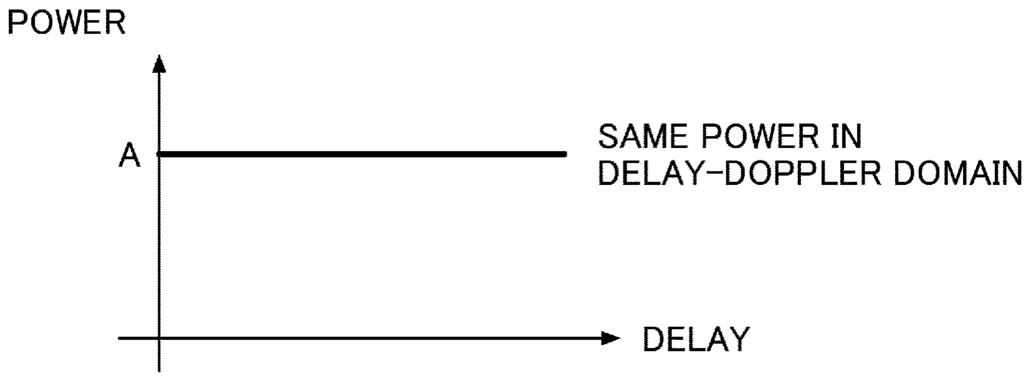


FIG.8

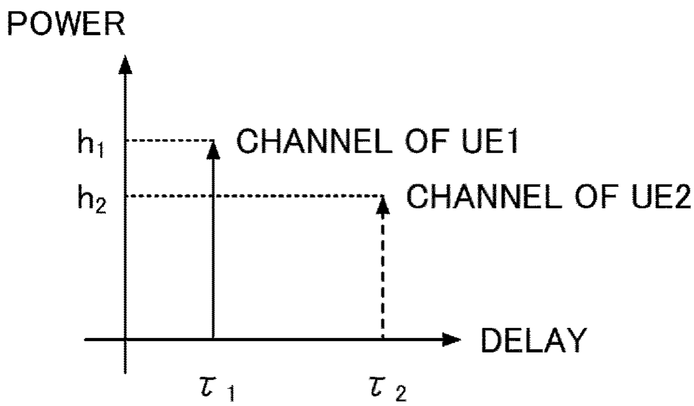


FIG.9

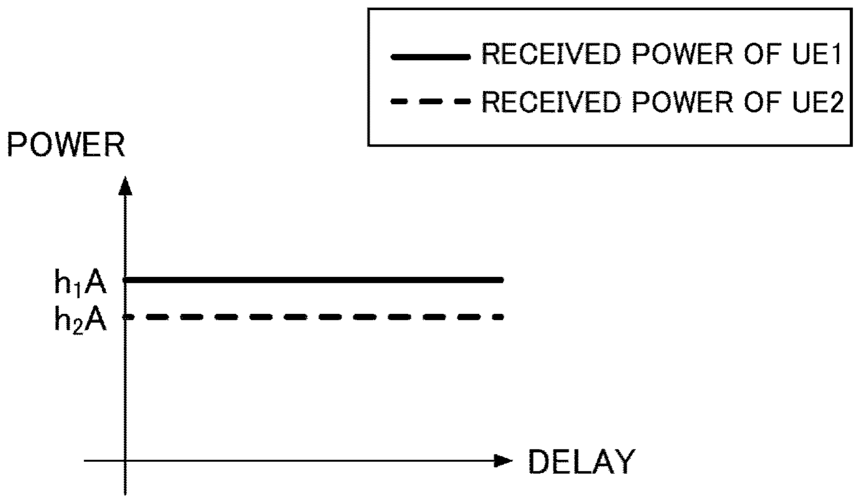

FIG.10

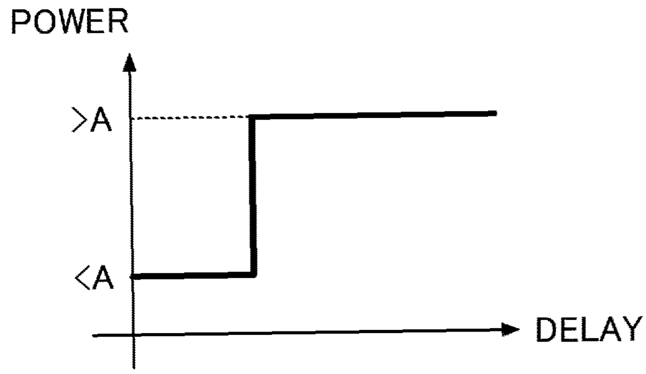


FIG.11

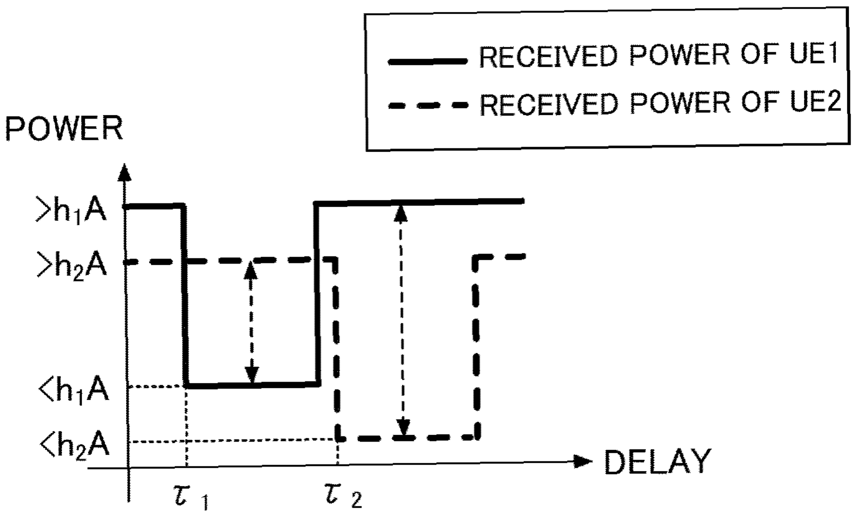


FIG.12

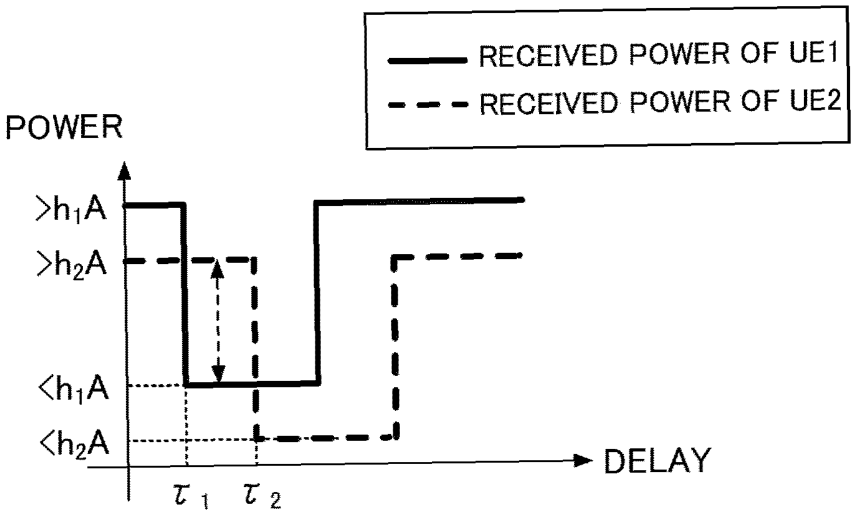

FIG.13

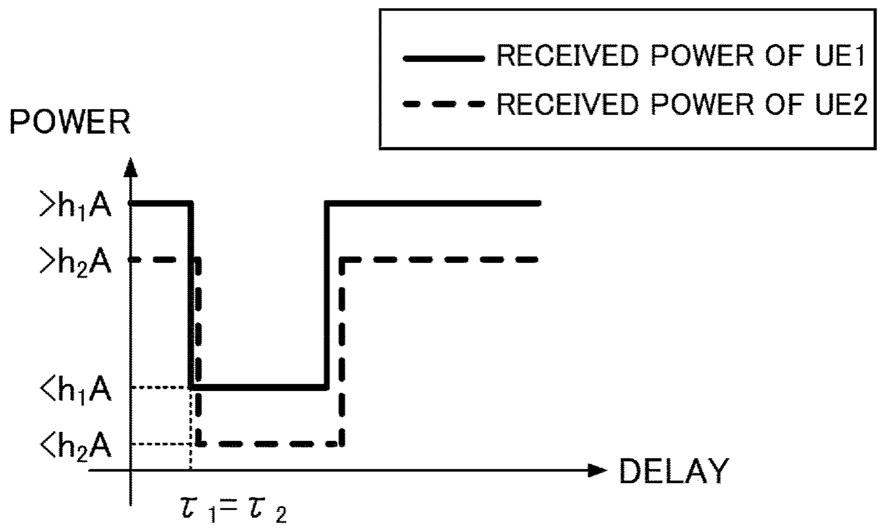
RECEIVED POWER OF UE1
RECEIVED POWER OF UE2
POWER
>h1A
>h2A
<h1A
<h2A
DELAY
τ 1= τ 2

FIG.14

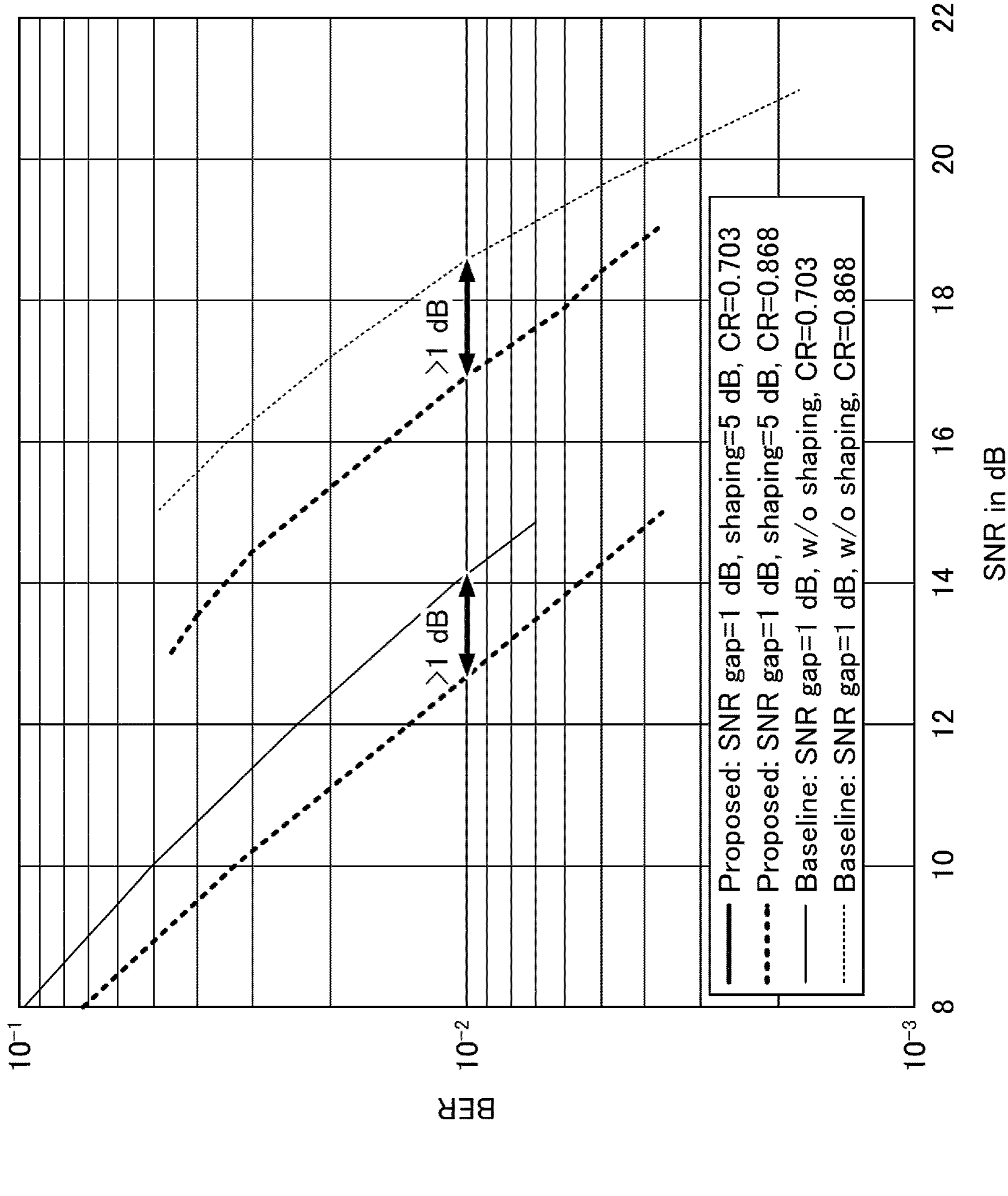
BER
$10^{-1}$
$10^{-2}$
$10^{-3}$
8
10
12
14
16
18
20
22
SNR in dB
>1 dB
>1 dB
Proposed: SNR gap=1 dB, shaping=5 dB, CR=0.703
Proposed: SNR gap=1 dB, shaping=5 dB, CR=0.868
Baseline: SNR gap=1 dB, w/o shaping, CR=0.703
Baseline: SNR gap=1 dB, w/o shaping, CR=0.868

FIG.15

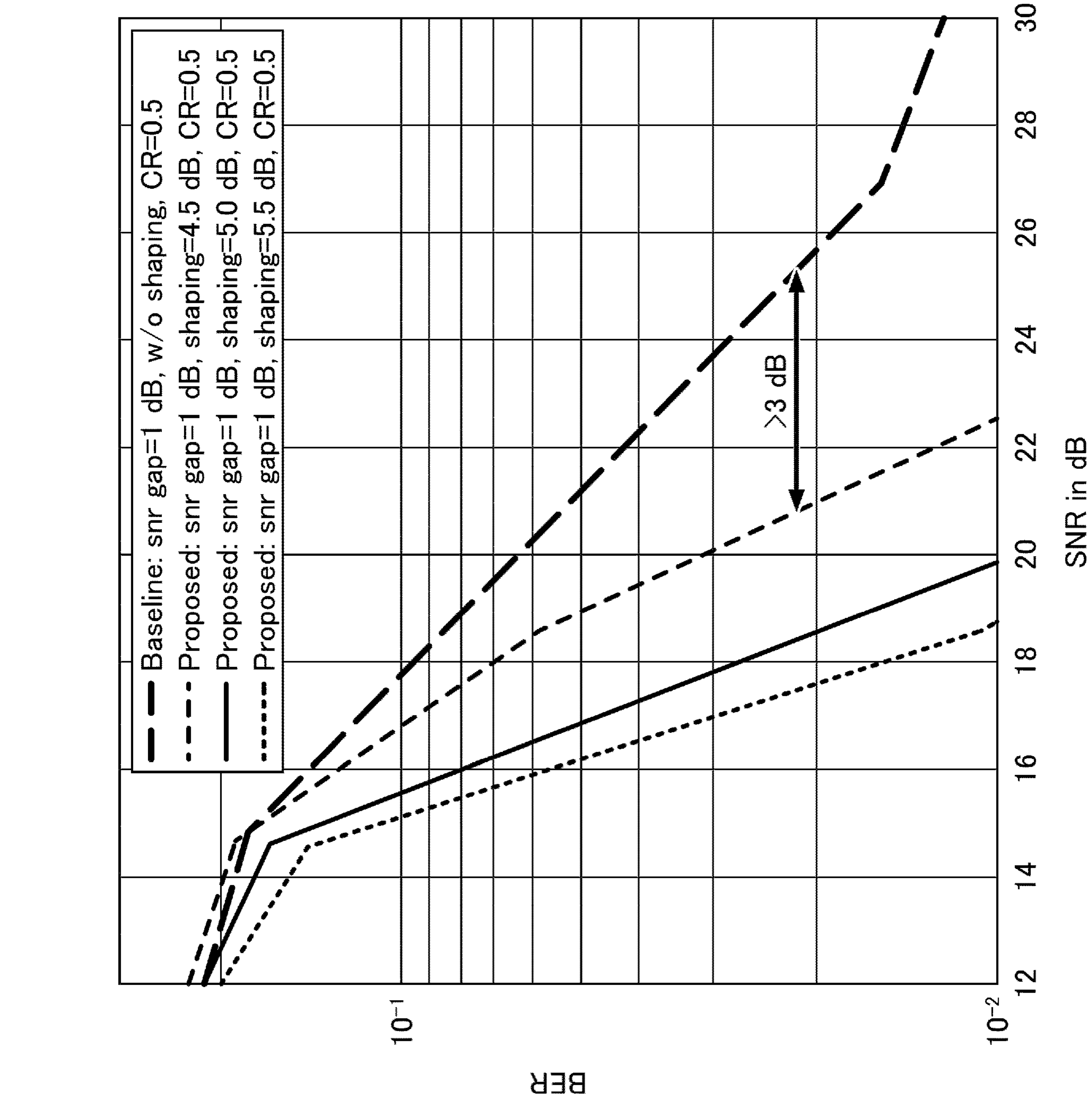
Baseline: snr gap=1 dB, w/o shaping, CR=0.5
Proposed: snr gap=1 dB, shaping=4.5 dB, CR=0.5
Proposed: snr gap=1 dB, shaping=5.0 dB, CR=0.5
Proposed: snr gap=1 dB, shaping=5.5 dB, CR=0.5
>3 dB
BER
$10^{-1}$
$10^{-2}$
12
14
16
18
20
22
24
26
28
30
SNR in dB

FIG.16

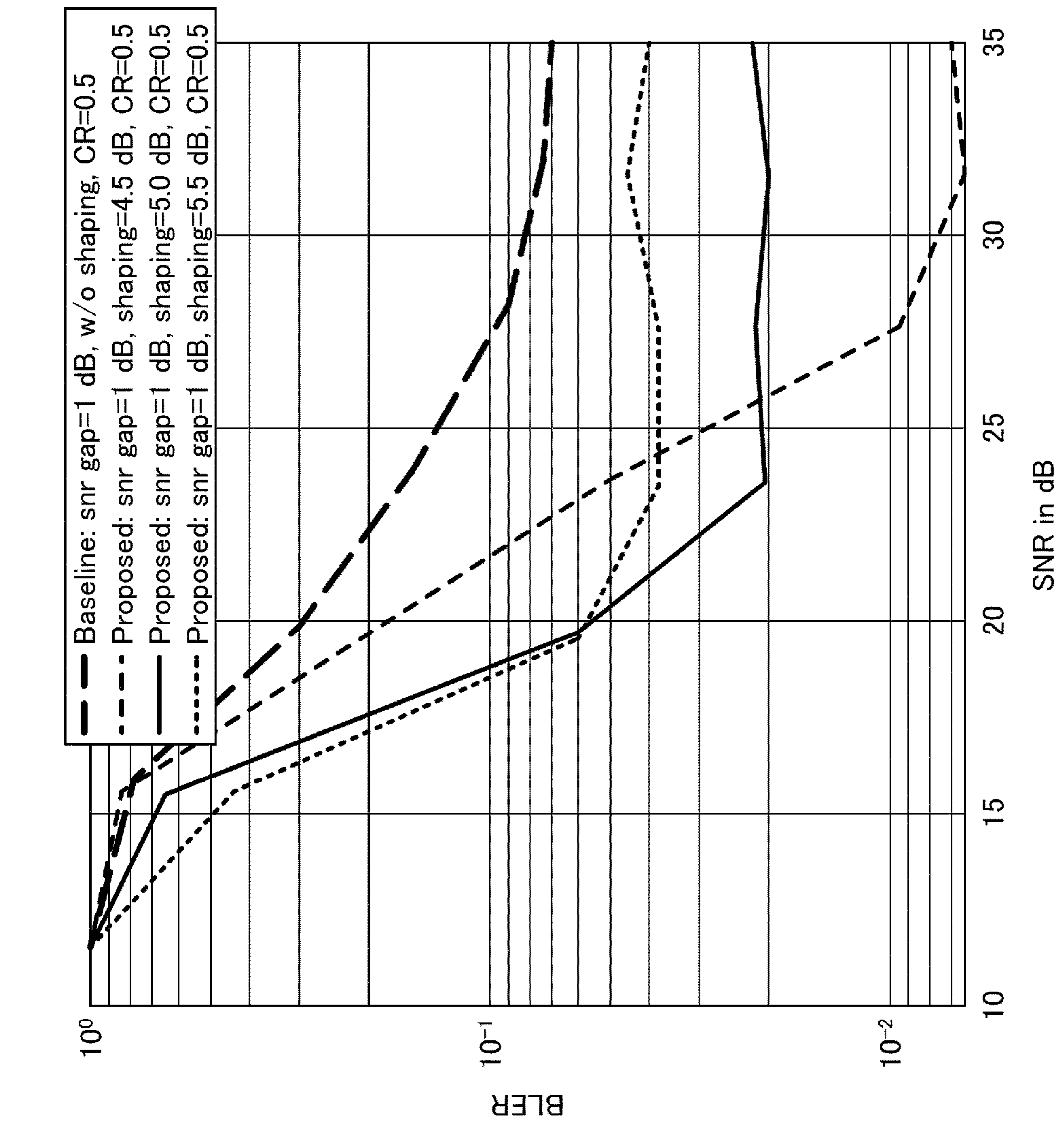
Baseline: snr gap=1 dB, w/o shaping, CR=0.5
Proposed: snr gap=1 dB, shaping=4.5 dB, CR=0.5
Proposed: snr gap=1 dB, shaping=5.0 dB, CR=0.5
Proposed: snr gap=1 dB, shaping=5.5 dB, CR=0.5
BLER
$10^0$
$10^{-1}$
$10^{-2}$
10
15
20
25
30
35
SNR in dB

FIG.17

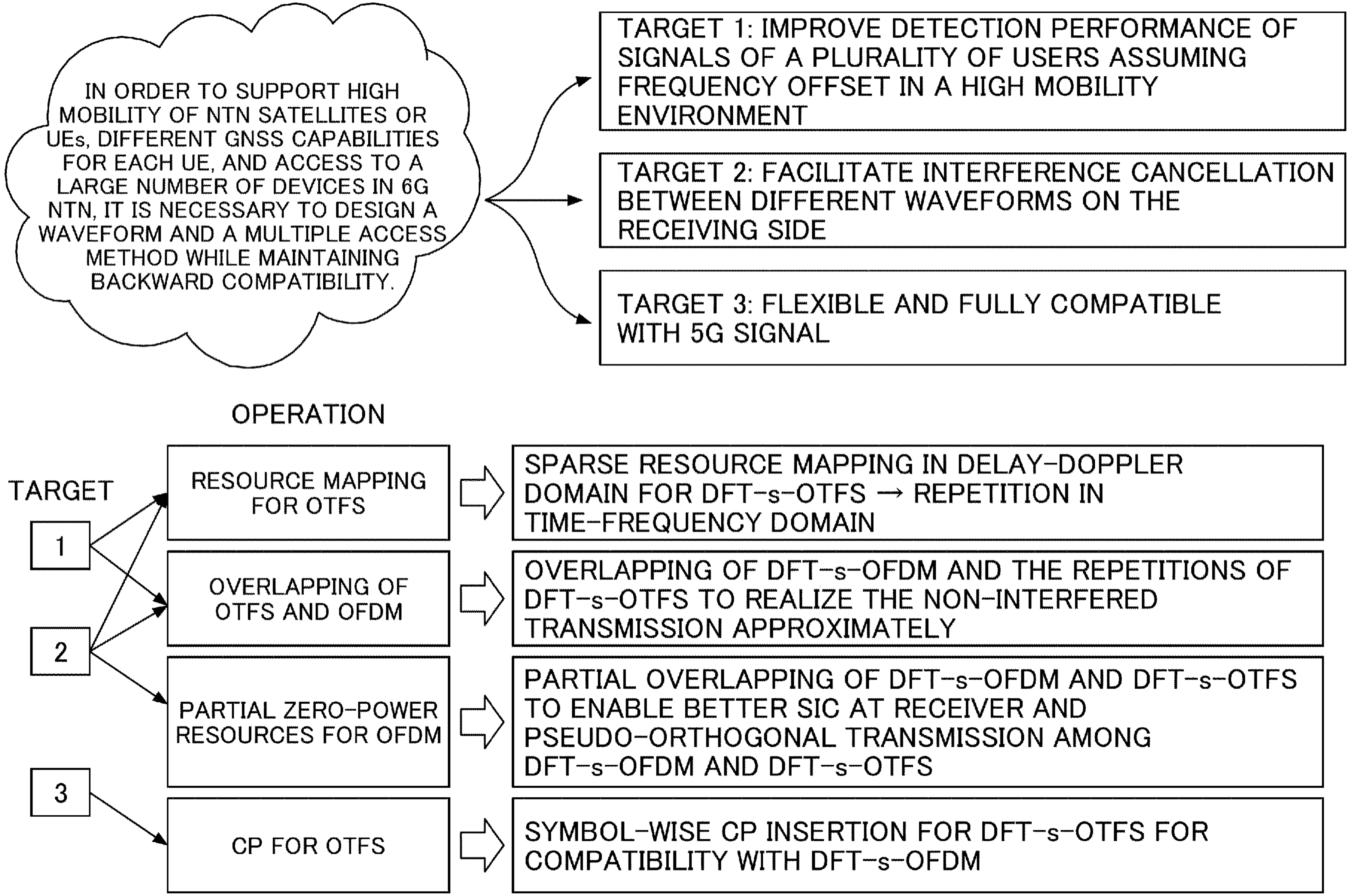
IN ORDER TO SUPPORT HIGH MOBILITY OF NTN SATELLITES OR UEs, DIFFERENT GNSS CAPABILITIES FOR EACH UE, AND ACCESS TO A LARGE NUMBER OF DEVICES IN 6G NTN, IT IS NECESSARY TO DESIGN A WAVEFORM AND A MULTIPLE ACCESS METHOD WHILE MAINTAINING BACKWARD COMPATIBILITY.
TARGET 1: IMPROVE DETECTION PERFORMANCE OF SIGNALS OF A PLURALITY OF USERS ASSUMING FREQUENCY OFFSET IN A HIGH MOBILITY ENVIRONMENT
TARGET 2: FACILITATE INTERFERENCE CANCELLATION BETWEEN DIFFERENT WAVEFORMS ON THE RECEIVING SIDE
TARGET 3: FLEXIBLE AND FULLY COMPATIBLE WITH 5G SIGNAL
OPERATION
TARGET
1
2
3
RESOURCE MAPPING FOR OTFS
OVERLAPPING OF OTFS AND OFDM
PARTIAL ZERO-POWER RESOURCES FOR OFDM
CP FOR OTFS
SPARSE RESOURCE MAPPING IN DELAY-DOPPLER DOMAIN FOR DFT-s-OTFS → REPETITION IN TIME-FREQUENCY DOMAIN
OVERLAPPING OF DFT-s-OFDM AND THE REPETITIONS OF DFT-s-OTFS TO REALIZE THE NON-INTERFERED TRANSMISSION APPROXIMATELY
PARTIAL OVERLAPPING OF DFT-s-OFDM AND DFT-s-OTFS TO ENABLE BETTER SIC AT RECEIVER AND PSEUDO-ORTHOGONAL TRANSMISSION AMONG DFT-s-OFDM AND DFT-s-OTFS
SYMBOL-WISE CP INSERTION FOR DFT-s-OTFS FOR COMPATIBILITY WITH DFT-s-OFDM

FIG.18

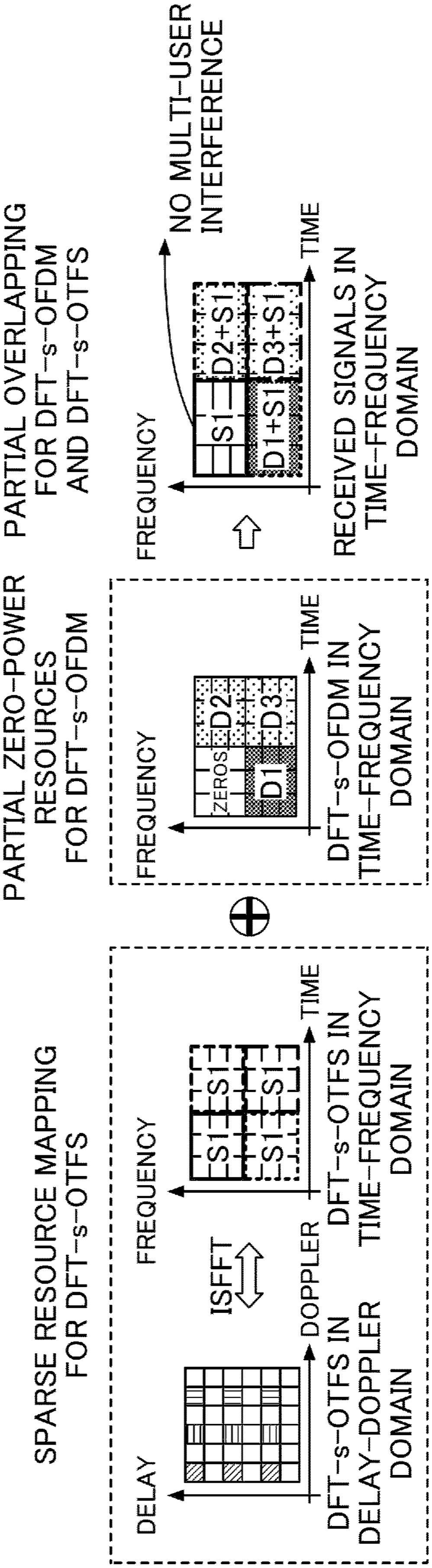
SPARSE RESOURCE MAPPING FOR DFT-s-OTFS
DELAY
DOPPLER
DFT-s-OTFS IN DELAY-DOPPLER DOMAIN
ISFFT
FREQUENCY
TIME
S1
DFT-s-OTFS IN TIME-FREQUENCY DOMAIN
PARTIAL ZERO-POWER RESOURCES FOR DFT-s-OFDM
ZEROS
D1
D2
D3
DFT-s-OFDM IN TIME-FREQUENCY DOMAIN
PARTIAL OVERLAPPING FOR DFT-s-OFDM AND DFT-s-OTFS
D1+S1
D2+S1
D3+S1
NO MULTI-USER INTERFERENCE
RECEIVED SIGNALS IN TIME-FREQUENCY DOMAIN

FIG.19

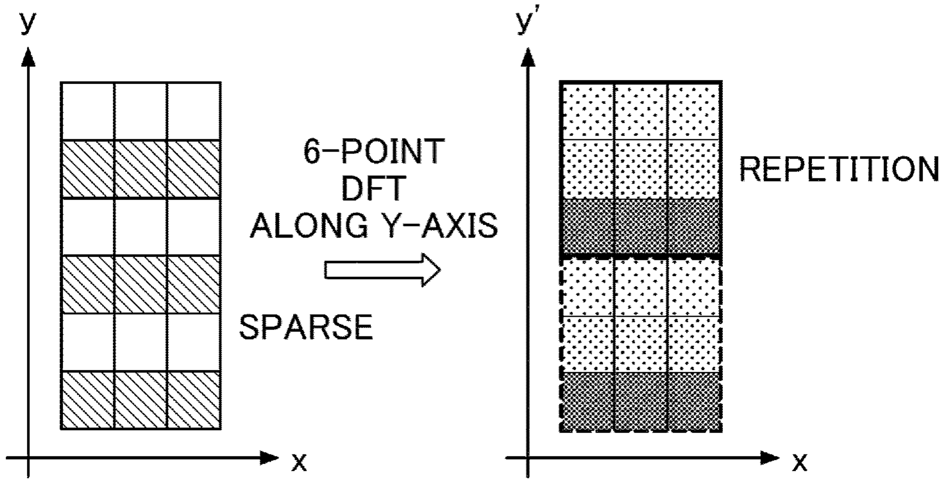

FIG.20

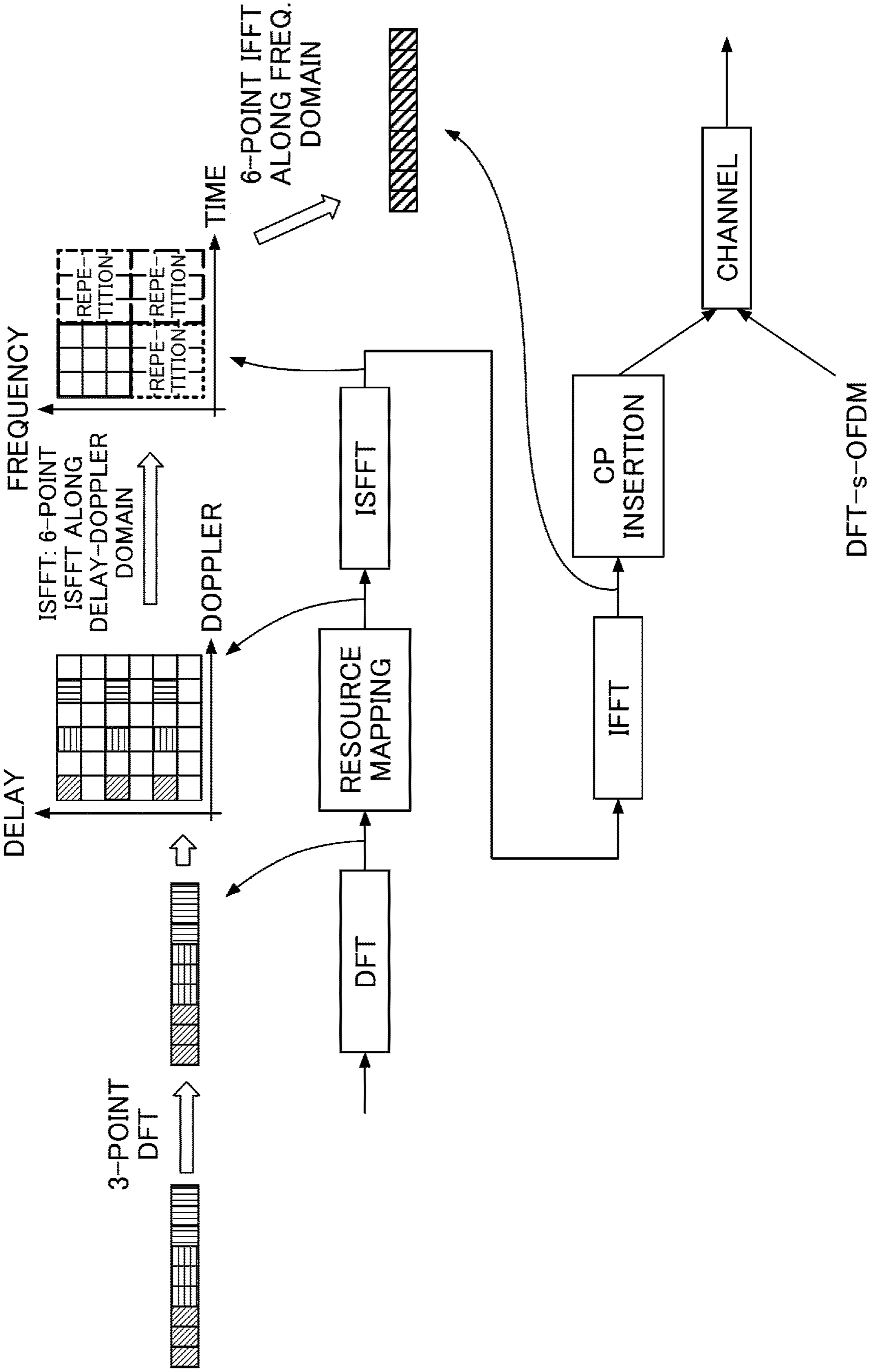
3-POINT DFT
DELAY
DOPPLER
ISFFT: 6-POINT ISFFT ALONG DELAY-DOPPLER DOMAIN
FREQUENCY
TIME
REPE-TITION
REPE-TITION
REPE-TITION
6-POINT IFFT ALONG FREQ. DOMAIN
DFT
RESOURCE MAPPING
ISFFT
IFFT
CP INSERTION
CHANNEL
DFT-s-OFDM

FIG.21

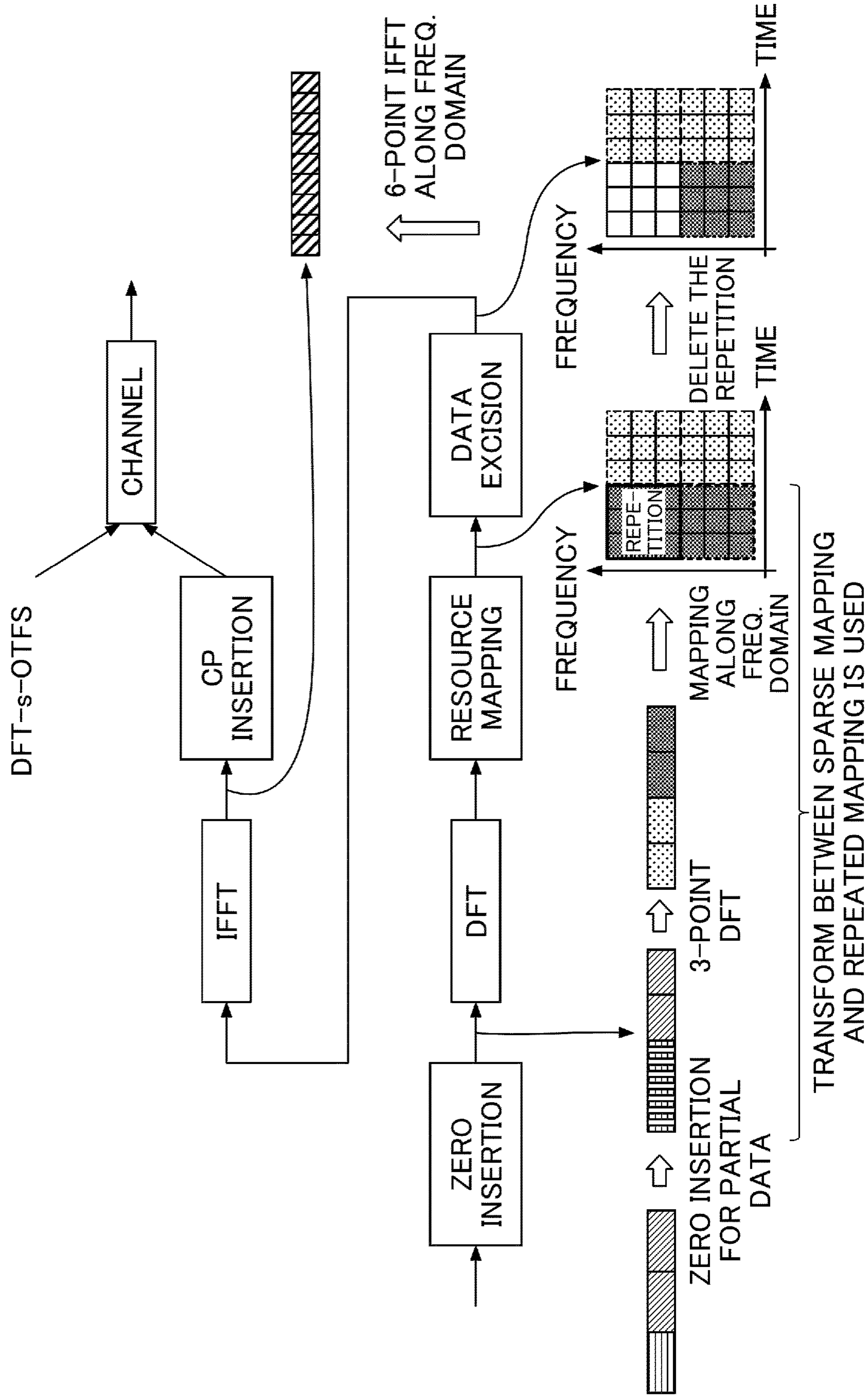
DFT-s-OTFS
CHANNEL
CP INSERTION
IFFT
ZERO INSERTION
DFT
RESOURCE MAPPING
DATA EXCISION
6-POINT IFFT ALONG FREQ. DOMAIN
FREQUENCY
TIME
REPE-TITION
DELETE THE REPETITION
ZERO INSERTION FOR PARTIAL DATA
3-POINT DFT
MAPPING ALONG FREQ. DOMAIN
TRANSFORM BETWEEN SPARSE MAPPING AND REPEATED MAPPING IS USED

FIG.22

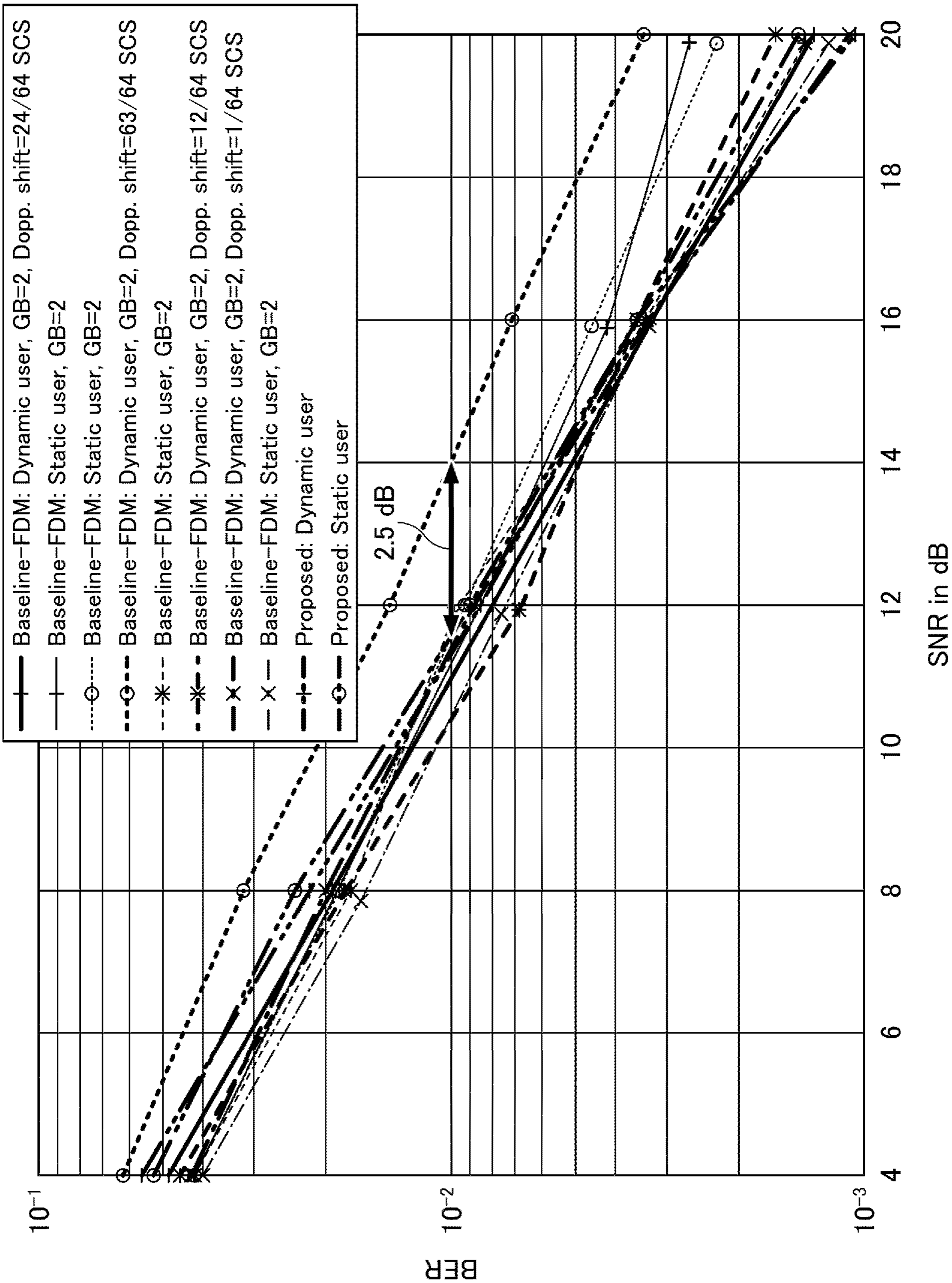
Baseline-FDM: Dynamic user, GB=2, Dopp. shift=24/64 SCS
Baseline-FDM: Static user, GB=2
Baseline-FDM: Static user, GB=2
Baseline-FDM: Dynamic user, GB=2, Dopp. shift=63/64 SCS
Baseline-FDM: Static user, GB=2
Baseline-FDM: Dynamic user, GB=2, Dopp. shift=12/64 SCS
Baseline-FDM: Dynamic user, GB=2, Dopp. shift=1/64 SCS
Baseline-FDM: Static user, GB=2
Proposed: Dynamic user
Proposed: Static user
2.5 dB
BER
$10^{-1}$
$10^{-2}$
$10^{-3}$
4
6
8
10
12
14
16
18
20
SNR in dB

FIG.23

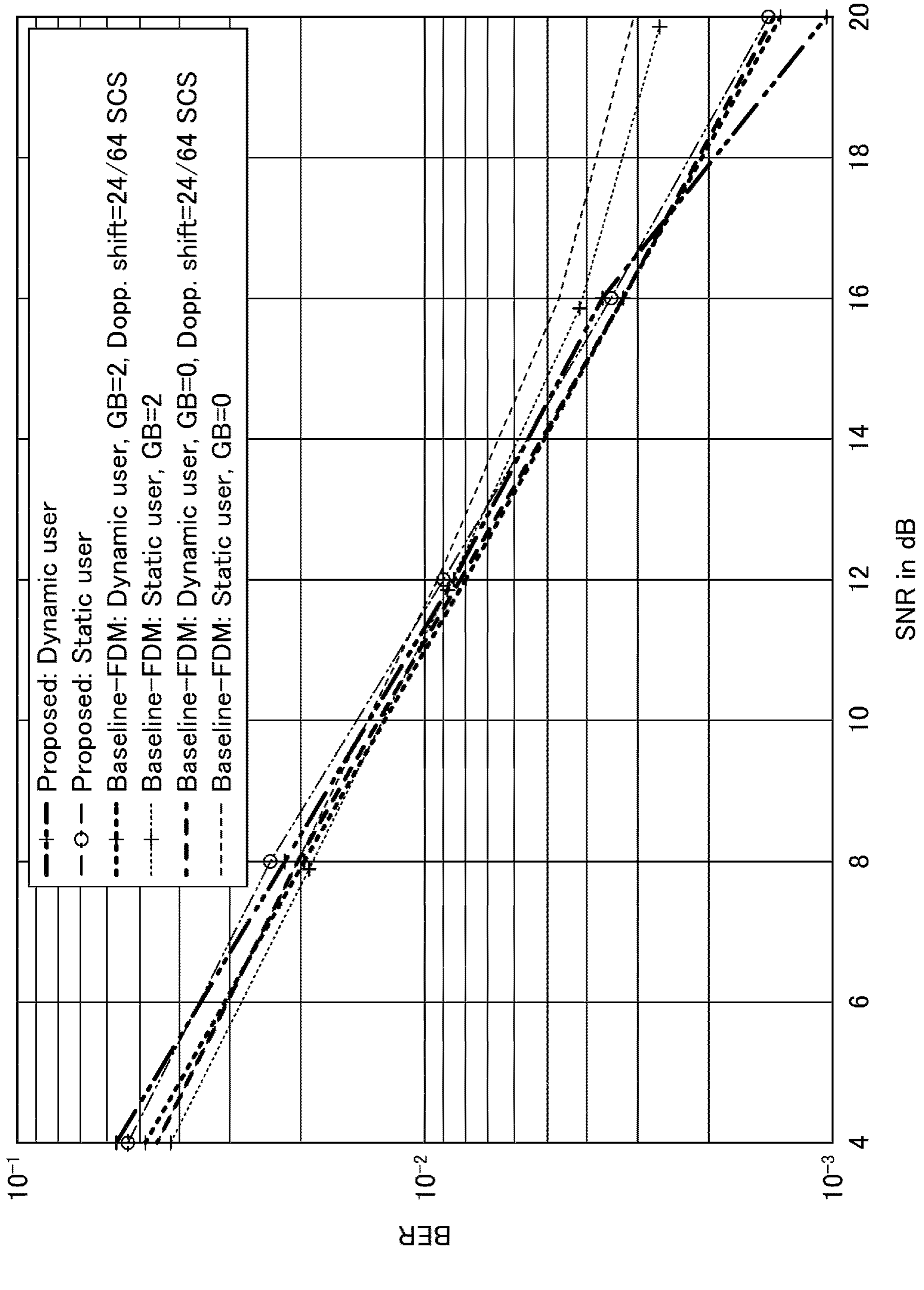
Proposed: Dynamic user
Proposed: Static user
Baseline-FDM: Dynamic user, GB=2, Dopp. shift=24/64 SCS
Baseline-FDM: Static user, GB=2
Baseline-FDM: Dynamic user, GB=0, Dopp. shift=24/64 SCS
Baseline-FDM: Static user, GB=0
BER
$10^{-1}$
$10^{-2}$
$10^{-3}$
4
6
8
10
12
14
16
18
20
SNR in dB

FIG.24

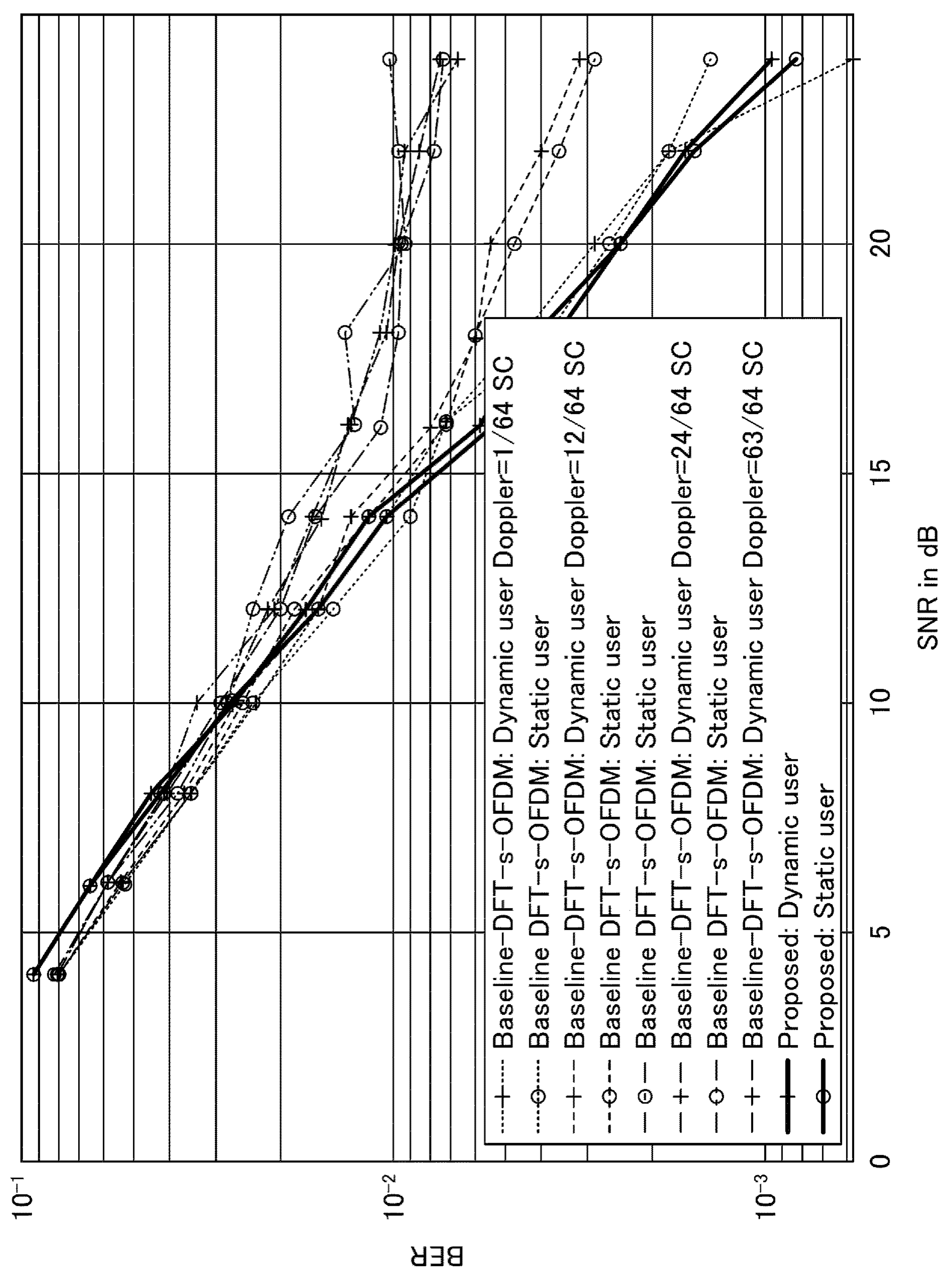
BER
$10^{-1}$
$10^{-2}$
$10^{-3}$
0
5
10
15
20
SNR in dB
Baseline-DFT-s-OFDM: Dynamic user Doppler=1/64 SC
Baseline DFT-s-OFDM: Static user
Baseline-DFT-s-OFDM: Dynamic user Doppler=12/64 SC
Baseline DFT-s-OFDM: Static user
Baseline DFT-s-OFDM: Static user
Baseline-DFT-s-OFDM: Dynamic user Doppler=24/64 SC
Baseline DFT-s-OFDM: Static user
Baseline-DFT-s-OFDM: Dynamic user Doppler=63/64 SC
Proposed: Dynamic user
Proposed: Static user

FIG.25

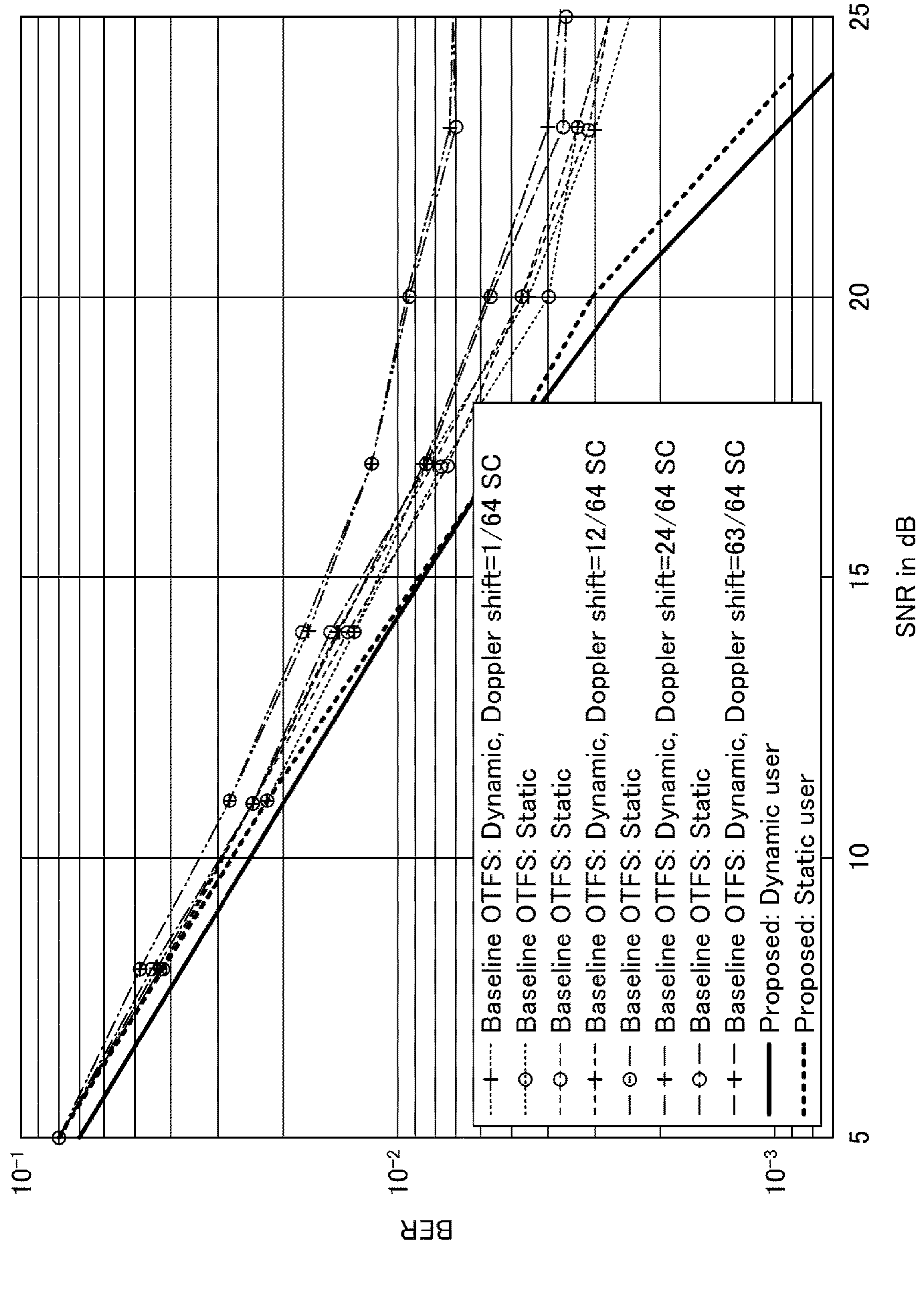
BER
SNR in dB
$10^{-1}$
$10^{-2}$
$10^{-3}$
5
10
15
20
25
Baseline OTFS: Dynamic, Doppler shift=1/64 SC
Baseline OTFS: Static
Baseline OTFS: Static
Baseline OTFS: Dynamic, Doppler shift=12/64 SC
Baseline OTFS: Static
Baseline OTFS: Dynamic, Doppler shift=24/64 SC
Baseline OTFS: Static
Baseline OTFS: Dynamic, Doppler shift=63/64 SC
Proposed: Dynamic user
Proposed: Static user

FIG.26

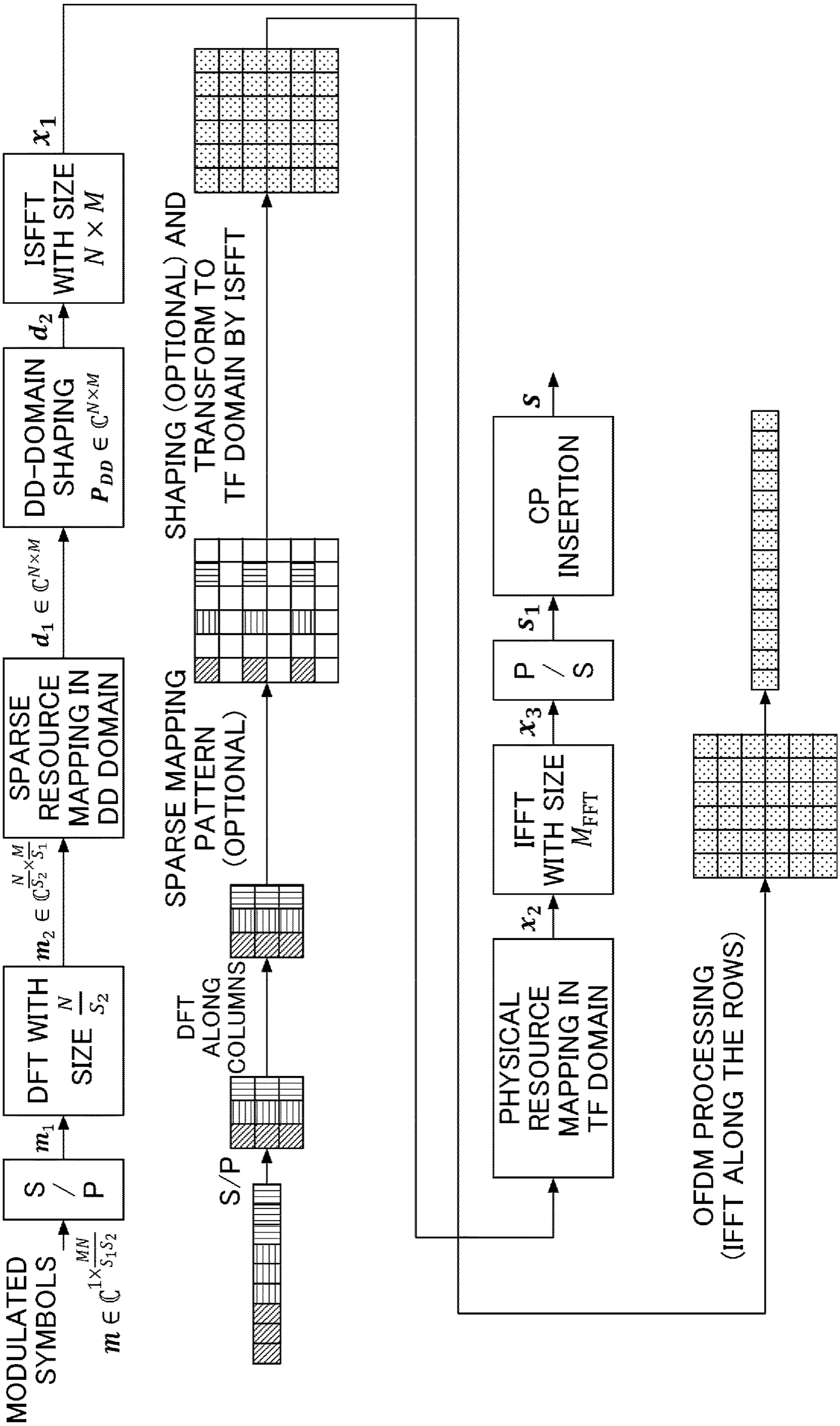
MODULATED SYMBOLS
$\boldsymbol{m} \in \mathbb{C}^{1\times\frac{MN}{S_1S_2}}$
S / P
$\boldsymbol{m}_1$
DFT WITH SIZE $\frac{N}{S_2}$
$\boldsymbol{m}_2 \in \mathbb{C}^{\frac{N}{S_2}\times\frac{M}{S_1}}$
SPARSE RESOURCE MAPPING IN DD DOMAIN
$\boldsymbol{d}_1 \in \mathbb{C}^{N\times M}$
DD-DOMAIN SHAPING
$\boldsymbol{P}_{DD} \in \mathbb{C}^{N\times M}$
$\boldsymbol{d}_2$
ISFFT WITH SIZE $N \times M$
$\boldsymbol{x}_1$
S/P
DFT ALONG COLUMNS
SPARSE MAPPING PATTERN (OPTIONAL)
SHAPING (OPTIONAL) AND TRANSFORM TO TF DOMAIN BY ISFFT
PHYSICAL RESOURCE MAPPING IN TF DOMAIN
$\boldsymbol{x}_2$
IFFT WITH SIZE $M_{\mathrm{FFT}}$
$\boldsymbol{x}_3$
P / S
$\boldsymbol{s}_1$
CP INSERTION
$\boldsymbol{s}$
OFDM PROCESSING (IFFT ALONG THE ROWS)

FIG.27

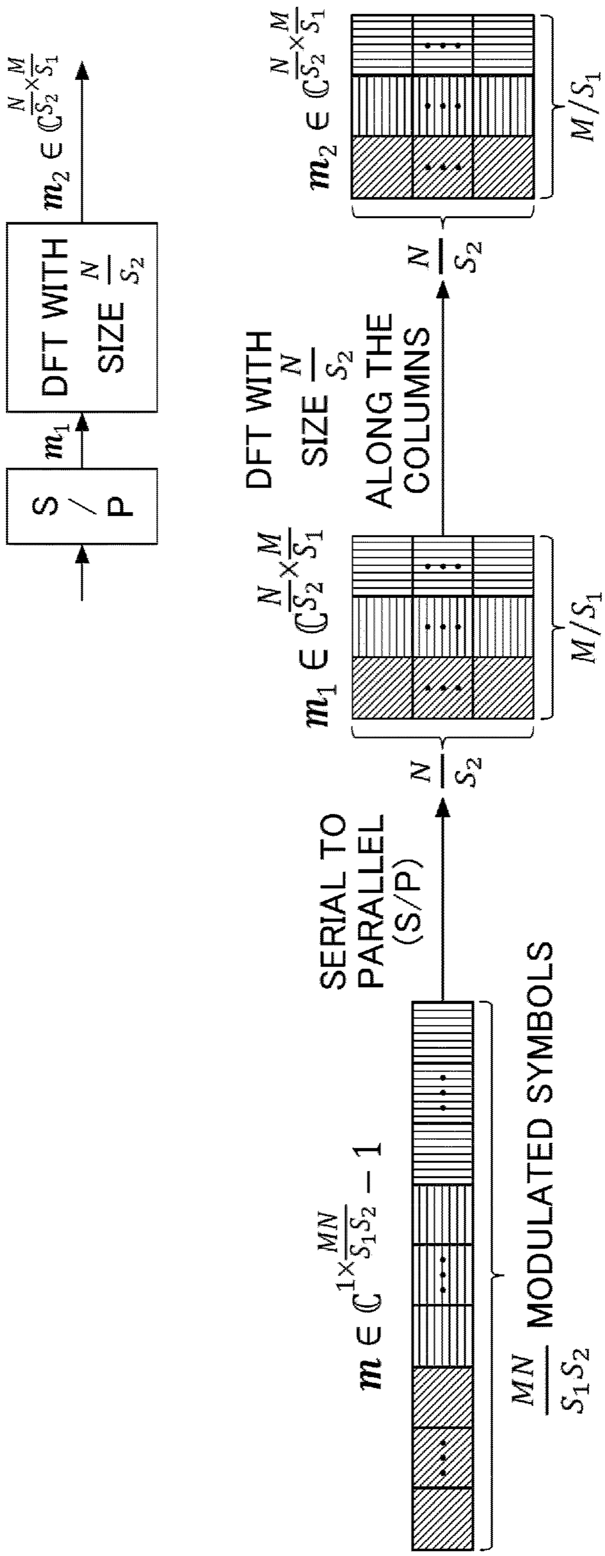
S / P
$m_1$
DFT WITH SIZE $\frac{N}{S_2}$
$m_2 \in \mathbb{C}^{\frac{N}{S_2} \times \frac{M}{S_1}}$
$m \in \mathbb{C}^{1 \times \frac{MN}{S_1 S_2}} - 1$
$\frac{MN}{S_1 S_2}$ MODULATED SYMBOLS
SERIAL TO PARALLEL (S/P)
$N/S_2$
$m_1 \in \mathbb{C}^{\frac{N}{S_2} \times \frac{M}{S_1}}$
$M/S_1$
DFT WITH SIZE $\frac{N}{S_2}$ ALONG THE COLUMNS
$N/S_2$
$m_2 \in \mathbb{C}^{\frac{N}{S_2} \times \frac{M}{S_1}}$
$M/S_1$

FIG.28

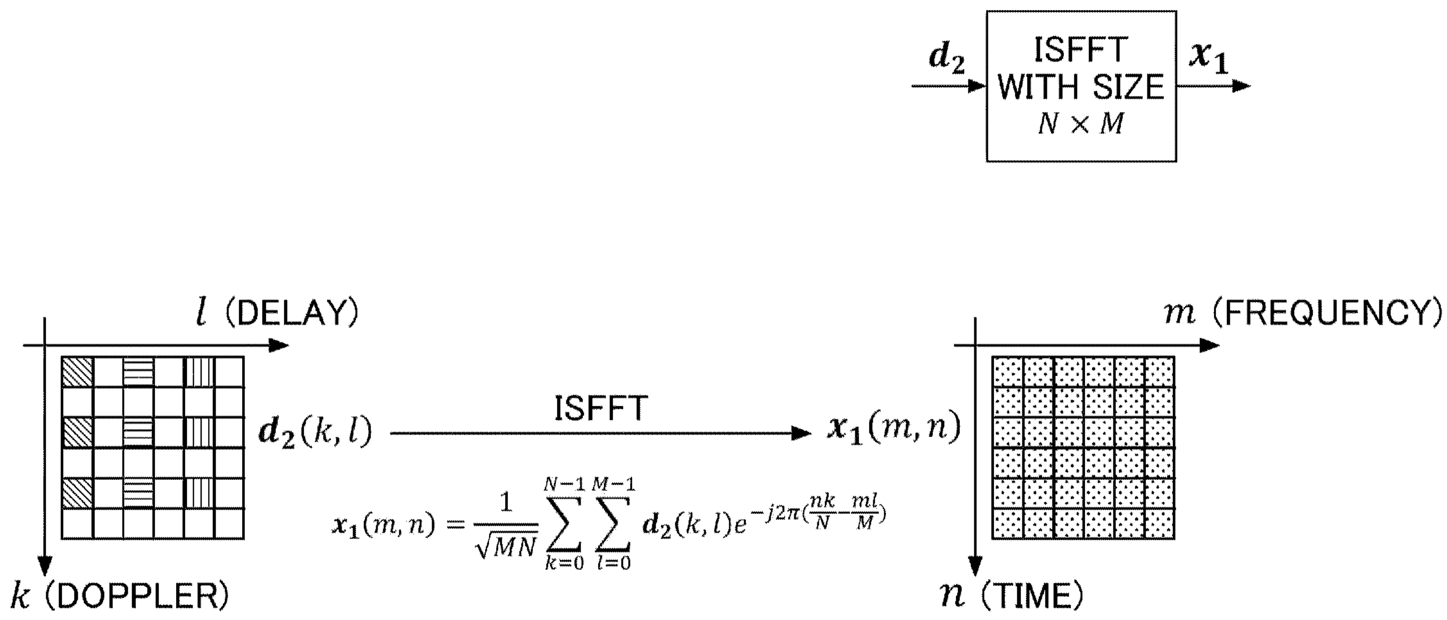


$$x_1(m,n) = \frac{1}{\sqrt{MN}} \sum_{k=0}^{N-1} \sum_{l=0}^{M-1} d_2(k,l) e^{-j2\pi(\frac{nk}{N} - \frac{ml}{M})}$$

FIG.29

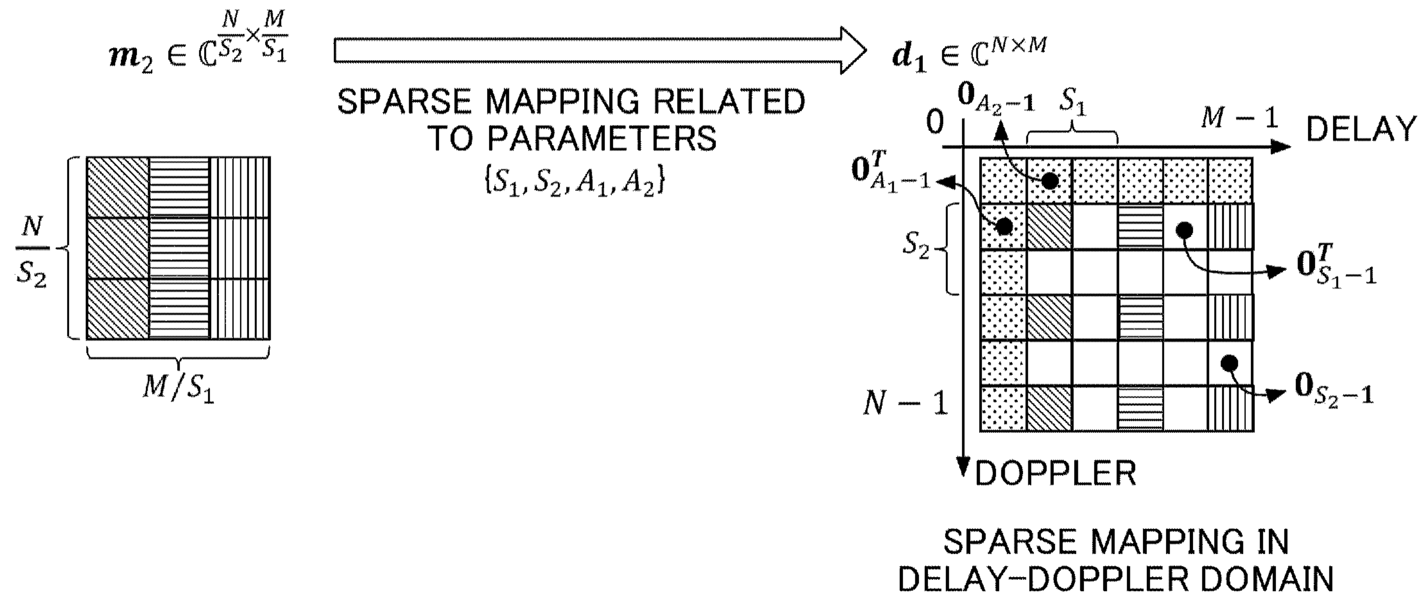
$m_2 \in \mathbb{C}^{\frac{N}{S_2} \times \frac{M}{S_1}}$
$\frac{N}{S_2}$
$M/S_1$
SPARSE MAPPING RELATED
TO PARAMETERS
$\{S_1, S_2, A_1, A_2\}$
$d_1 \in \mathbb{C}^{N \times M}$
$0_{A_2-1}$
$S_1$
0
$M-1$
DELAY
$0^T_{A_1-1}$
$S_2$
$0^T_{S_1-1}$
$0_{S_2-1}$
$N-1$
DOPPLER
SPARSE MAPPING IN
DELAY-DOPPLER DOMAIN

FIG.30

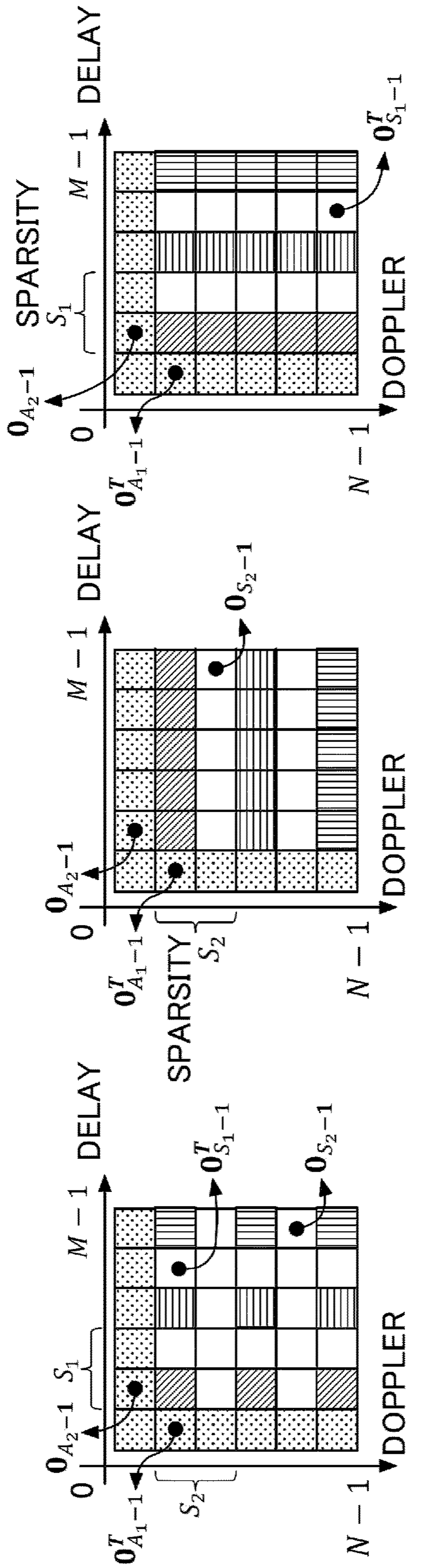


(A) ANY VALUE OF $A_1$ AND $A_2$

(B) ANY VALUE OF $A_1$ AND $A_2$, $S_1$=1

(C) ANY VALUE OF $A_1$ AND $A_2$, $S_2$=1

FIG.31

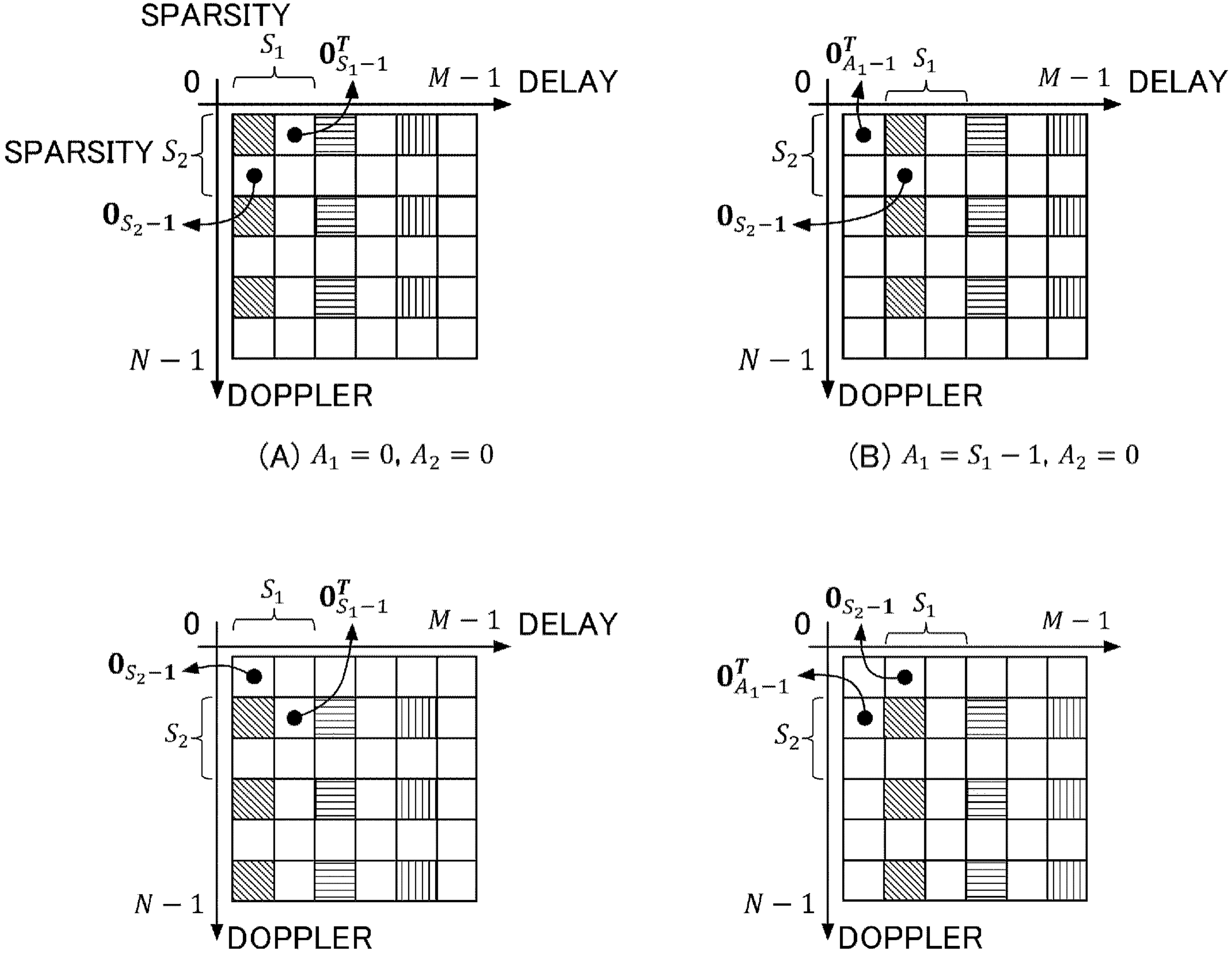


(A) $A_1 = 0, A_2 = 0$

(B) $A_1 = S_1 - 1, A_2 = 0$

(C) $A_1 = 0, A_2 = S_2 - 1$

(D) $A_1 = S_1 - 1, A_2 = S_2 - 1$

FIG.32

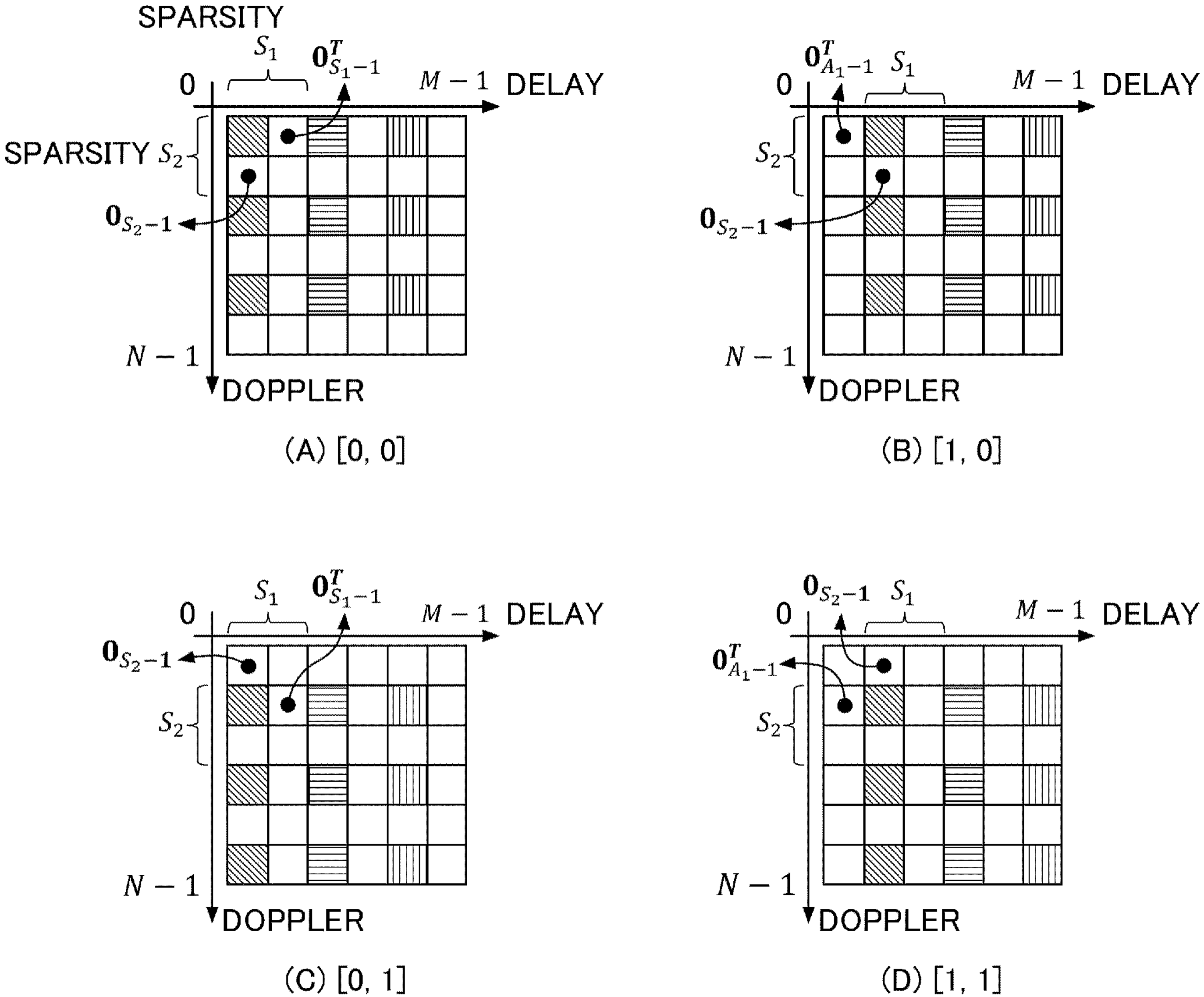
SPARSITY
$S_1$
SPARSITY $S_2$
$\mathbf{0}^T_{S_1-1}$
$\mathbf{0}_{S_2-1}$
$\mathbf{0}^T_{A_1-1}$
0
$M-1$
DELAY
$N-1$
DOPPLER
$S_2$
(A) [0, 0]
(B) [1, 0]
(C) [0, 1]
(D) [1, 1]

# FIG.33

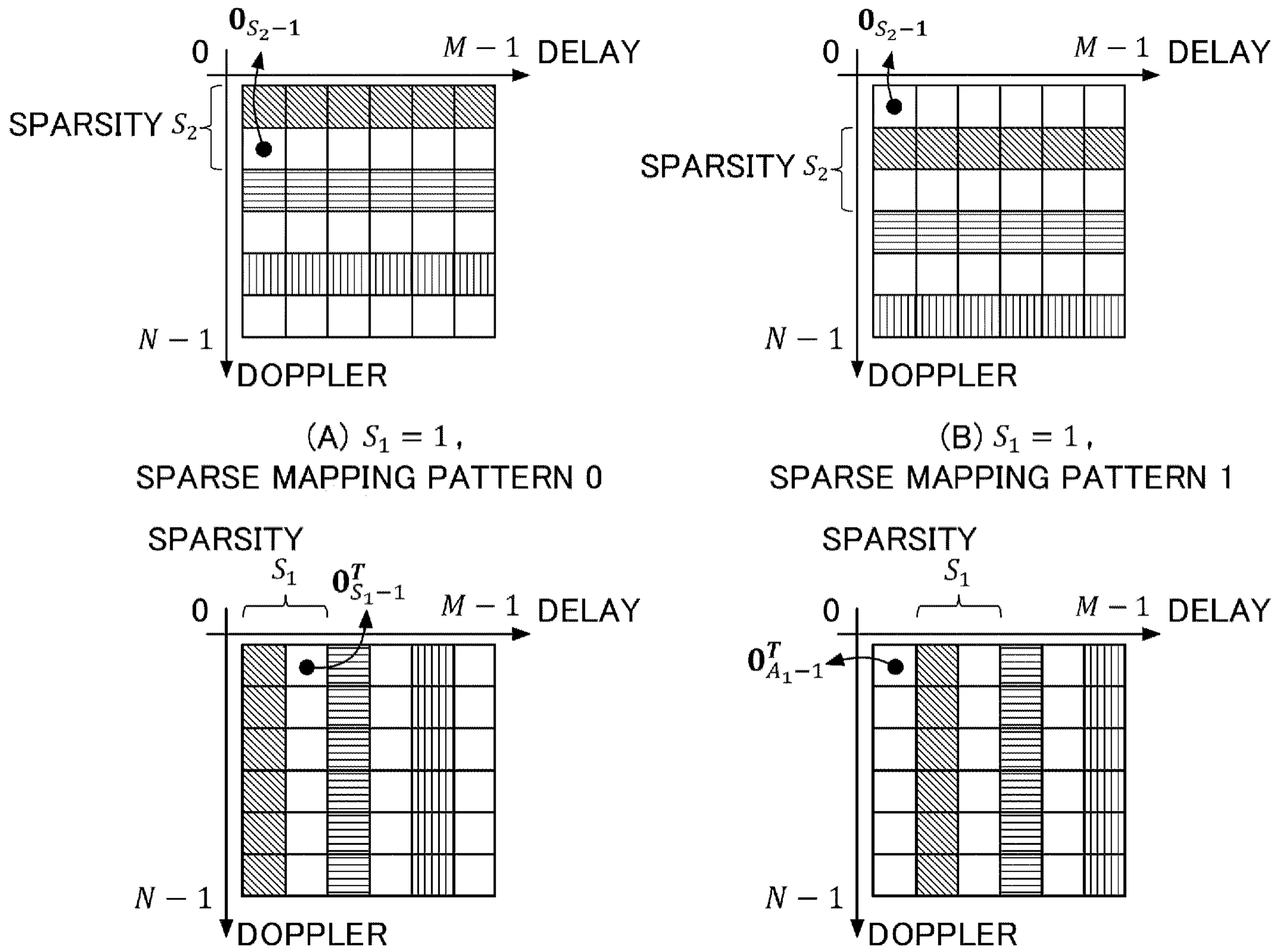


(A) $S_1 = 1$, SPARSE MAPPING PATTERN 0

(B) $S_1 = 1$, SPARSE MAPPING PATTERN 1

(C) $S_2 = 1$, SPARSE MAPPING PATTERN 0

(D) $S_2 = 1$, SPARSE MAPPING PATTERN 1

FIG.34

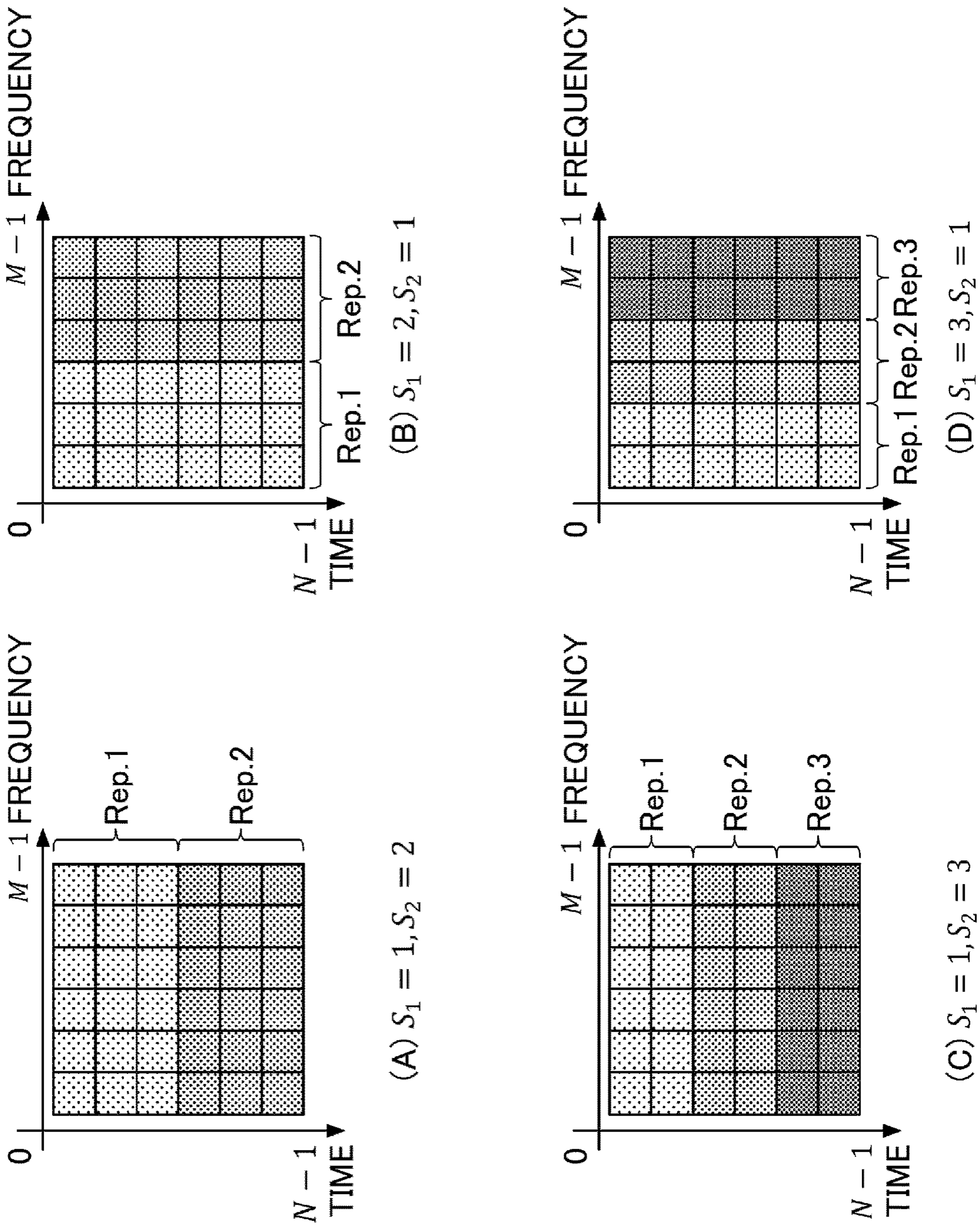

FREQUENCY
$M-1$
0
$N-1$
TIME
Rep.1
Rep.2
Rep.3
(A) $S_1 = 1, S_2 = 2$
(B) $S_1 = 2, S_2 = 1$
(C) $S_1 = 1, S_2 = 3$
(D) $S_1 = 3, S_2 = 1$

FIG.35

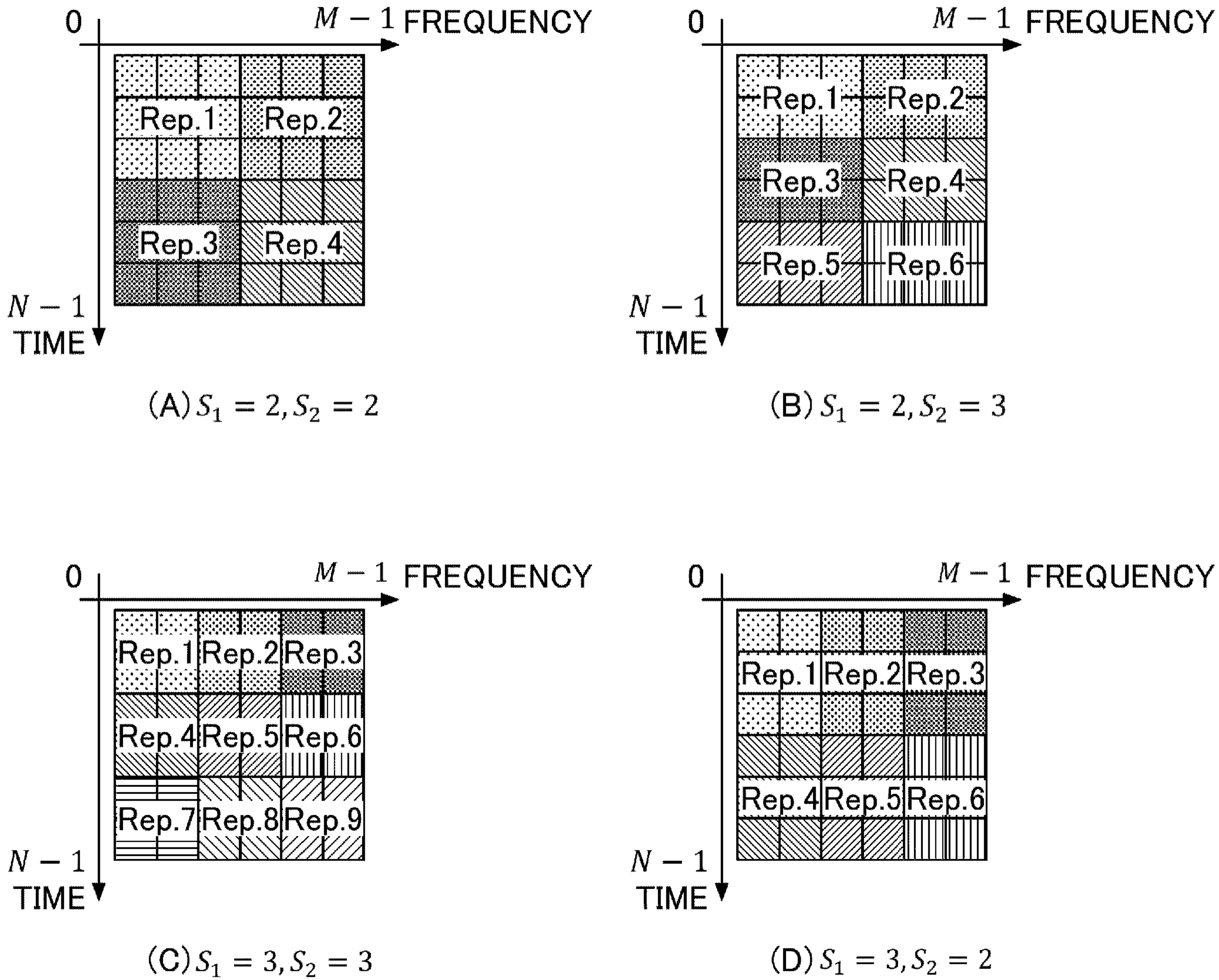


(A) $S_1 = 2, S_2 = 2$

(B) $S_1 = 2, S_2 = 3$

(C) $S_1 = 3, S_2 = 3$

(D) $S_1 = 3, S_2 = 2$

FIG.36

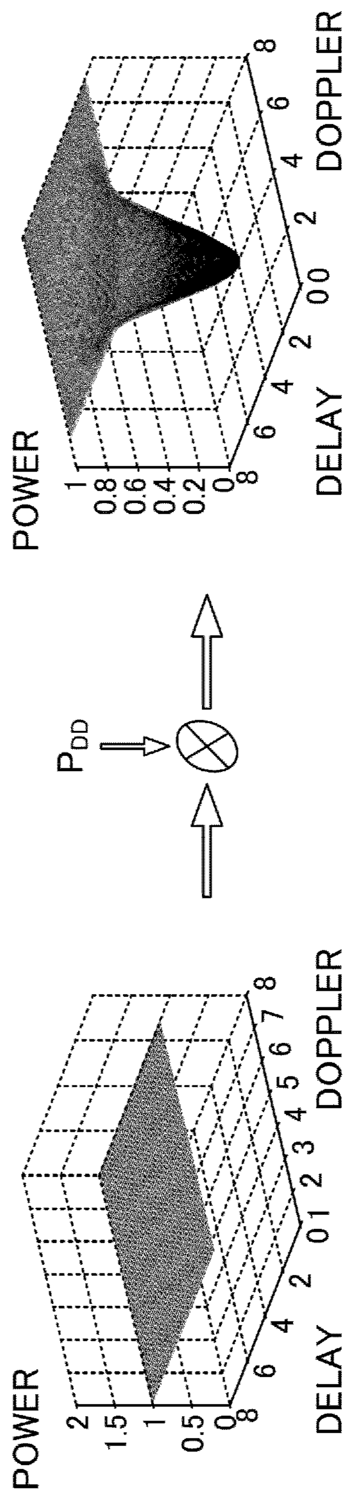

FIG.37

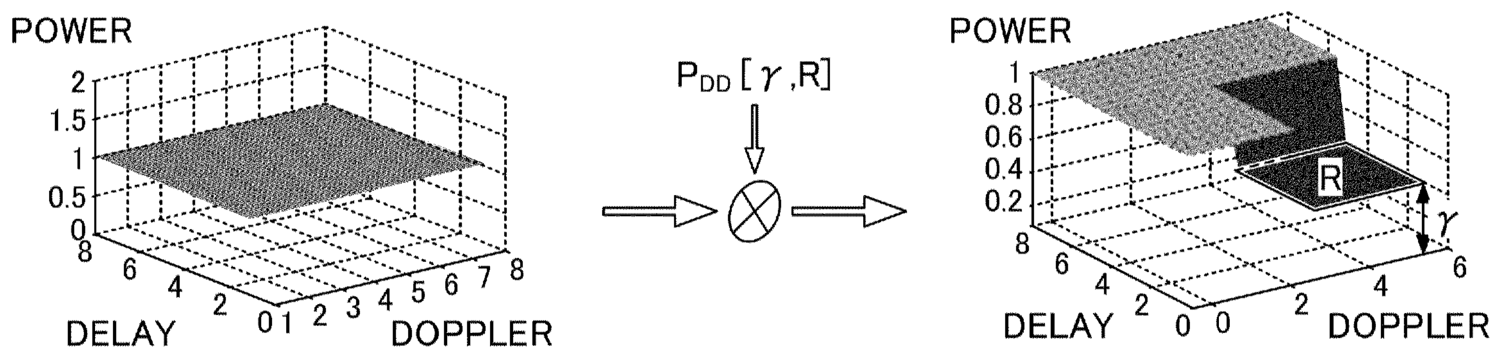
POWER
2
1.5
1
0.5
0
8
6
4
2
0
DELAY
1 2 3 4 5 6 7 8
DOPPLER
$P_{DD}$ [ γ ,R]
POWER
1
0.8
0.6
0.4
0.2
R
γ
8
6
4
2
0
DELAY
0 2 4 6
DOPPLER

FIG.38

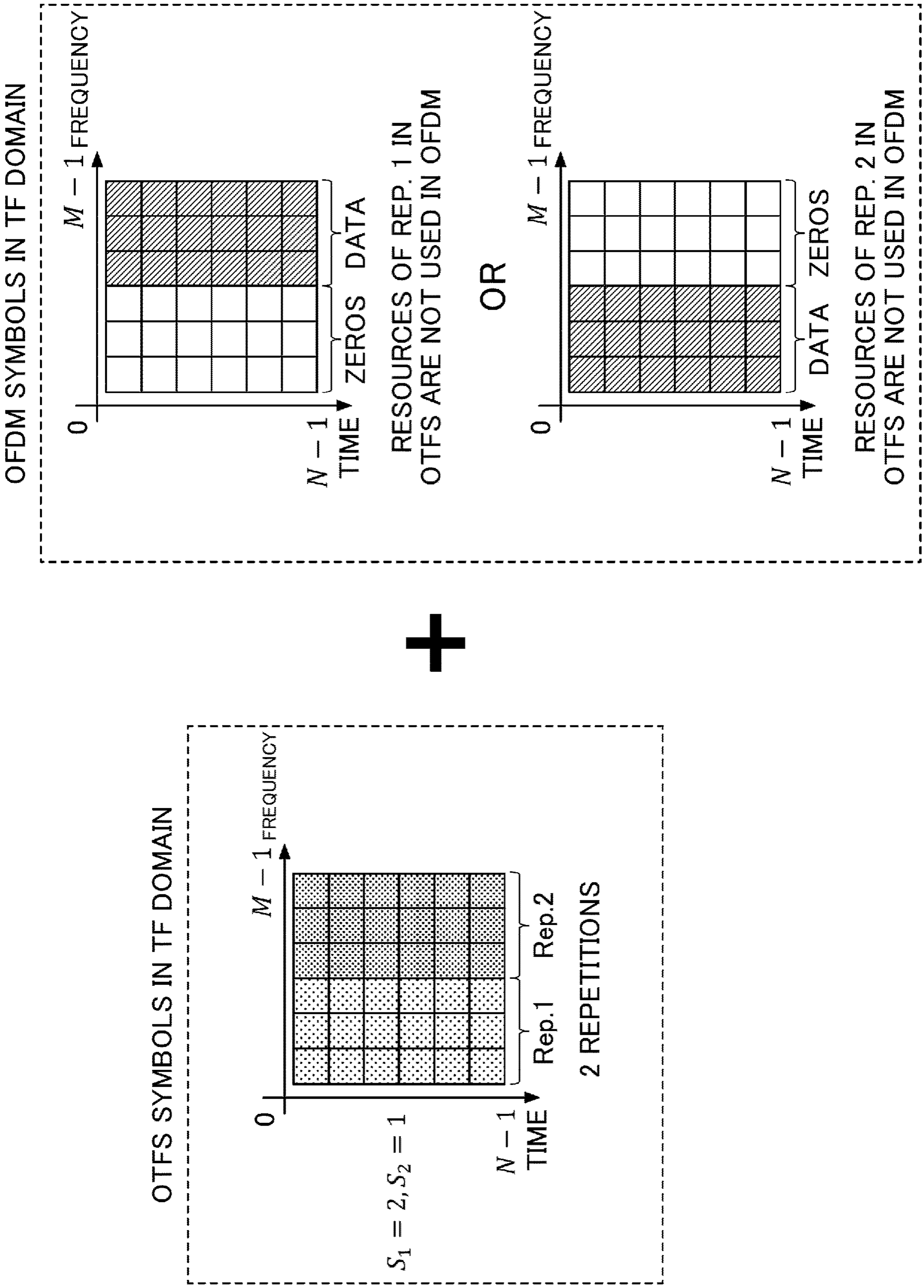
OFDM SYMBOLS IN TF DOMAIN
$M-1$ FREQUENCY
0
$N-1$ TIME
ZEROS
DATA
RESOURCES OF REP. 1 IN
OTFS ARE NOT USED IN OFDM
OR
DATA
ZEROS
RESOURCES OF REP. 2 IN
OTFS ARE NOT USED IN OFDM
+
OTFS SYMBOLS IN TF DOMAIN
$S_1 = 2, S_2 = 1$
Rep.1
Rep.2
2 REPETITIONS

FIG.39

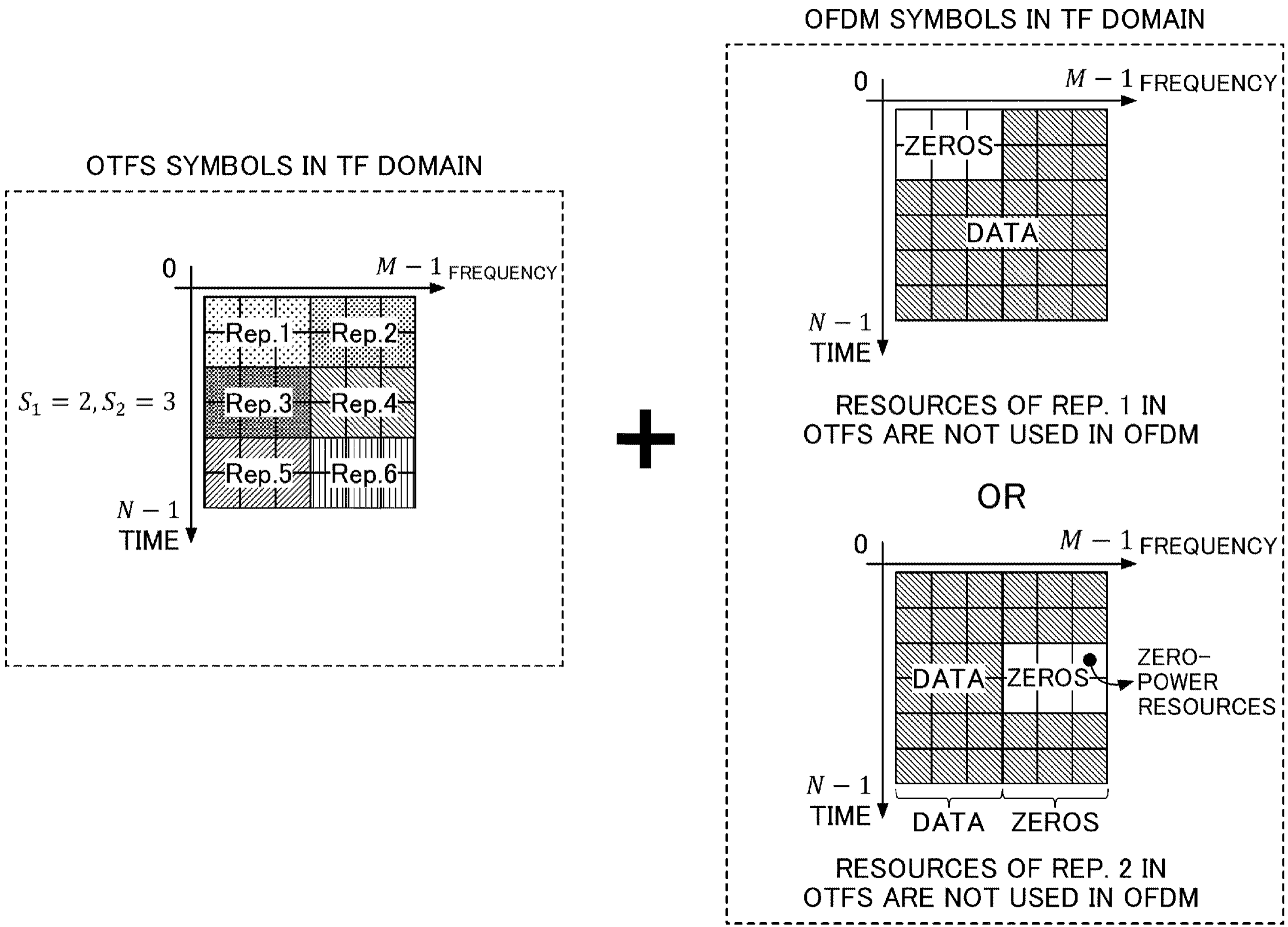
OTFS SYMBOLS IN TF DOMAIN
0
M − 1 FREQUENCY
N − 1
TIME
$S_1 = 2, S_2 = 3$
Rep.1
Rep.2
Rep.3
Rep.4
Rep.5
Rep.6
OFDM SYMBOLS IN TF DOMAIN
0
M − 1 FREQUENCY
N − 1
TIME
ZEROS
DATA
RESOURCES OF REP. 1 IN
OTFS ARE NOT USED IN OFDM
OR
0
M − 1 FREQUENCY
N − 1
TIME
DATA
ZEROS
ZERO-
POWER
RESOURCES
DATA
ZEROS
RESOURCES OF REP. 2 IN
OTFS ARE NOT USED IN OFDM

FIG.40

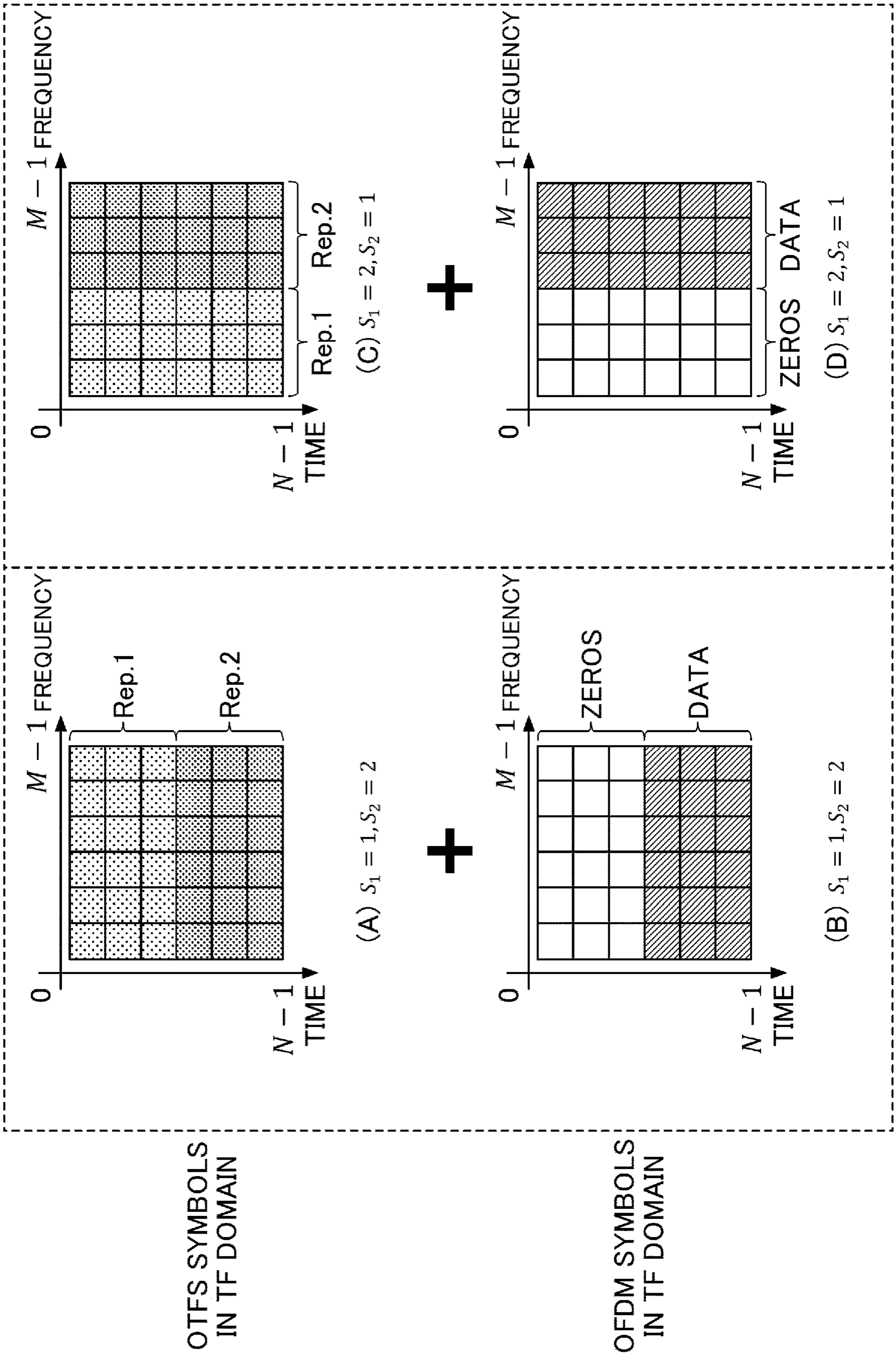
OTFS SYMBOLS IN TF DOMAIN
OFDM SYMBOLS IN TF DOMAIN
FREQUENCY
TIME
0
$M-1$
$N-1$
Rep.1
Rep.2
ZEROS
DATA
(A) $S_1 = 1, S_2 = 2$
(B) $S_1 = 1, S_2 = 2$
(C) $S_1 = 2, S_2 = 1$
(D) $S_1 = 2, S_2 = 1$

FIG.41

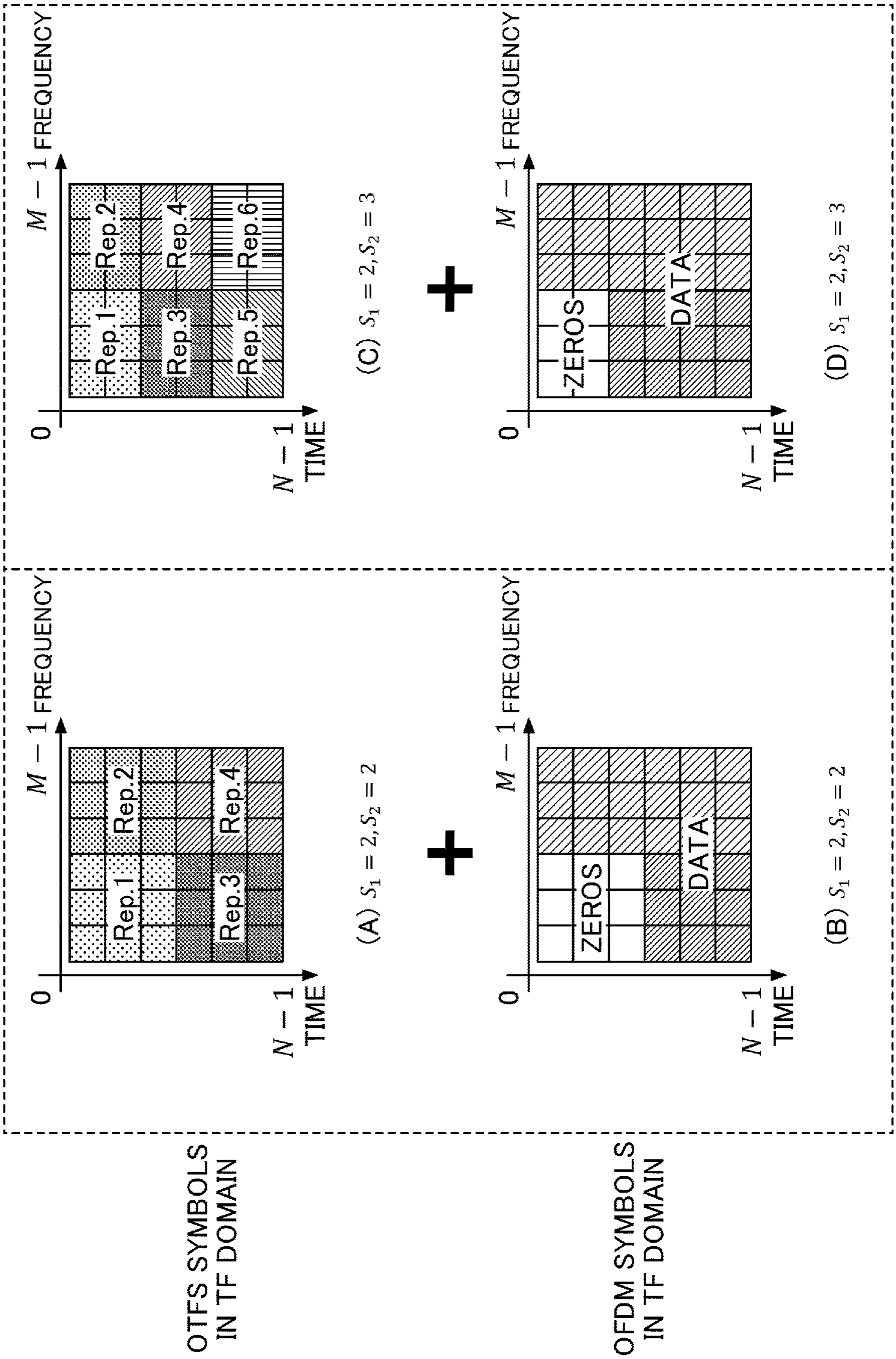
OTFS SYMBOLS IN TF DOMAIN
OFDM SYMBOLS IN TF DOMAIN
FREQUENCY
TIME
0
$M-1$
$N-1$
Rep.1
Rep.2
Rep.3
Rep.4
Rep.5
Rep.6
ZEROS
DATA
(A) $S_1 = 2, S_2 = 2$
(B) $S_1 = 2, S_2 = 2$
(C) $S_1 = 2, S_2 = 3$
(D) $S_1 = 2, S_2 = 3$

FIG.42

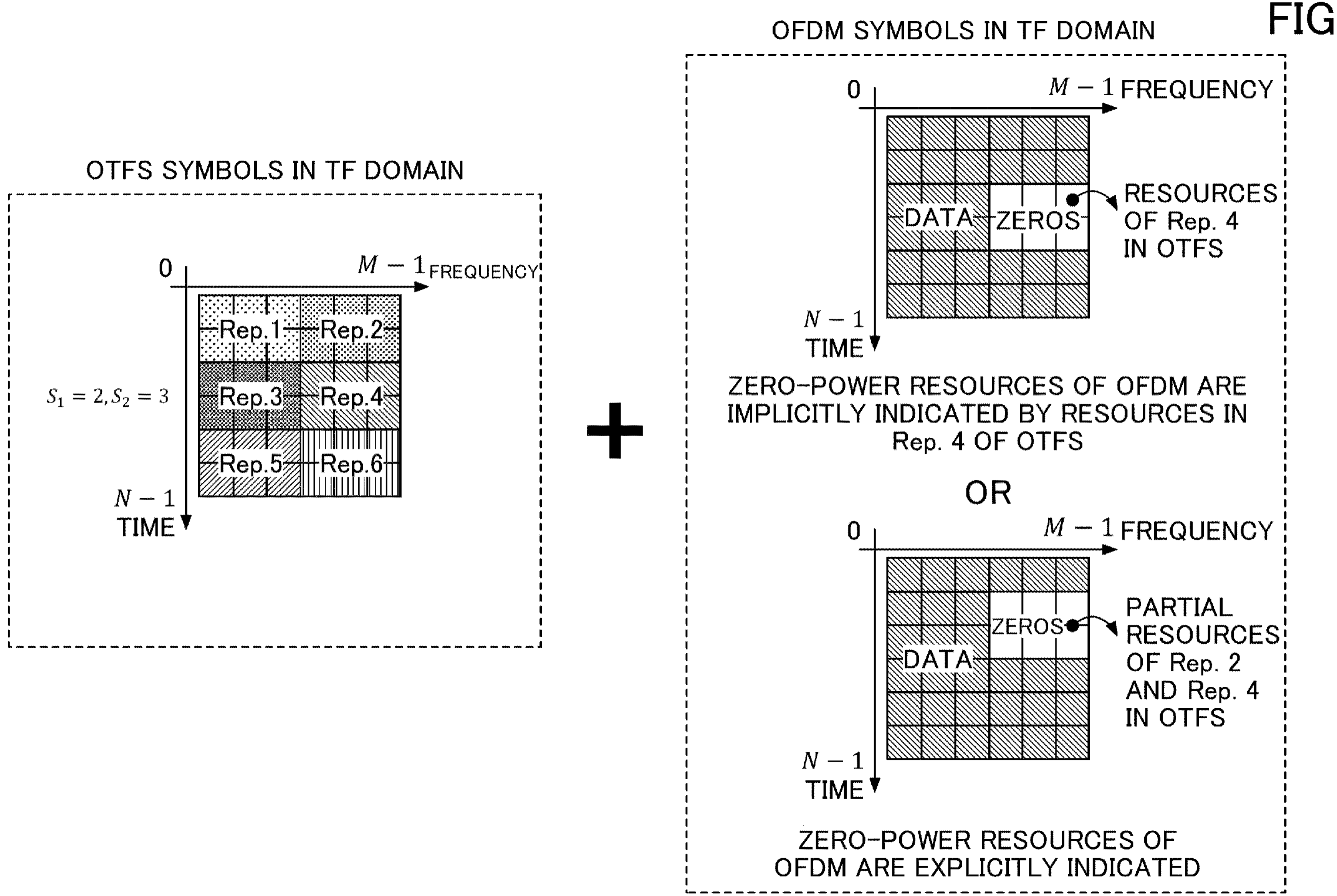
OTFS SYMBOLS IN TF DOMAIN
0
M − 1 FREQUENCY
N − 1
TIME
$S_1 = 2, S_2 = 3$
Rep.1
Rep.2
Rep.3
Rep.4
Rep.5
Rep.6
+
OFDM SYMBOLS IN TF DOMAIN
0
M − 1 FREQUENCY
N − 1
TIME
DATA
ZEROS
RESOURCES OF Rep. 4 IN OTFS
ZERO-POWER RESOURCES OF OFDM ARE IMPLICITLY INDICATED BY RESOURCES IN Rep. 4 OF OTFS
OR
0
M − 1 FREQUENCY
N − 1
TIME
DATA
ZEROS
PARTIAL RESOURCES OF Rep. 2 AND Rep. 4 IN OTFS
ZERO-POWER RESOURCES OF OFDM ARE EXPLICITLY INDICATED

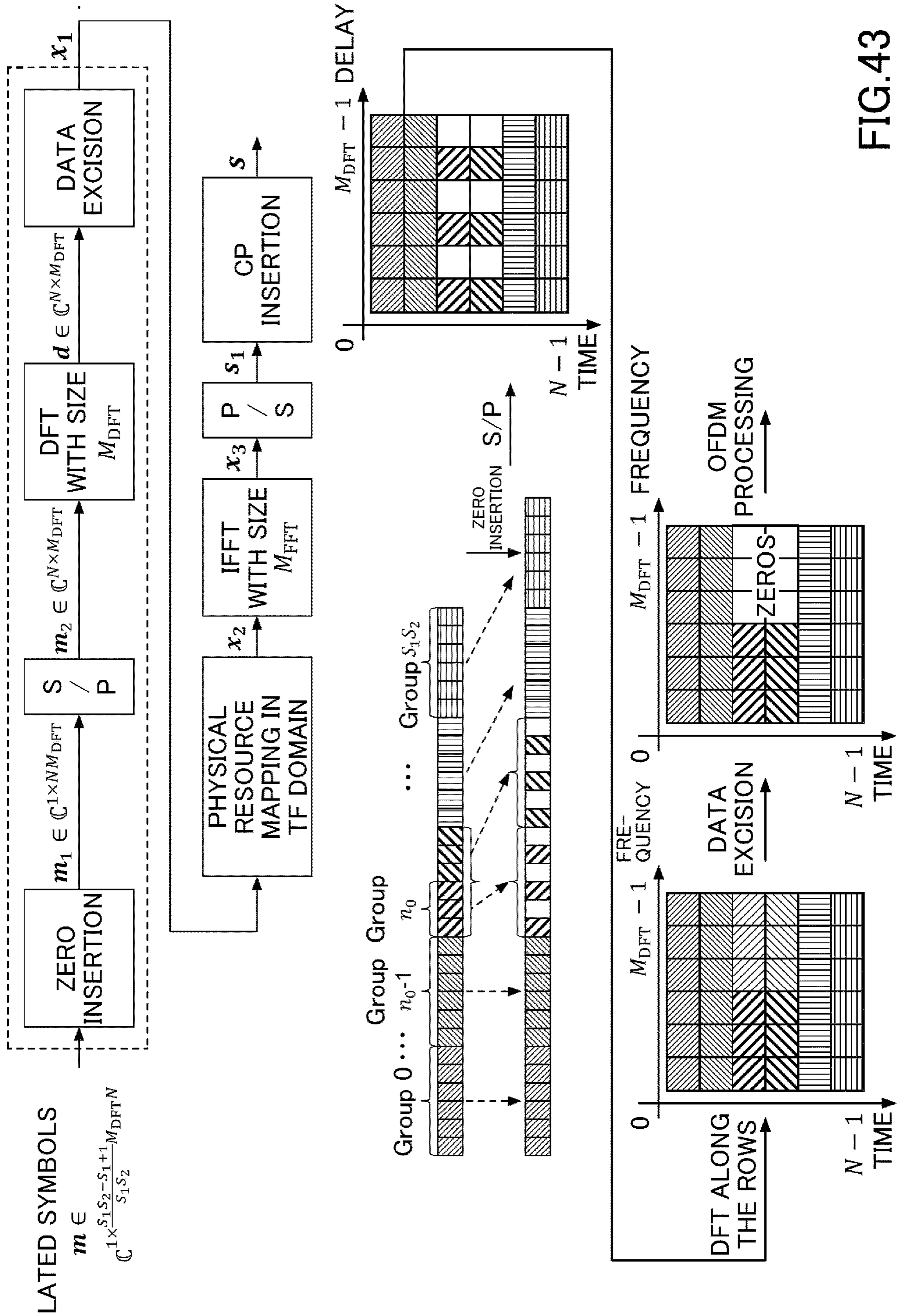
MODULATED SYMBOLS
$\boldsymbol{m} \in \mathbb{C}^{1\times\frac{S_1S_2-S_1+1}{S_1S_2}M_{DFT}N}$
ZERO INSERTION
$\boldsymbol{m}_1 \in \mathbb{C}^{1\times NM_{DFT}}$
S / P
$\boldsymbol{m}_2 \in \mathbb{C}^{N\times M_{DFT}}$
DFT WITH SIZE $M_{DFT}$
$\boldsymbol{d} \in \mathbb{C}^{N\times M_{DFT}}$
DATA EXCISION
$\boldsymbol{x}_1$
PHYSICAL RESOURCE MAPPING IN TF DOMAIN
$\boldsymbol{x}_2$
IFFT WITH SIZE $M_{FFT}$
$\boldsymbol{x}_3$
P / S
$\boldsymbol{s}_1$
CP INSERTION
$\boldsymbol{s}$
Group 0 ··· Group $n_0$-1
Group $n_0$
··· Group $S_1S_2$
ZERO INSERTION
S/P
$M_{DFT}-1$ DELAY
0
$N-1$ TIME
$M_{DFT}-1$ FREQUENCY
ZEROS
OFDM PROCESSING
$M_{DFT}-1$ FRE-QUENCY
DATA EXCISION
DFT ALONG THE ROWS

FIG.43

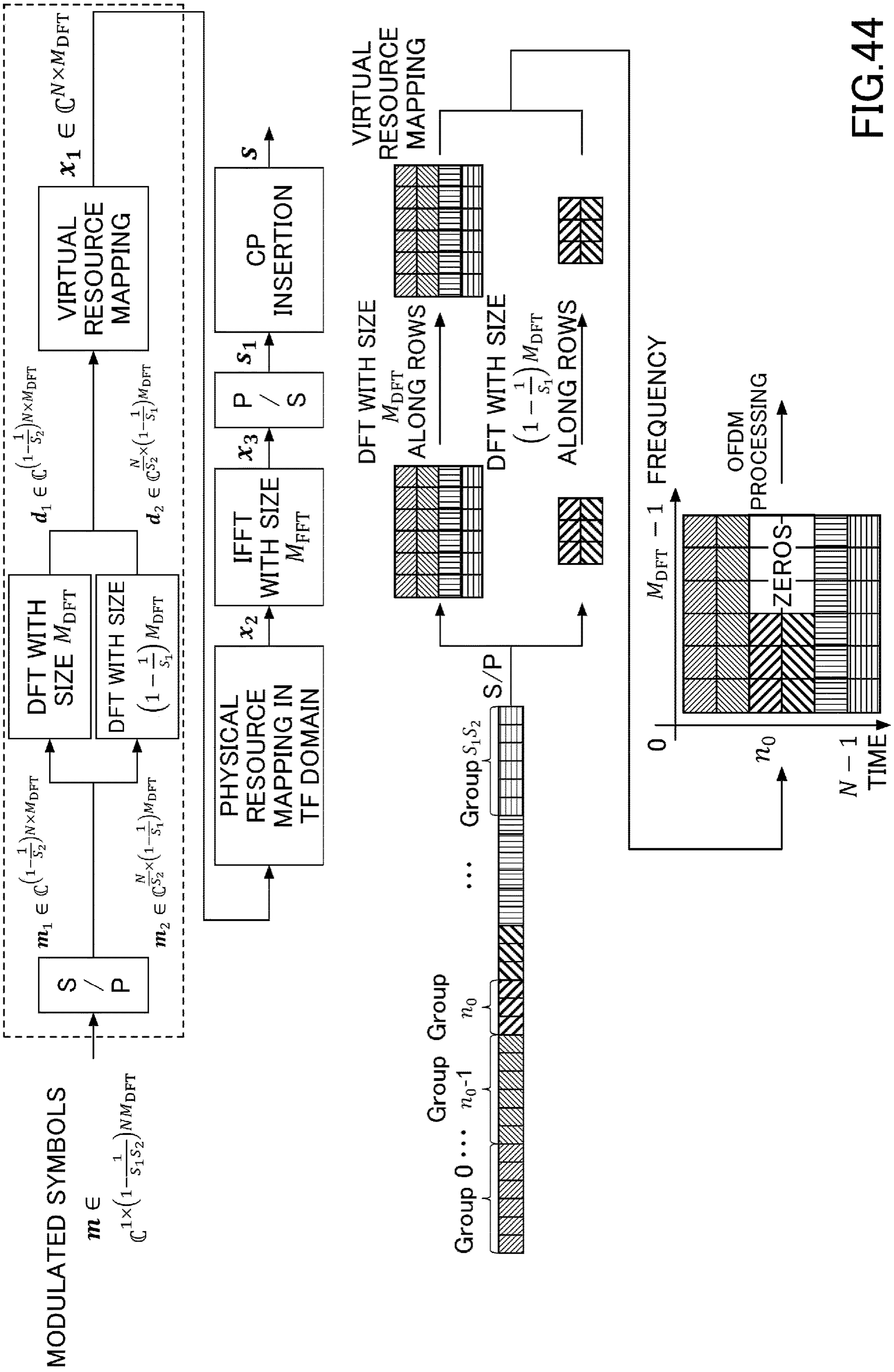
MODULATED SYMBOLS
S / P
DFT WITH SIZE $M_{DFT}$
DFT WITH SIZE $\left(1-\frac{1}{S_1}\right)M_{DFT}$
VIRTUAL RESOURCE MAPPING
PHYSICAL RESOURCE MAPPING IN TF DOMAIN
IFFT WITH SIZE $M_{FFT}$
P / S
CP INSERTION
Group 0 ⋯ Group $n_0$-1 Group $n_0$ ⋯ Group $S_1S_2$
S/P
DFT WITH SIZE $M_{DFT}$ ALONG ROWS
DFT WITH SIZE $\left(1-\frac{1}{S_1}\right)M_{DFT}$ ALONG ROWS
VIRTUAL RESOURCE MAPPING
FREQUENCY
TIME
ZEROS
OFDM PROCESSING

FIG.44

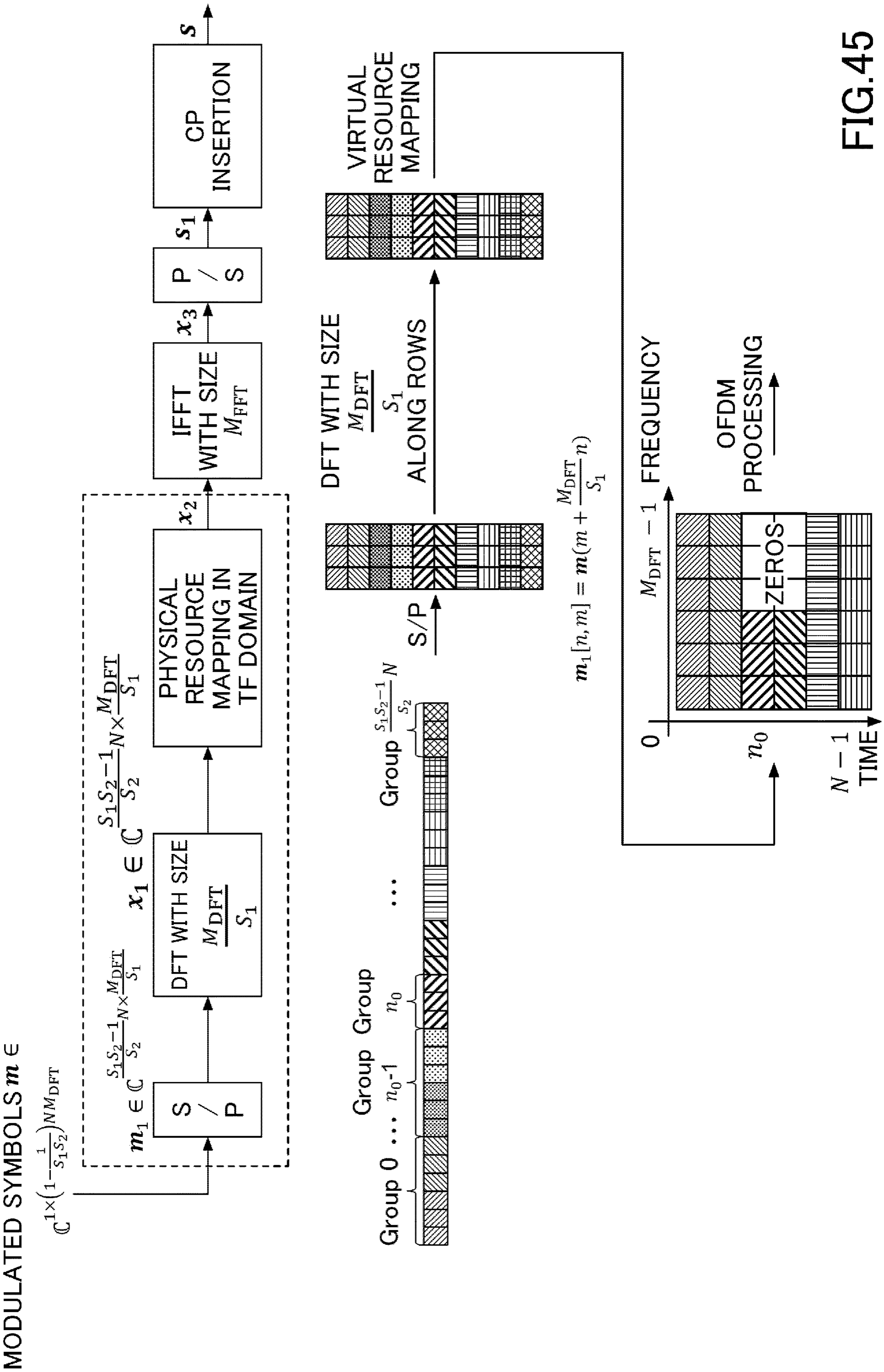
MODULATED SYMBOLS $\boldsymbol{m} \in \mathbb{C}^{1\times\left(1-\frac{1}{S_1S_2}\right)NM_{\mathrm{DFT}}}$
$\boldsymbol{m}_1 \in \mathbb{C}^{\frac{S_1S_2-1}{S_2}N\times\frac{M_{\mathrm{DFT}}}{S_1}}$
S / P
DFT WITH SIZE $\frac{M_{\mathrm{DFT}}}{S_1}$
$\boldsymbol{x}_1 \in \mathbb{C}^{\frac{S_1S_2-1}{S_2}N\times\frac{M_{\mathrm{DFT}}}{S_1}}$
PHYSICAL RESOURCE MAPPING IN TF DOMAIN
$\boldsymbol{x}_2$
IFFT WITH SIZE $M_{\mathrm{FFT}}$
$\boldsymbol{x}_3$
P / S
$\boldsymbol{s}_1$
CP INSERTION
$\boldsymbol{s}$
Group 0 ... Group $n_0$-1 Group $n_0$ ... Group $\frac{S_1S_2-1}{S_2}N$
S/P
DFT WITH SIZE $\frac{M_{\mathrm{DFT}}}{S_1}$ ALONG ROWS
VIRTUAL RESOURCE MAPPING
$\boldsymbol{m}_1[n,m] = \boldsymbol{m}(m + \frac{M_{\mathrm{DFT}}}{S_1}n)$
$M_{\mathrm{DFT}} - 1$ FREQUENCY
ZEROS
0
$n_0$
$N - 1$ TIME
OFDM PROCESSING

FIG.45

FIG.46

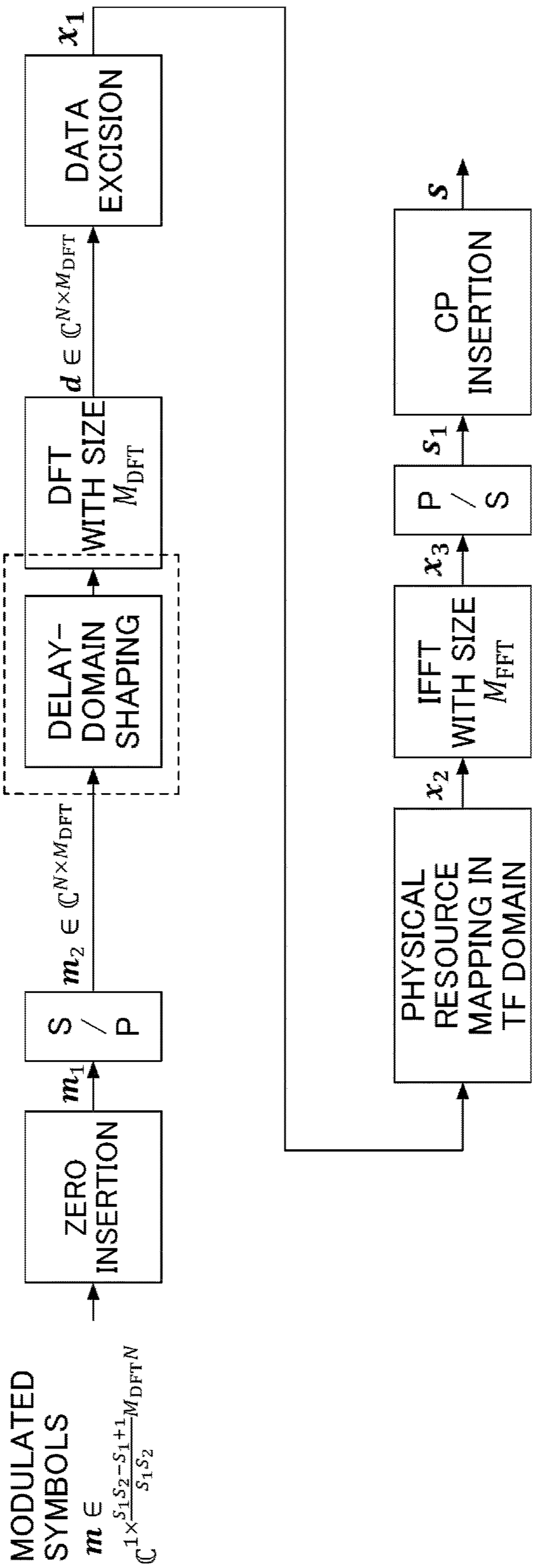
MODULATED SYMBOLS
$\boldsymbol{m} \in \mathbb{C}^{1\times\frac{S_1S_2-S_1+1}{S_1S_2}M_{\mathrm{DFT}}N}$
ZERO INSERTION
$\boldsymbol{m}_1$
S / P
$\boldsymbol{m}_2 \in \mathbb{C}^{N\times M_{\mathrm{DFT}}}$
DELAY-DOMAIN SHAPING
DFT WITH SIZE $M_{\mathrm{DFT}}$
$\boldsymbol{d} \in \mathbb{C}^{N\times M_{\mathrm{DFT}}}$
DATA EXCISION
$\boldsymbol{x}_1$
PHYSICAL RESOURCE MAPPING IN TF DOMAIN
$\boldsymbol{x}_2$
IFFT WITH SIZE $M_{\mathrm{FFT}}$
$\boldsymbol{x}_3$
P / S
$\boldsymbol{s}_1$
CP INSERTION
$\boldsymbol{s}$

FIG.47

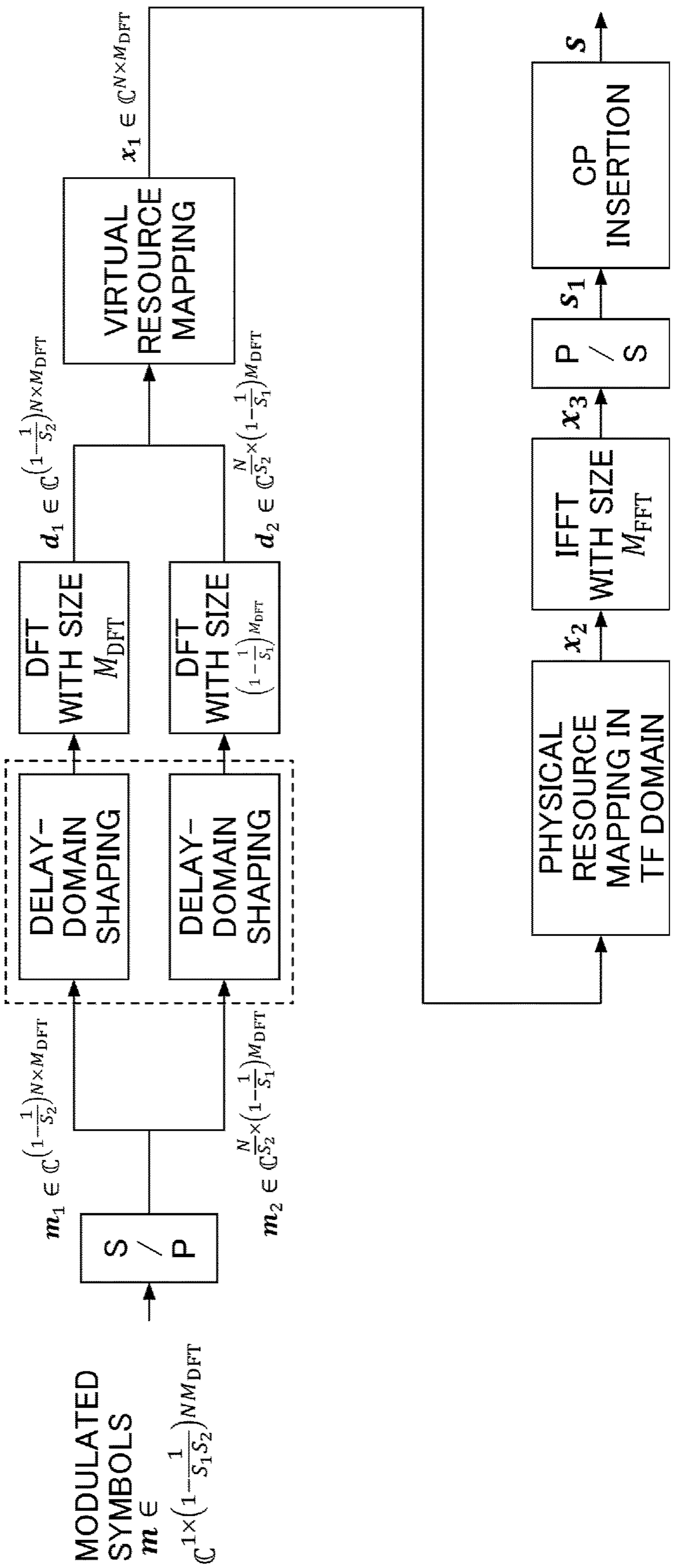
MODULATED SYMBOLS $\boldsymbol{m} \in \mathbb{C}^{1\times\left(1-\frac{1}{S_1S_2}\right)NM_{\mathrm{DFT}}}$
S / P
$\boldsymbol{m}_1 \in \mathbb{C}^{\left(1-\frac{1}{S_2}\right)N\times M_{\mathrm{DFT}}}$
$\boldsymbol{m}_2 \in \mathbb{C}^{\frac{N}{S_2}\times\left(1-\frac{1}{S_1}\right)M_{\mathrm{DFT}}}$
DELAY-DOMAIN SHAPING
DELAY-DOMAIN SHAPING
DFT WITH SIZE $M_{\mathrm{DFT}}$
DFT WITH SIZE $\left(1-\frac{1}{S_1}\right)M_{\mathrm{DFT}}$
$\boldsymbol{d}_1 \in \mathbb{C}^{\left(1-\frac{1}{S_2}\right)N\times M_{\mathrm{DFT}}}$
$\boldsymbol{d}_2 \in \mathbb{C}^{\frac{N}{S_2}\times\left(1-\frac{1}{S_1}\right)M_{\mathrm{DFT}}}$
VIRTUAL RESOURCE MAPPING
$\boldsymbol{x}_1 \in \mathbb{C}^{N\times M_{\mathrm{DFT}}}$
PHYSICAL RESOURCE MAPPING IN TF DOMAIN
$\boldsymbol{x}_2$
IFFT WITH SIZE $M_{\mathrm{FFT}}$
$\boldsymbol{x}_3$
P / S
$\boldsymbol{s}_1$
CP INSERTION
$\boldsymbol{s}$

FIG.48

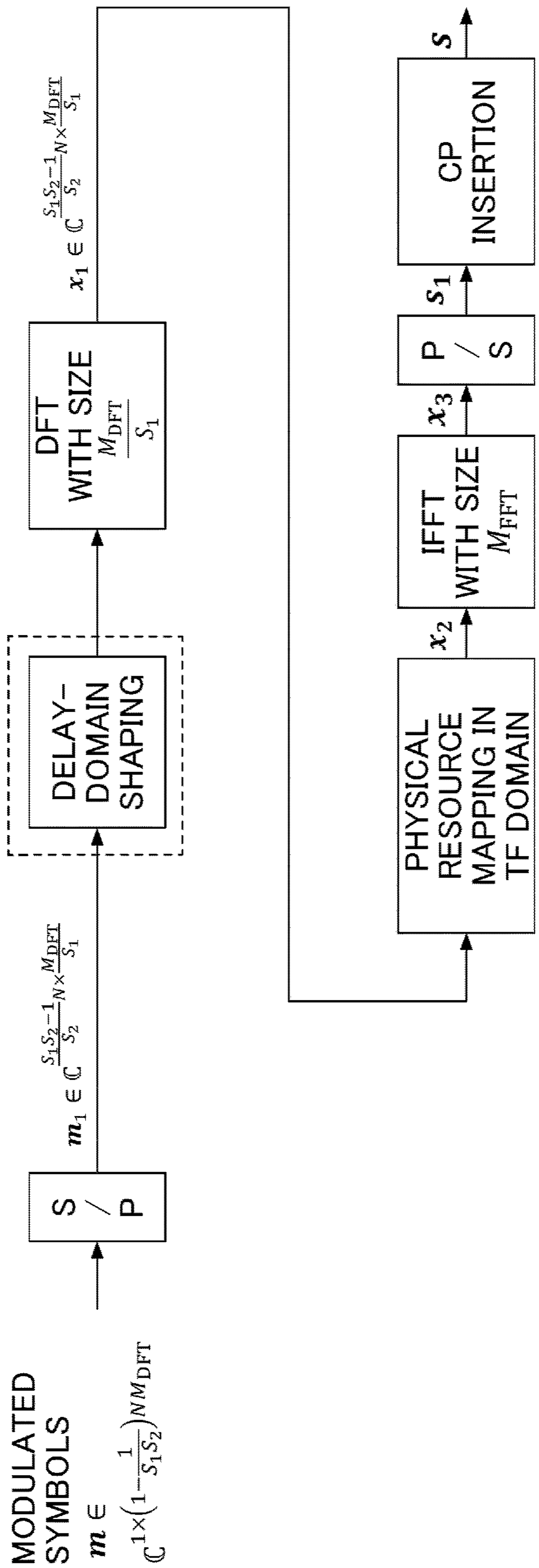
MODULATED SYMBOLS
$\boldsymbol{m} \in \mathbb{C}^{1\times\left(1-\frac{1}{S_1S_2}\right)NM_{\mathrm{DFT}}}$
S / P
$\boldsymbol{m}_1 \in \mathbb{C}^{\frac{S_1S_2-1}{S_2}N\times\frac{M_{\mathrm{DFT}}}{S_1}}$
DELAY-DOMAIN SHAPING
DFT WITH SIZE $\frac{M_{\mathrm{DFT}}}{S_1}$
$\boldsymbol{x}_1 \in \mathbb{C}^{\frac{S_1S_2-1}{S_2}N\times\frac{M_{\mathrm{DFT}}}{S_1}}$
PHYSICAL RESOURCE MAPPING IN TF DOMAIN
$\boldsymbol{x}_2$
IFFT WITH SIZE $M_{\mathrm{FFT}}$
$\boldsymbol{x}_3$
P / S
$\boldsymbol{s}_1$
CP INSERTION
$\boldsymbol{s}$

FIG.49

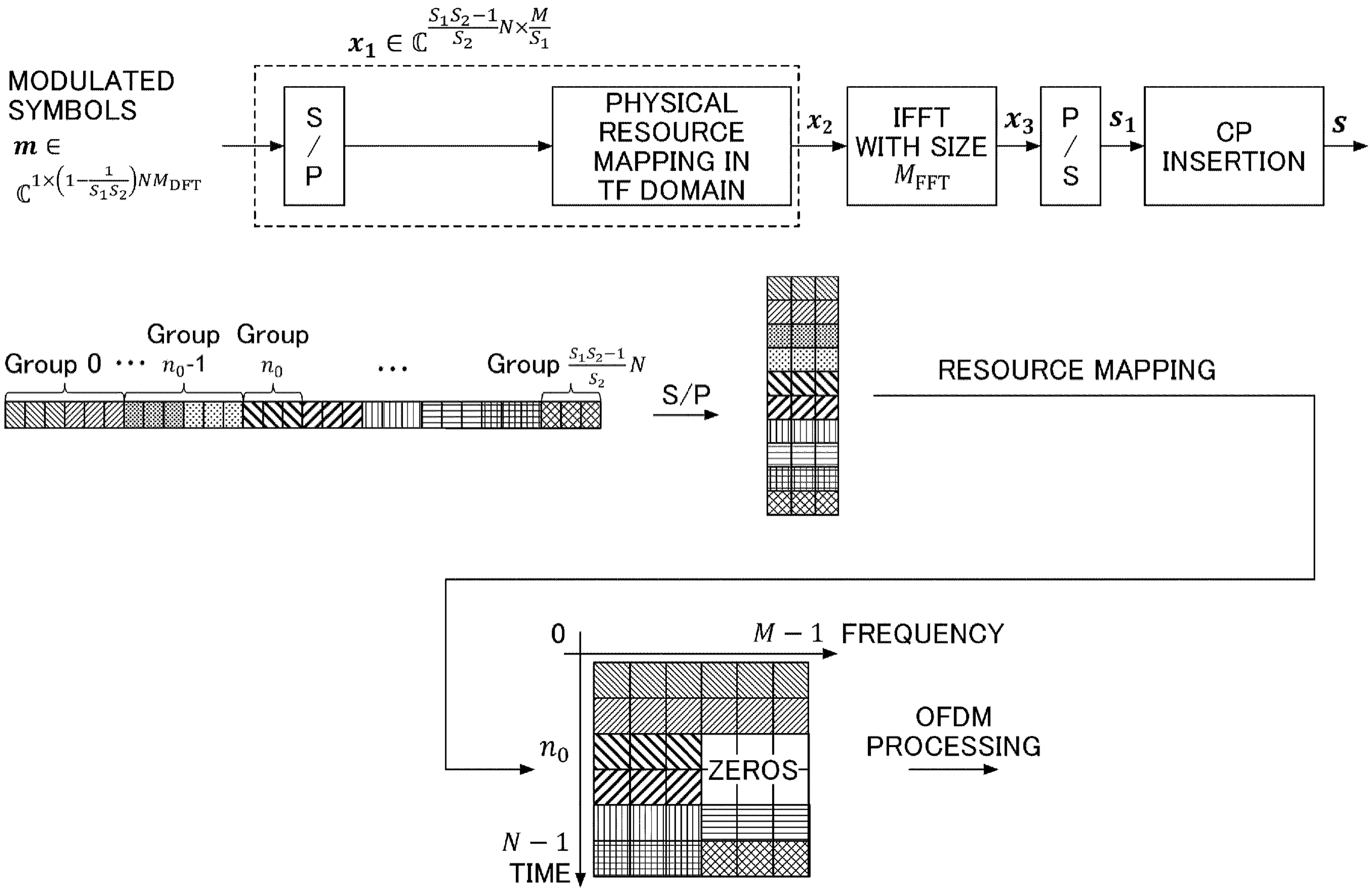
$x_1 \in \mathbb{C}^{\frac{S_1S_2-1}{S_2}N\times\frac{M}{S_1}}$
MODULATED SYMBOLS
$m \in \mathbb{C}^{1\times\left(1-\frac{1}{S_1S_2}\right)NM_{DFT}}$
S / P
PHYSICAL RESOURCE MAPPING IN TF DOMAIN
$x_2$
IFFT WITH SIZE $M_{FFT}$
$x_3$
P / S
$s_1$
CP INSERTION
$s$
Group 0
Group $n_0$-1
Group $n_0$
Group $\frac{S_1S_2-1}{S_2}N$
S/P
RESOURCE MAPPING
0
$M-1$
FREQUENCY
$n_0$
ZEROS
$N-1$
TIME
OFDM PROCESSING

FIG.50

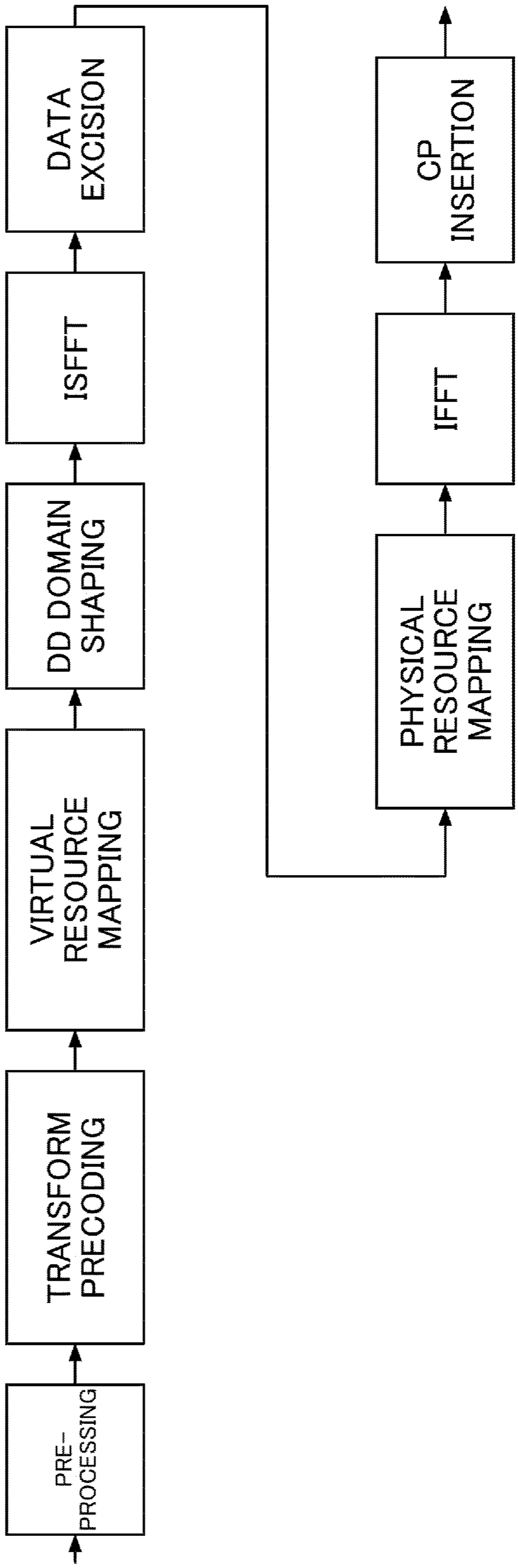
PRE-PROCESSING
TRANSFORM PRECODING
VIRTUAL RESOURCE MAPPING
DD DOMAIN SHAPING
ISFFT
DATA EXCISION
PHYSICAL RESOURCE MAPPING
IFFT
CP INSERTION

FIG.51

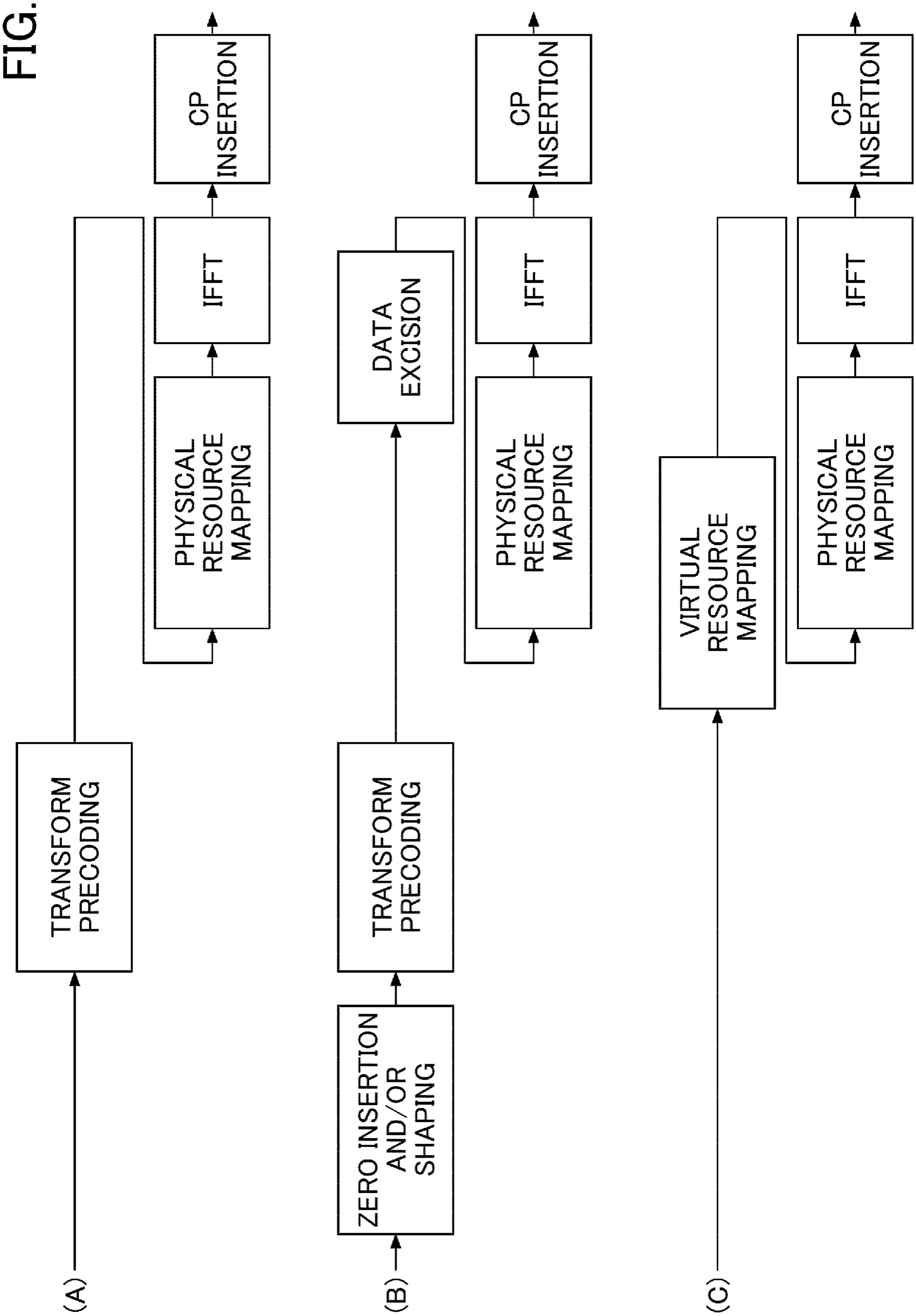
(A)
TRANSFORM PRECODING
PHYSICAL RESOURCE MAPPING
IFFT
CP INSERTION
(B)
ZERO INSERTION AND/OR SHAPING
TRANSFORM PRECODING
DATA EXCISION
PHYSICAL RESOURCE MAPPING
IFFT
CP INSERTION
(C)
VIRTUAL RESOURCE MAPPING
PHYSICAL RESOURCE MAPPING
IFFT
CP INSERTION

# FIG.52

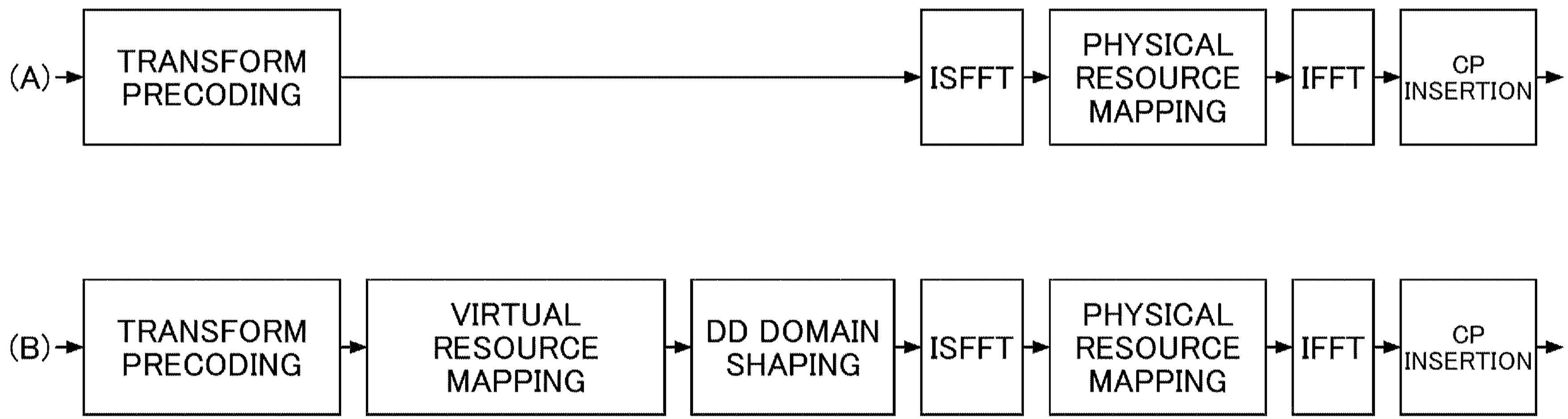
(A)
TRANSFORM PRECODING
ISFFT
PHYSICAL RESOURCE MAPPING
IFFT
CP INSERTION
(B)
TRANSFORM PRECODING
VIRTUAL RESOURCE MAPPING
DD DOMAIN SHAPING
ISFFT
PHYSICAL RESOURCE MAPPING
IFFT
CP INSERTION

FIG.53

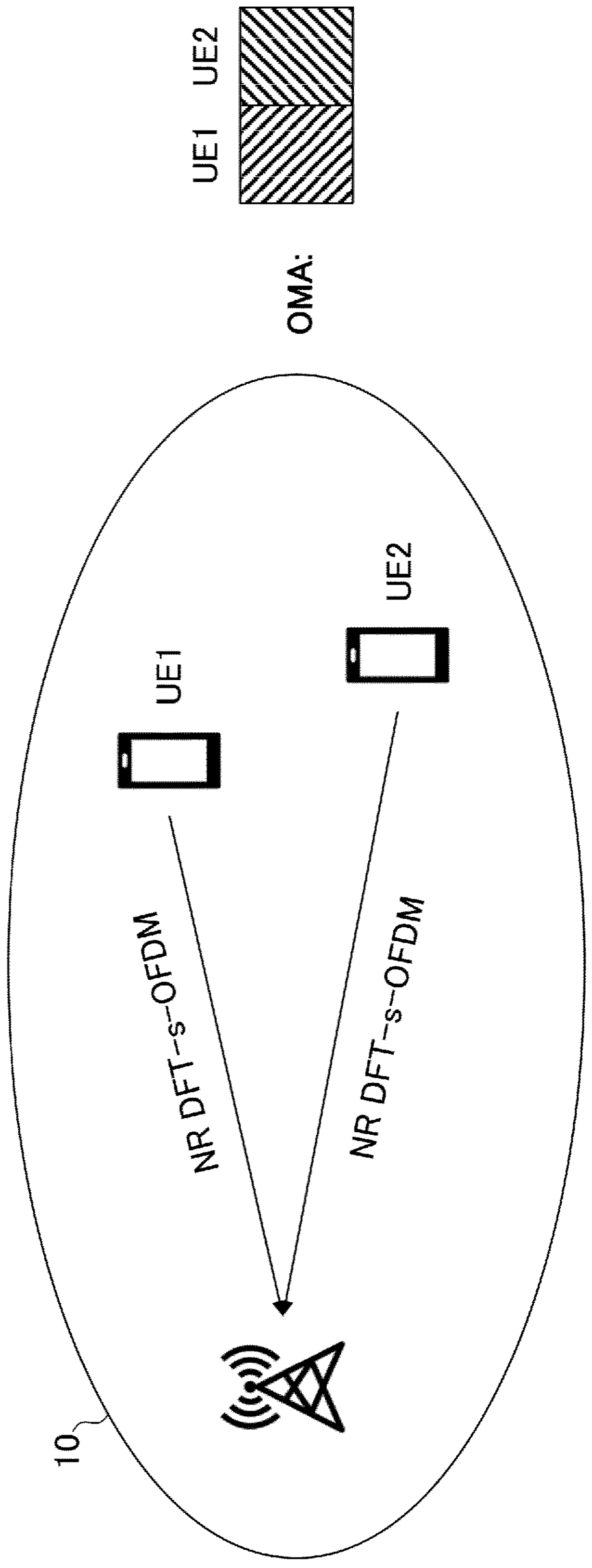

FIG.54

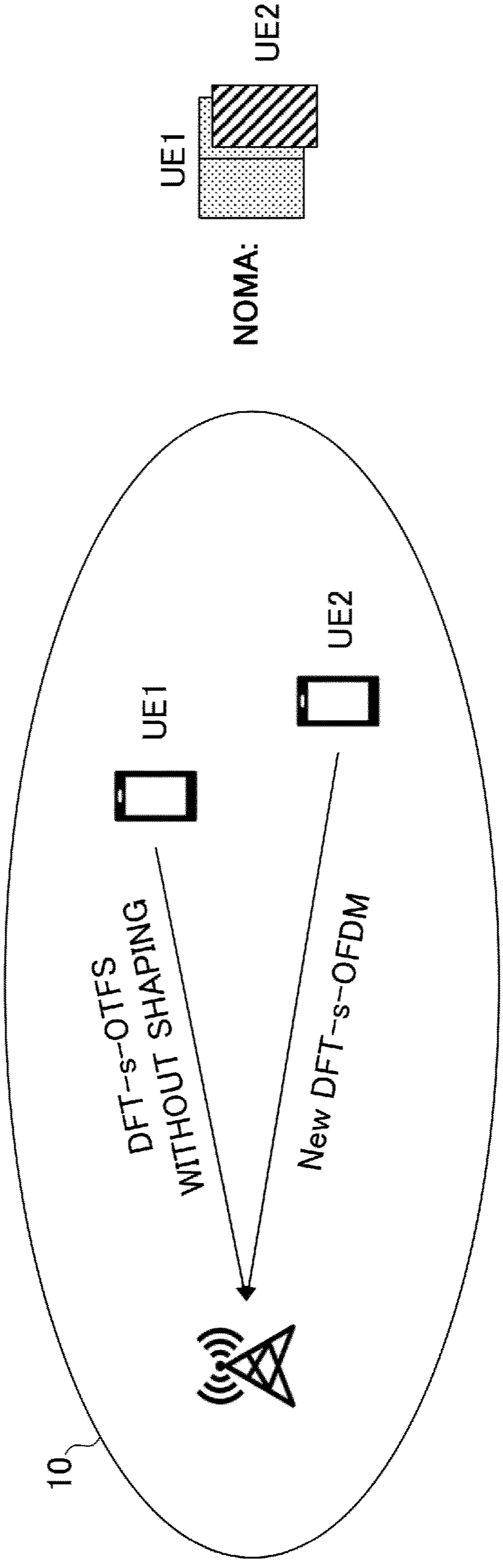


HYBRID OF OTFS AND OFDM

FIG.55

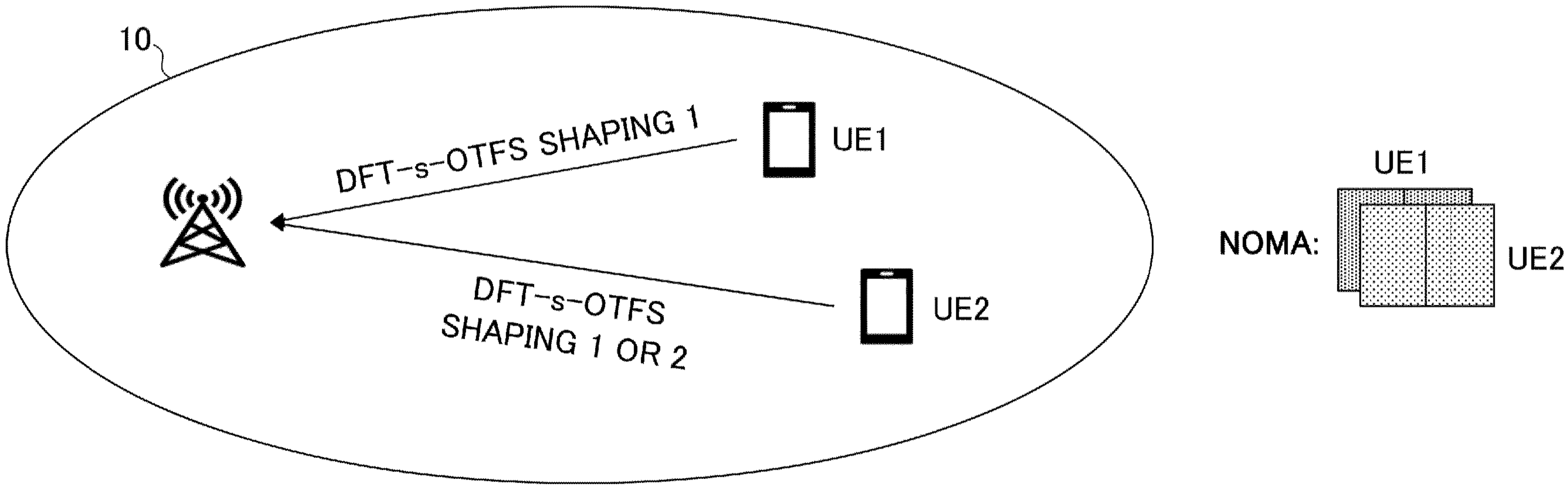


CELL/UE-SPECIFIC SHAPING SCHEME FOR OTFS

FIG.56

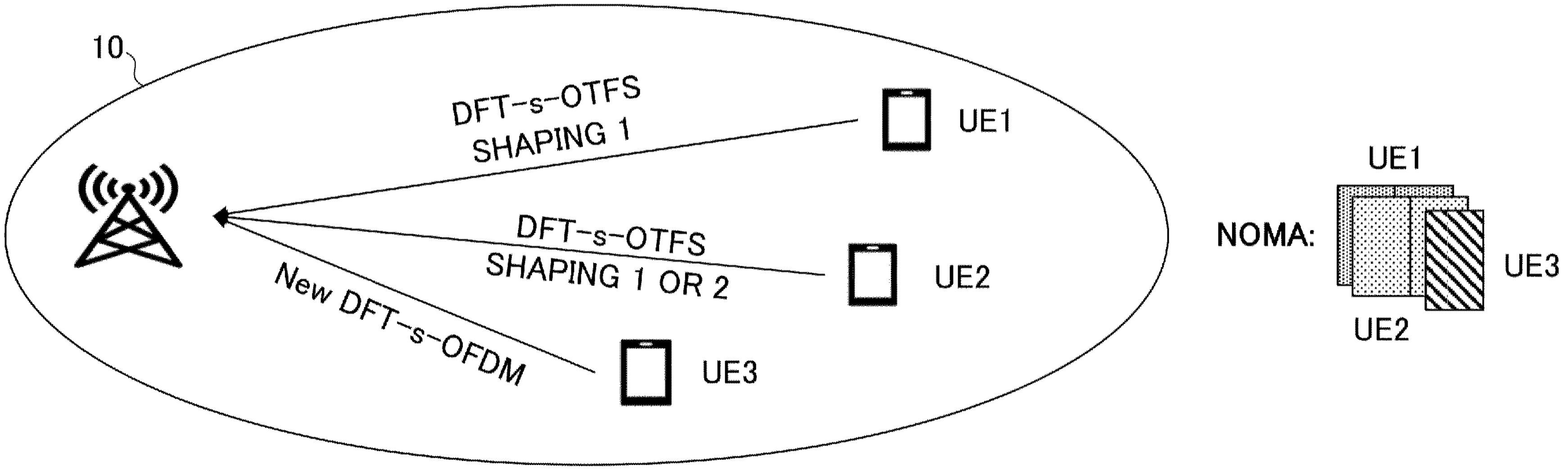


HYBRID OF OTFS AND OFDM
CELL-SPECIFIC SHAPING SCHEME FOR OTFS

FIG.57

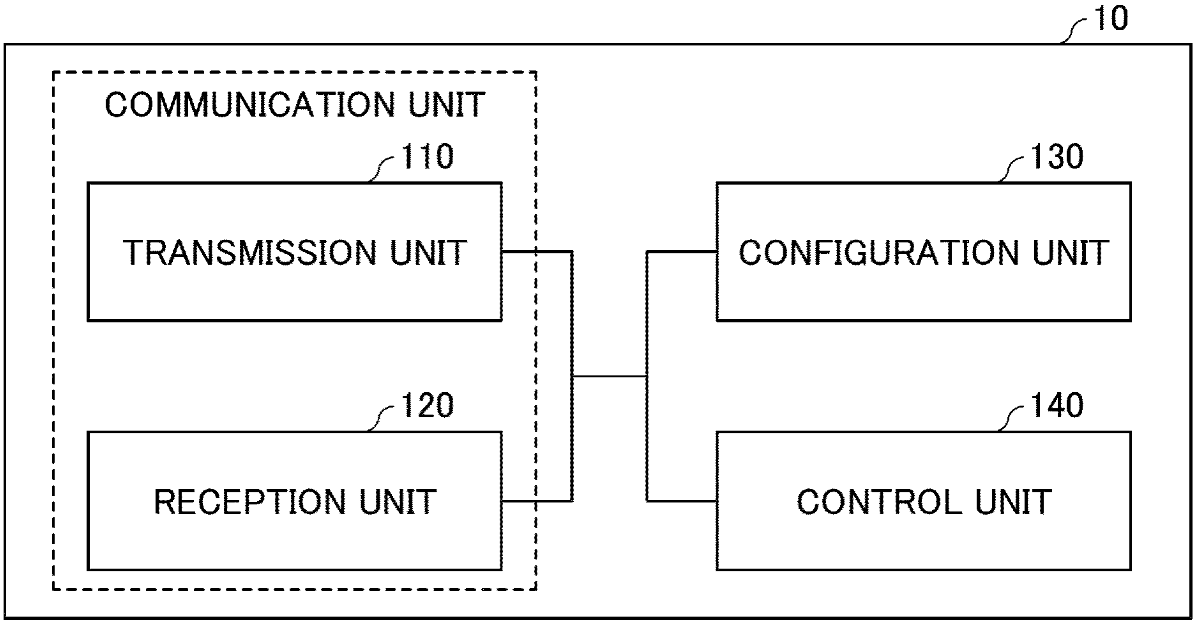
10
COMMUNICATION UNIT
110
TRANSMISSION UNIT
120
RECEPTION UNIT
130
CONFIGURATION UNIT
140
CONTROL UNIT

FIG.58

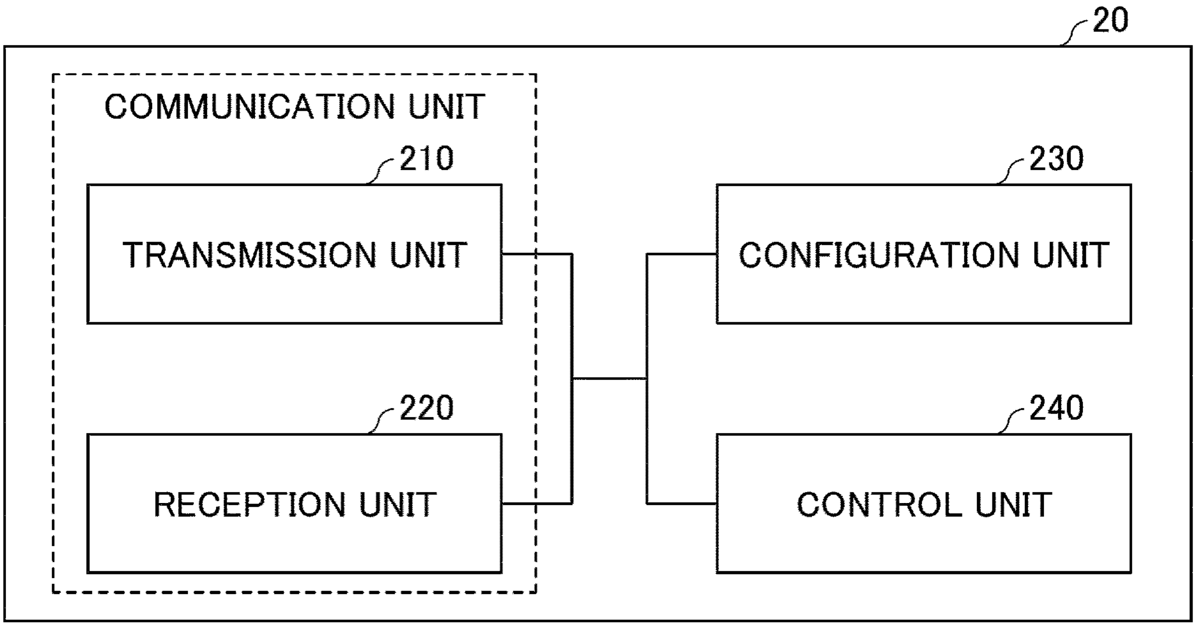
20
COMMUNICATION UNIT
210
TRANSMISSION UNIT
220
RECEPTION UNIT
230
CONFIGURATION UNIT
240
CONTROL UNIT

FIG.59

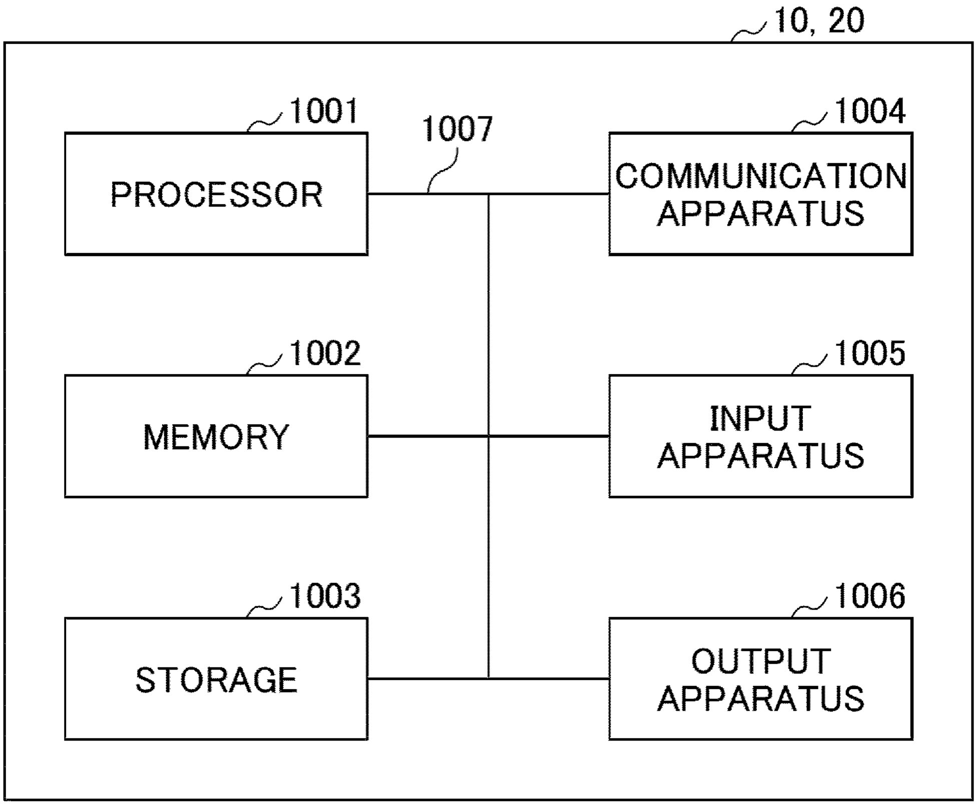
10, 20
1001
PROCESSOR
1007
1004
COMMUNICATION APPARATUS
1002
MEMORY
1005
INPUT APPARATUS
1003
STORAGE
1006
OUTPUT APPARATUS

FIG.60

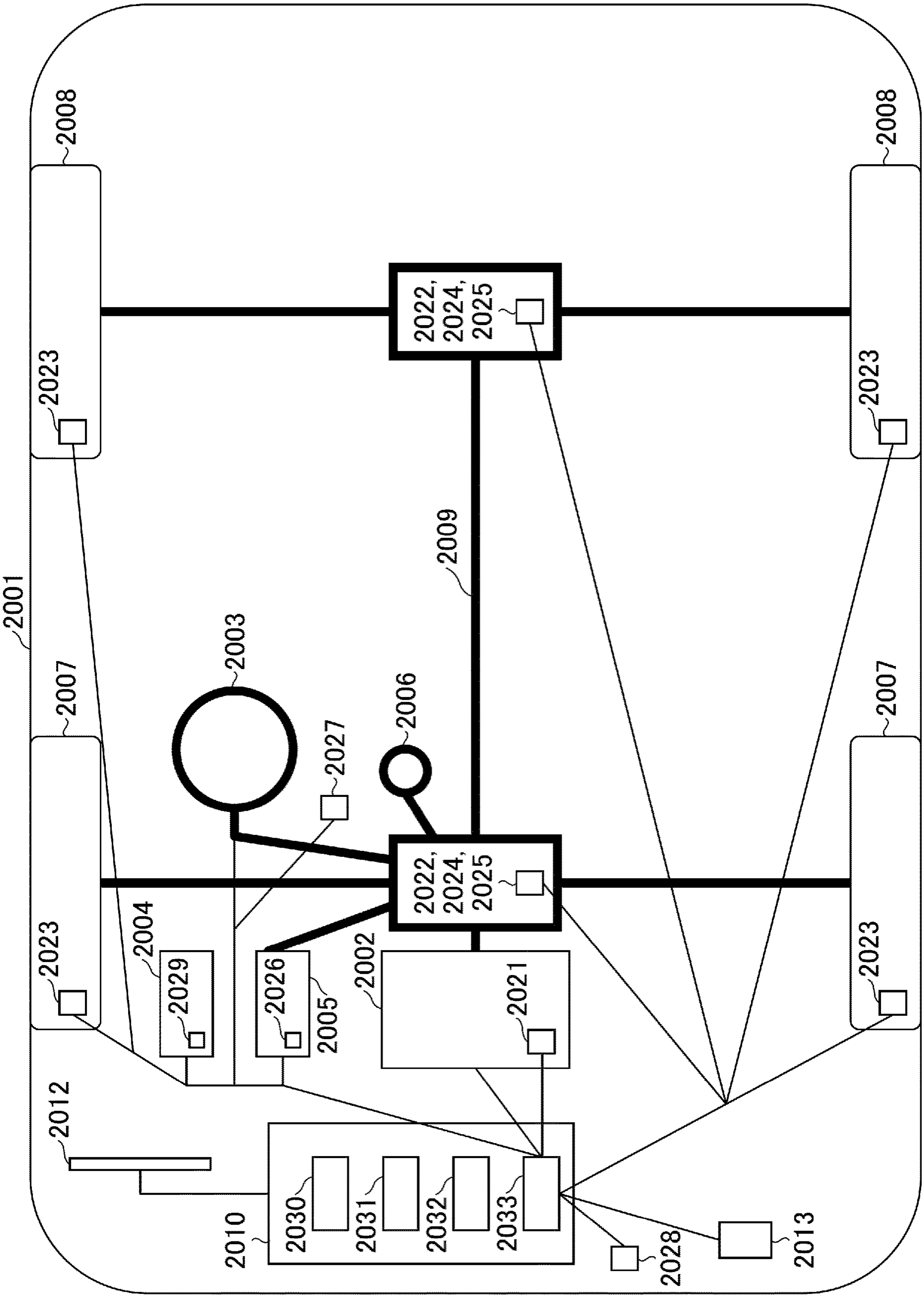
2001
2008
2008
2023
2023
2022,
2024,
2025
2009
2003
2006
2007
2007
2027
2022,
2024,
2025
2004
2029
2026
2005
2002
2021
2023
2023
2012
2010
2030
2031
2032
2033
2028
2013

## INTERNATIONAL SEARCH REPORT

International application No.
**PCT/JP2023/009460**

**A. CLASSIFICATION OF SUBJECT MATTER**

***H04J 99/00***(2009.01)i
FI: H04J99/00 100

According to International Patent Classification (IPC) or to both national classification and IPC

**B. FIELDS SEARCHED**

Minimum documentation searched (classification system followed by classification symbols)

H04J99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

**C. DOCUMENTS CONSIDERED TO BE RELEVANT**

| Category* | Citation of document, with indication, where appropriate, of the relevant passages | Relevant to claim No. |
|---|---|---|
| A | CN 114978836 A (BEIJING UNIVERSITY OF POSTS AND TELECOMMUNICATIONS) 30 August 2022 (2022-08-30) paragraphs [0065], [0086] | 1-6 |
| A | JP 2020-515115 A (PANASONIC INTELLECTUAL PROPERTY CORPORATION OF AMERICA) 21 May 2020 (2020-05-21) paragraph [0110], fig. 11 | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/009460**

| Patent document cited in search report | Publication date (day/month/year) | Patent family member(s) | Publication date (day/month/year) |
|---|---|---|---|
| CN 114978836 A | 30 August 2022 | (Family: none) | |
| JP 2020-515115 A | 21 May 2020 | US 2020/0092065 A1<br>paragraph [0130], fig. 11<br>WO 2018/170867 A1<br>EP 3603253 A1<br>CN 110431895 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *3GPP TS 38.300 V17.3.0*, December 2022
- *3GPP TR 38.821 V16.0.0*, December 2019
- **KONISHI et al.** A Study on Downlink Frequency Sharing in HAPS Mobile Communication Systems. *The Institute of Electronics, Information and Communication Engineers (IEICE) General Conference*, 2020, vol. 17-1
- **R.HADANI et al.** Orthogonal Time Frequency Space Modulation. *2017 IEEE Wireless Communications and Networking Conference (WCNC), San Francisco, CA, USA*, 2017
- **HADANI R** ; **MONK A**. *OTFS: A new generation of modulation addressing the challenges of 5G[J*, 2018
- **V. KHAMMAMMETTI** ; **S. K. MOHAMMED**. Spectral Efficiency of OTFS Based Orthogonal Multiple Access With Rectangular Pulses. *IEEE Transactions on Vehicular Technology*, 2022
- **A. CHATTERJEE** ; **V. RANGAMGARI** ; **S. TIWARI** ; **S. S. DAS**. Nonorthogonal Multiple Access With Orthogonal Time-Frequency Space Signal Transmission. *IEEE Systems Journal*, March 2021, vol. 15 (1), 383-394
- **Y. GE** ; **Q. DENG** ; **P. C. CHING** ; **Z. DING**. OTFS Signaling for Uplink NOMA of Heterogeneous Mobility Users. *IEEE Transactions on Communications*, May 2021, vol. 69 (5), 3147-3161
- **CHAOUECH H** ; **BOUALLEGUE R**. *Channel estimation and multiuser detection in asynchronous satellite communications[J*, 2010
- **Y. WU** ; **Z. ZHANG**. Co-existence Analysis of OTFS and OFDM Waveforms for Multi-mobility Scenarios. *2022 IEEE 95th Vehicular Technology Conference: (VTC2022-Spring)*, 2022, 1-5
- *3GPP TS 38.214 V17.4.0*, December 2022